# EUROPEAN PATENT APPLICATION

(11) **EP 4 682 399 A1**
(43) Date of publication of application: **21.01.2026**
(21) Application number: 25188750.1
(22) Date of filing: 10.07.2025
(51) Int. Cl.: F16F 9/06, F16F 9/512, F16F 9/48

(54) **POSITION SENSITIVE SHOCK ABSORBER**

(30) Priority: 17.07.2024 US 202463672526 P; 14.10.2024 US 202463707054 P
(71) Applicant: Specialized Bicycle Components, Inc., Morgan Hill, CA 95037 (US)
(72) Inventor: Ferro, Chance Austen, Auburn (US); McAndrews, Michael Lawrence, Aptos (US); Steele, Kyler, Sacramento (US)
(74) Representative: Forresters IP LLP

(57) **Abstract**

A shock absorber includes a main shock body and a shock reservoir coupled to the main shock body. The shock reservoir includes a reservoir body defining a reservoir longitudinal axis, and an internal floating piston separating the reservoir body into a first fluid chamber and a second fluid chamber, the internal floating piston being movable along the reservoir longitudinal axis. The shock reservoir further includes a cap assembly in fluid communication with both the main shock body and the first fluid chamber. The cap assembly includes a plunger receiver with a shoulder extending inwardly toward the reservoir longitudinal axis, the shoulder having a first region defining a first profile. The cap assembly further includes a plunger having a tapered outer surface having a second region defining a second profile. The first region with its first profile is configured to contact the second region with its second profile, and the first profile is not complimentary to the second profile, the plunger being movable relative to the plunger receiver to adjust a damping force of the shock reservoir depending on a position of the plunger relative to the plunger receiver.

## Description

### BACKGROUND

This application claims priority to U.S. Provisional Patent Application No. 63/672,526, filed July 17, 2024, and to U.S. Provisional Patent Application No. 63/707,054, filed October 14, 2024.

### BACKGROUND

The present disclosure relates generally to shock absorbers, and more specifically to shock absorbers for bicycles.

Bicycles intended for traversing difficult terrain (e.g., gravel bicycles, mountain bicycles) commonly include suspension assemblies positioned between the frame of the bicycle and the front and/or rear wheels of the bicycle. Suspension assemblies typically include a shock absorber configured to absorb force imparted to the bicycle by bumps or other irregularities of the terrain.

Bicycle shock absorbers may be compliant enough to absorb high amounts of impact force on harsh, uneven terrain. However, in many cycling applications and events, the same bicycle (e.g., mountain bicycle) may be ridden on flat surfaces such as a paved road. When used on flat surfaces, the bicycle shock absorber may be undesirably compliant and lack stiffness to comfortably support the rider and efficiently transfer pedaling energy to drive the bicycle.

Some shock absorbers provide rider-adjustable damping characteristics to allow the user to select a desired level of damping to favor pedaling efficiency or ride comfort depending on the terrain being ridden. For example, an adjustable shock absorber may be set to a firm (i.e., stiff) compression damping setting while a rider is on a steep hill climb or on a flat road terrain to increase the amount of pedaling energy reaching the driven wheel and reduce the amount of pedaling energy (and/or impact energy between the bicycle and the terrain) dissipated by the suspension. Conversely, an adjustable shock absorber may be set to a relatively soft (i.e., compliant) compression damping setting where a rider is traveling fast downhill on rocky terrain.

### BRIEF DESCRIPTION OF THE DRAWINGS

Fig. 1 is a side view of a bicycle according to one example, including a shock absorber.
Fig. 2 is a side view of the shock absorber of Fig. 1 having a main shock body and a shock reservoir.
Fig. 3 is an end view of the shock absorber of Fig. 1.
Fig. 4 is a cross-sectional view of the shock absorber of Fig. 1, taken along section line 4-4 in Fig. 3, with the shock absorber in a top out position.
Fig. 5 is an exploded view of internal components of the shock reservoir of Fig. 1.
Fig. 6 is another exploded view of internal components of the shock reservoir of Fig. 1.
Fig. 7 is a side view of a plunger of the shock absorber of Fig. 1.
Fig. 8 is a cross-sectional view of the plunger of Fig. 7.
Fig. 9A is an enlarged cross-sectional view of the shock reservoir of the shock absorber of Fig. 1, depicted by the dashed line 9-9 in Fig. 4, in the top out position.
Fig. 9B is a schematic, inbound flow diagram of the shock reservoir of Fig. 9A.
Fig. 9C is a schematic, outbound flow diagram of the shock reservoir of Fig. 9A.
Fig. 10 is a cross-sectional view of the shock absorber of Fig. 1, taken along section line 10-10 in Fig. 9A.
Fig. 11A is a cross-sectional view of the shock absorber of Fig. 1, with the shock absorber in a mid-stroke position.
Fig. 11B is a schematic, inbound flow diagram of the shock reservoir of Fig. 11A.
Fig. 11C is a schematic, outbound flow diagram of the shock reservoir of Fig. 11A.
Fig. 12A is a cross-sectional view of the shock absorber of Fig. 1, with the shock absorber in a bottom out position.
Fig. 12B is a schematic, inbound flow diagram of the shock reservoir of Fig. 12A.
Fig. 12C is a schematic, outbound flow diagram of the shock reservoir of Fig. 12A.
Fig. 13 is a damping force and compression stroke dynamometer plot comparing a damping force of the shock absorber of Fig. 1 with a known shock absorber.
Fig. 14 is a side view of a plunger according to another example, for use with a shock absorber.
Fig. 15 is a cross-sectional view of the plunger of Fig. 14.
Fig. 16 is a cross-sectional view of a shock reservoir including the plunger of Fig. 14 in a top out position.
Fig. 17 is a cross-sectional view of the shock absorber of Fig. 16 in a sag position.
Fig. 18 is a cross-sectional view of the shock absorber of Fig. 16 in a mid-stroke position.
Fig. 19 is a cross-sectional view of the shock absorber of Fig. 16 in a bottom out position.
Fig. 20 is a damping force and compression stroke dynamometer plot comparing a damping force provided by the shock absorber of Fig. 1 with the shock absorber of Fig. 16.
Fig. 21A is a cross-sectional view of a reservoir for a shock absorber according to another example, including a movable valve head in a fully closed position.
Fig. 21B is a schematic, inbound flow diagram of the reservoir of Fig. 21A.
Fig. 21C is a schematic, outbound flow diagram of the reservoir of Fig. 21A.
Fig. 22A is a cross-sectional view of the reservoir of Fig. 21A, with the movable valve head in a fully open position.
Fig. 22B is a schematic, inbound flow diagram of the reservoir of Fig. 22A.
Fig. 22C is a schematic, outbound flow diagram of the reservoir of Fig. 22A.
Fig. 23A is a cross-sectional view of the reservoir of Fig. 21A, with the movable valve head in a partially open position.
Fig. 23B is a schematic, inbound flow diagram of the reservoir of Fig. 23A.
Fig. 23C is a schematic, outbound flow diagram of the reservoir of Fig. 23A.
Fig. 24 is a damping force and compression stroke dynamometer plot comparing a damping force provided by the shock absorber and reservoir of Fig. 21A with the movable valve head in each of a fully open, fully closed, and partially opened position.
Fig. 25 is an exploded view of internal components of the reservoir of Fig. 21A.
Fig. 26 is a cross-sectional view of a shuttle of the reservoir of Fig. 21A.
Fig. 27 is a side view of another shock absorber having a main shock body, a shock reservoir, and an alternate valve head assembly.
Fig. 28 is an end view of the shock absorber of Fig. 27.
Fig. 29 is a cross-sectional view of the shock absorber of Fig. 27, taken along section line 29-29 in Fig. 28, with the shock absorber in a mid-stroke position.
Fig. 30 is an exploded view of the alternate valve head assembly of Fig. 27.
Fig. 31 is another exploded view of the alternate valve head assembly of Fig. 27.
Fig. 32 is a first end view of a cap of the alternate valve head assembly of Fig. 27.
Fig. 33 is a second end view of the cap of Fig. 32.
Fig. 34 is a first end view of a coarse adjuster of the alternate valve head assembly of Fig. 27.
Fig. 35 is a second end view of the coarse adjuster of the alternate valve head assembly of Fig. 27.
Fig. 36 is an end view of the alternate valve head assembly of Fig. 27 with a coarse adjuster central opening aligned with a cap central opening.
Fig. 37 is an end view of the alternate valve head assembly of Fig. 27 with the coarse adjuster central opening partially aligned with the cap central opening.
Fig. 38 is an end view of the alternate valve head assembly of Fig. 27 with the coarse adjuster central opening blocked by the cap central opening.
Fig. 39 is a cross-sectional view of the alternate valve head assembly of Fig. 27 with the coarse adjuster central opening aligned with the cap central opening.
Fig. 40 is a damping force and compression stroke dynamometer plot comparing damping forces provided by the shock absorber of Fig. 27 in its various operating positions.
Fig. 41 is a side view of another embodiment of a shock absorber having a main shock body, a shock reservoir, and a fluid reservoir.
Fig. 42 is an end view of the shock absorber of Fig. 41.
Fig. 43 is a cross-sectional view of the shock absorber of Fig. 41, taken along section line 43-43 in Fig. 42
Fig. 44 is an exploded view of internal components of the fluid reservoir of Fig. 41.
Fig. 45 is another exploded view of the internal fluid components of the fluid reservoir of Fig. 41.
Fig. 46A is a cross-sectional view of the fluid reservoir of Fig. 41, depicted by dashed line 46-46 in Fig. 43 with a valve element seated in contact with a valve body.
FIG. 46B is a cross-sectional view of the fluid reservoir of Fig. 41, taken along section line 46-46 in Fig. 43 with the valve element unseated from and separated from the valve body.
Fig. 47 is a perspective view of an exemplary fluid reservoir check valve body.
Fig. 48 is a perspective view of a first exemplary fluid reservoir valve element.
Fig. 49 is a perspective view of a second exemplary fluid reservoir valve element.
Fig. 50 is a schematic, expansion flow and contraction flow diagram of the shock absorber of Fig. 41.
Fig. 51 is a damping force and compression stroke dynamometer plot comparing damping force of the shock absorber of Fig. 1 with the damping force of the shock absorber of Fig. 41 at different temperatures.
Fig. 52 is a damping force and compression stroke dynamometer plot comparing damping force of the shock absorber of Fig. 1 at different temperatures.
Fig. 53 is a damping force and compression stroke dynamometer plot comparing damping force of the shock absorber of Fig. 41 at different temperatures.
Fig. 54 is a perspective view of another embodiment of a shock absorber having a main shock body, a shock reservoir, and a fluid reservoir.
Fig. 55 is an end view of the shock absorber of Fig. 54.
Fig. 56 is a cross-sectional view of the shock absorber of Fig. 54, taken along section line 56-56 in Fig. 55.
Fig. 57 is a schematic, expansion flow and contraction flow diagram of the shock absorber of Fig. 54.
Fig. 58 is a side view of another embodiment of a shock absorber having a main shock body, a shock reservoir, and a fluid reservoir.
Fig. 59 is an end view of the shock absorber of Fig. 58.

### DETAILED DESCRIPTION

Before any examples are explained in detail, it is to be understood that the disclosure is not limited in its application to the details of construction and the arrangement of components set forth in the following description or illustrated in the following drawings. The disclosure is capable of other examples and of being practiced or of being carried out in various ways.

In one example, the present disclosure provides a shock absorber having a main shock body and a shock reservoir coupled to the main shock body. The shock reservoir includes a reservoir body, an internal floating piston separating the reservoir body into a first fluid chamber and a second fluid chamber, and a cap assembly in fluid communication with both the main shock body and the first fluid chamber. The cap assembly includes a plunger receiver and a plunger having a tapered outer surface. The plunger is movable relative to the plunger receiver to adjust a damping force of the shock reservoir depending on a position of the plunger relative to the plunger receiver.

In another example, the present disclosure provides a shock absorber having a main shock body, a shock reservoir coupled to the main shock body, and a cap assembly in fluid communication with both the main shock body and the shock reservoir. The cap assembly includes a plunger receiver and a plunger having an outer surface, and the plunger is movable relative to the plunger receiver to adjust a damping force depending on a position of the plunger relative to the plunger receiver. The outer surface of the plunger is dimensioned to increase (e.g., linearly) the damping force along a majority of a compression stroke of the main shock body.

In another example, the present disclosure provides a shock absorber having a main shock body and a shock reservoir coupled to the main shock body. The shock reservoir includes a reservoir body, an internal floating piston separating the reservoir body into a first fluid chamber and a second fluid chamber, and a cap assembly. The cap assembly is in fluid communication with body the main shock body and the first fluid chamber. The cap assembly includes a plunger receiver and a plunger movable relative to the plunger receiver. The plunger is configured to contact the internal floating piston during a first portion of a compression stroke of the main shock body and to physically separate from the internal floating piston during a second portion of the compression stroke.

In another example, the present disclosure provides a shock absorber having a main shock body, and a shock reservoir coupled to the main shock body. The shock reservoir includes a cap assembly in fluid communication with both the main shock body and the shock reservoir. The cap assembly includes a plunger receiver, a plunger, and a spring. The plunger has a tapered outer surface, and the plunger is movable relative to the plunger receiver along a longitudinal axis to adjust a damping force of the shock absorber depending on a position of the plunger relative to the plunger receiver. The spring is configured to bias the plunger along the longitudinal axis.

In another example, the present disclosure provides a shock absorber having a main shock body and a shock reservoir coupled to the main shock body. The main shock body includes a main casing, a main rod movable relative to the main casing, and a main shock passageway. The shock reservoir includes a reservoir body, an internal floating piston separating the reservoir body into a first fluid chamber and a second fluid chamber, a cap assembly, and a valve head. The cap assembly has a cap defining a first cap passageway between the main shock passageway and the first fluid chamber. The valve head is movable between a first position and a second position relative to the cap. In the first position, a first effective flow area is present between the main shock passageway and the first fluid chamber. In the second position, a second effective flow area is present between the main shock passageway and the first fluid chamber, the second effective flow area being different than the first effective flow area.

In another example, the present disclosure provides a shock absorber having a main shock body and a shock reservoir coupled to the main shock body. The shock reservoir includes a reservoir body, an internal floating piston separating the reservoir body into a first fluid chamber and a second fluid chamber, and a cap assembly. The cap assembly is in fluid communication with both the main shock body and the first fluid chamber. The cap assembly includes a cap defining a plurality of fluid passageways therethrough, a coarse adjuster, and a fine adjuster. The coarse adjuster is movable between at least two positions whereby different amounts of effective flow area are present between the first fluid chamber and the main shock body. The fine adjuster is movable independent of the coarse adjuster between at least two positions whereby different amounts of effective flow area are present between the first fluid chamber and the main shock body.

In another example, the present disclosure provides a shock absorber having a main shock body, a shock reservoir, and a fluid reservoir. The shock reservoir is coupled to the main body and includes a first reservoir body and a first internal floating piston separating the first reservoir body into a first fluid chamber and a second fluid chamber, the first fluid chamber in fluid communication with the main shock body. The fluid reservoir includes a second reservoir body and a second internal floating piston separating the second reservoir body into a third fluid chamber and a fourth fluid chamber. The third fluid chamber and at least one of the main shock body and the first fluid chamber are configured to pass fluid between one another.

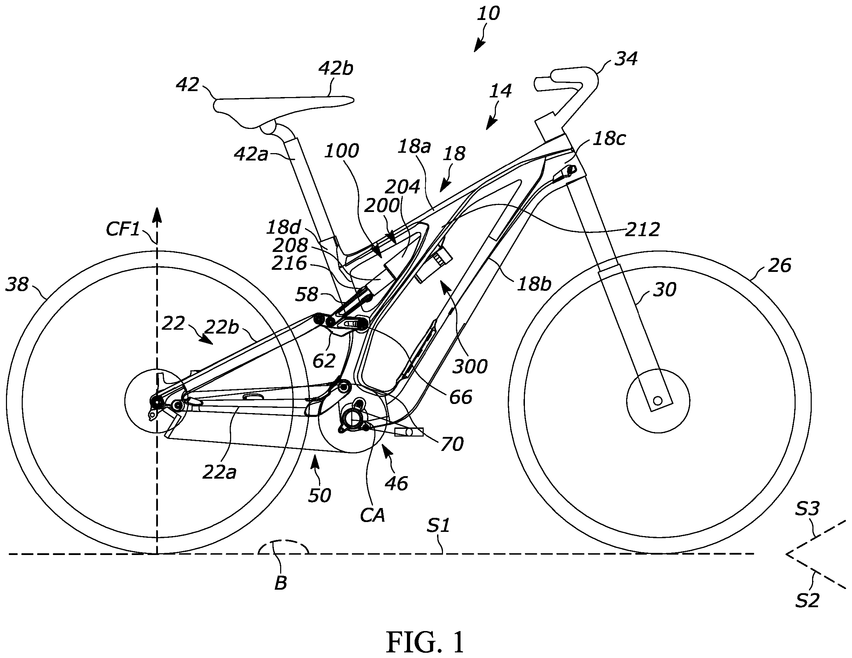

FIG. 1 illustrates a bicycle 10 having a frame 14. The frame 14 may include a main frame 18 and a rear frame 22. The rear frame 22 may be pivotally coupled to the main frame 18. The main frame 18 may include, for example, a top tube 18a, a down tube 18b, a head tube 18c, and/or a seat tube 18d. The rear frame 22 may include, for example, a chainstay 22a and/or a seatstay 22b. Other frames 14 may include other numbers and arrangements of tubes, chainstays, seatstays, and/or other frame components than that illustrated.

With continued reference to FIG. 1, the bicycle 10 may include a front wheel 26 and a fork 30 coupled to the front wheel 26. The fork 30 may be coupled to the main frame 18 (e.g., to the head tube 18c). A handlebar 34 may also be coupled to the main frame 18. The bicycle 10 may include a rear wheel 38 coupled to the rear frame 22. The frame 14 overall may be supported by both the front wheel 26 and the rear wheel 38.

With continued reference to FIG. 1, the bicycle 10 may include a shock absorber 100. The shock absorber 100 may be coupled, for example, to both the main frame 18 and the rear frame 22. The bicycle 10 may sit on or ride along a surface S1, with both the front wheel 26 and the rear wheel 38 contacting the surface S1. The shock absorber 100 may resist pivoting of the rear frame 22 relative to the main frame 18 while the bicycle is sitting on or riding along the surface S1. In some examples, the shock absorber 100 may resist a compressive force CF1 of the rear frame 22 in a direction extending perpendicularly from the surface S1. The compressive force CF1 may counteract reactive forces of the rear wheel 38, for example, when the rear wheel 38 contacts or is removed from contact with a bump B along the surface S1.

The bicycle 10 may be configured as a mountain bicycle for riding on steep terrain with or without jumps. The bicycle 10 may be ridden along a flat surface S1, a descending surface S2, and/or an ascending surface S3. Any of the surfaces S1-S3 may include bumps B. The bicycle may also be ridden off of jumps or drops (i.e., platforms). When contacting the surface S1-S3 after a bump B or in a jump or drop landing, the weight of the bicycle 10 and the rider may cause the rear frame 22 to compress the shock absorber 100. The shock absorber 100 may also compress due to input force from the rider.

An amount of compression stroke, expressed as a percentage between uncompressed (0%) and compressed (100%) of the shock absorber 100 may reflect how much the shock absorber 100 is compressed at any point in time. Amounts and duration of applied compressive force CF1 may differ in different riding situations. For example, when riding flat surfaces S1 with few and small bumps B, compressive force CF1 may only compress the shock absorber 100 a small amount of the compression stroke (e.g., generally less than 50% of the compression stroke). In contrast, when landing large jumps or drops or when descending at high speed over large bumps B, large quantities of compressive force CF1 may compress the shock absorber 100 a large amount (e.g., generally greater than 50% of the compression stroke).

With continued reference to FIG. 1, the bicycle 10 may include a seat assembly 42 configured to support a rider (not shown) while the bicycle 10 is moving along the surface S1, and while the shock absorber 100 is in use. The seat assembly 42 may be coupled to the main frame 18 and may include for example a seat post 42a coupled to the seat tube 18d of the main frame 18 and a seat 42b coupled to the seat post 42a.

With continued reference to FIG. 1, the bicycle 10 may include a crank assembly 46 configured to receive input power from the rider, and a drive assembly 50 coupled to the crank assembly 46 and the rear wheel 38 for transmitting input power from the rider to drive the rear wheel 38 on the surface S1. In some examples, the bicycle 10 may be an electronic bicycle where the drive assembly 50 is configured to receive input power from an onboard power source (e.g., an onboard battery, motor), or from both the rider and the onboard power source. The drive assembly 50 may be configured to drive one or both of the front wheel 26 and the rear wheel 38, and may be used in combination with the shock absorber 100 while the bicycle is moving along the surface S1.

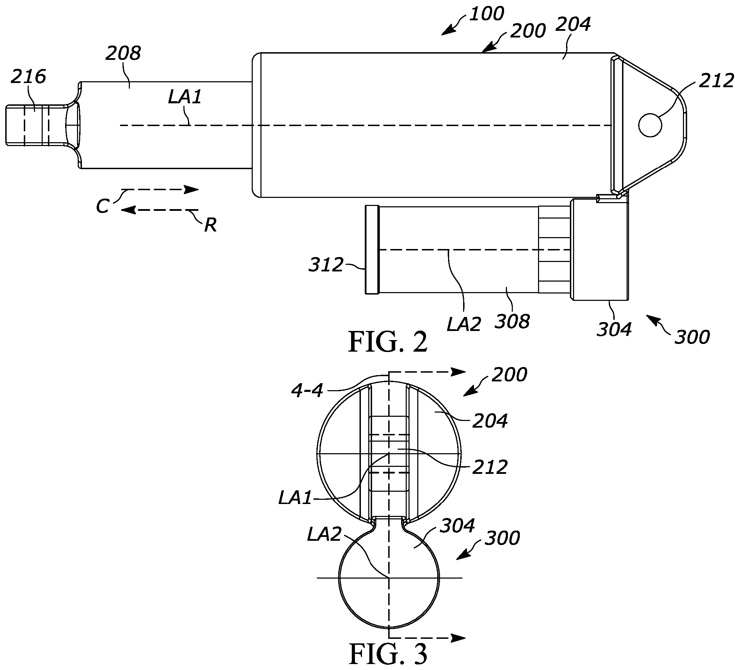

With reference to FIGS. 1 and 2, the shock absorber 100 overall may include a main shock body 200 and a shock reservoir 300 coupled to the main shock body 200. The main shock body 200 may include a main casing 204 and a main rod 208 movable relative to the main casing 204.

In some examples, the main casing 204 may include an eye 212, and the main rod 208 may include an eye 216. In other examples, the main casing 204 may not include the eye 212 and/or the eye 216. The eye 212 of the main casing 204 (or another portion of the main casing 204) may be coupled (e.g., pivotally coupled) to the top tube 18a of the main frame 18, or to a different component (e.g., tube) of the main frame 18. The eye 216 of the main rod 208 (or another portion of the main rod 208) may be coupled (e.g., pivotally coupled) to a first linkage 58 (FIG. 1). The first linkage 58 may be coupled (e.g., pivotally coupled) to a second linkage 62. The second linkage 62 may be coupled (e.g., pivotally coupled) to the rear frame 22. In some examples, the rear frame 22 may be coupled (e.g., pivotally coupled) to the main frame 18 at a first pivot joint 66 between the second linkage 62 and the main frame 18 and a second pivot joint 70 between the rear frame 22 and the main frame 18. The second pivot joint 70 may be separate from the first pivot joint 66. In some examples, the first pivot joint 66 may be positioned on the seat tube 18d and the second pivot joint 70 may be positioned on the seat tube 18d between the first pivot joint 66 and the crank assembly 46.

The above-described arrangement may permit the shock absorber 100 to rotate relative to the main frame 18 about the eye 212 and about an axis that is parallel to a crank axis CA extending through the crank assembly 46 (the crank axis CA extending into and out of the page as viewed in FIG. 1). In the illustrated example, the first linkage 58 and the second linkage 62 surround portions of the main frame 18. In other examples, the shock absorber 100 may be otherwise coupled to the main frame 18 and the rear frame 22. For example, the arrangement of the shock absorber 100 may be reversed, with the eye 212 of the main casing 204 coupled to the first linkage 58 and the eye 216 of the main rod 208 coupled to the main frame 18. Additionally, other examples may include other numbers and arrangements of linkages than that illustrated, with some examples having no linkages (e.g., where the shock absorber 100 is coupled directly to both the main frame 18 and to the rear frame 22). In yet other examples, the shock absorber 100 may be coupled (e.g., pivotally coupled) to one or more other components of the frame 14, or to a different frame than the illustrated frame 14. Accordingly, the shock absorber 100 may be used with any of a number of different frames 14.

FIGS. 2-12C illustrate examples of the components of the shock absorber 100 in various positions during riding conditions of the bicycle 10. FIG. 2, for example, illustrates the main shock body 200, the main casing 204, the main rod 208, the eyes 212, 216, and the shock reservoir 300. As illustrated in Fig. 2, the main casing 204 is oriented along a main casing longitudinal axis LA1. The main rod 208 is movable along the main casing longitudinal axis LA1 in a compression direction C and an opposite rebound (e.g., return) direction R. In the illustrated example, the eyes 212, 216 are oriented in different directions relative to one another. The eye 212 extends in a direction perpendicular to the main casing longitudinal axis LA1 in a first direction (e.g., vertically up and down in FIG. 2), and the eye 216 extends in a direction which is perpendicular to both the main casing longitudinal axis LA1 and the direction of the eye 212 (e.g., into and out of the page in FIG. 2). However, in other examples, the eyes 212, 216 may be oriented in the same or other different directions.

With continued reference to FIGS. 2 and 3, the shock reservoir 300 may include a cap assembly 304 in fluid communication with the main shock body 200. The shock reservoir 300 may also include a reservoir body 308 and/or a base 312. In some examples, the cap assembly 304 and/or the base 312 are removably coupled to the reservoir body 308. The reservoir body 308 may be oriented along a reservoir longitudinal axis LA2. In the illustrated example, the reservoir longitudinal axis LA2 is parallel to the main casing longitudinal axis LA1, with the cap assembly 304 coupled to the main casing 204 and the reservoir body 308 extending in a direction along the rebound direction R away from the cap assembly 304 toward the base 312. In other examples, the shock reservoir 300 may be oriented differently relative to the main shock body 200.

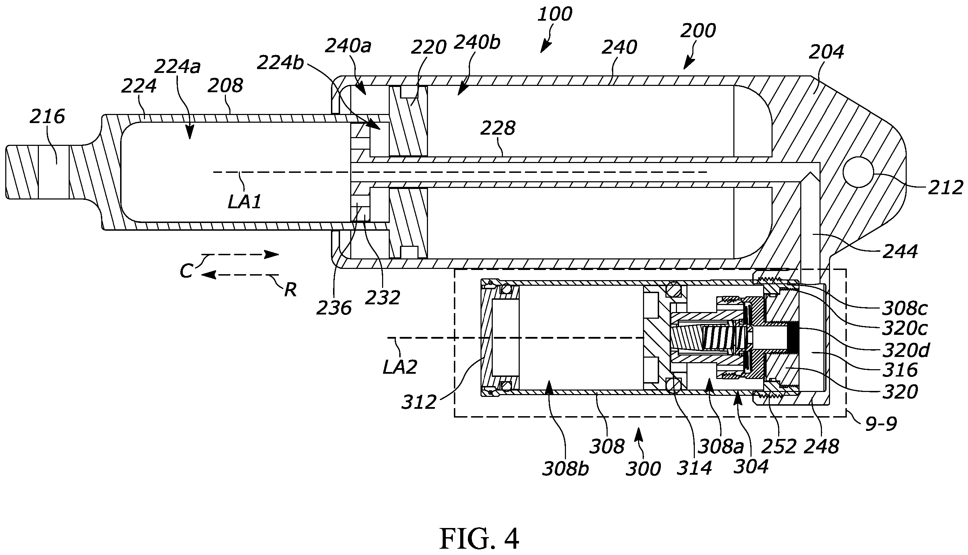

FIG. 4 illustrates an example of the internal components of the shock absorber 100. In the illustrated example, the main rod 208 may include a piston 220 (e.g., defining one end of the main rod 208). The main rod 208 may define an inner chamber 224. The main casing 204 may also define an inner chamber 240 and may include a tube 228 positioned centrally in the inner chamber 240. The tube 228 may terminate at a piston 232 positioned within the inner chamber 224, and the piston 232 may include passageways 236.

The inner chamber 224 of the main rod 208 may be separated by the piston 232 into a first portion 224a and a second portion 224b. The inner chamber 240 of the main casing 204 may be separated by the piston 220 into a first portion 240a and a second portion 240b. As such, the tube 228 may be in fluid communication with the first portion 224a of the inner chamber 224. The opposite end of the tube 228 may be fluidly coupled to a main shock passageway 244 that is in fluid communication with the shock reservoir 300. In the illustrated example, the main shock passageway 244 is a bore in the main casing 204. However, in other examples, other fluid connections (e.g., tubes, flexible tubes, etc.) may fluidly couple the main shock body 200 to the shock reservoir 300 (e.g., with the shock reservoir 300 being remote of the main shock body 200).

Fluids (e.g., damping fluid, compressible fluid, gas, air) may be positioned within both of the inner chambers 224, 240. While various fluids (e.g., gases, liquids) may be used in the inner chambers 224, 240, in some examples the inner chamber 240 may be filled with a gas (e.g., air, nitrogen, etc.), and the inner chamber 224 may be filled by oil or other damping fluid or liquid for being passed into the shock reservoir 300.

In the illustrated example, the main rod 208 is translatable along the longitudinal axis LA1 relative to the main casing 204. Upon compression of the main rod 208 along the compression direction C into the main casing 204, fluid within the first portion 224a of the inner chamber 224 may be forced through the main shock passageway 244 into the shock reservoir 300 via the tube 228. Fluid within the first portion 224a may also pass into the second portion 224b through the passageways 236. Fluid within the second portion 240b of the inner chamber 240 may be compressed by the piston 220, and the fluid within the first portion 240a of the inner chamber 240 may expand or be filled with atmospheric air.

Conversely, upon return of the main rod 208 along the rebound direction R from the main casing 204, fluid may pass from the shock reservoir 300 to the first portion 224a of the inner chamber 224 through the main shock passageway 244 and the tube 228. Fluid within the second portion 224b of the inner chamber 224 may pass into the first portion 224a through the passageways 236. Fluid within the first portion 240a of the inner chamber 240 may be compressed by the piston 220, and the fluid within the second portion 240b may expand.

With continued reference to FIG. 4, in some examples, the main shock body 200 may include a connector portion 248 including threads 252 (e.g., internal threads) for releasably coupling the shock reservoir 300 to the main shock body 200. In other examples, the shock reservoir 300 may be coupled (e.g., releasably coupled) to the main shock body 200 with other fasteners, components, or forms of connection.

The illustrated main shock body 200 is just one example of a main shock body 200 for use with the shock absorber 100. Accordingly, other examples of the main shock body 200 may include other numbers and arrangements of components than that illustrated, including other numbers and arrangements of inner chambers, pistons, rods, and/or passageways. Overall, the main shock body 200 may provide at least one passageway for movement of fluid to and from the shock reservoir 300.

FIGS. 4-9A illustrate examples of the internal components of the shock reservoir 300. For example, the shock reservoir 300 may include an internal floating piston 314 that separates the reservoir body 308 into a first fluid chamber 308a (located between the internal floating piston 314 and the connector portion 248) and a second fluid chamber 308b (located between the internal floating piston 314 and the base 312). Fluids include gas and liquids. Fluids may be compressible. In some examples, the first fluid chamber 308a may hold or receive liquid damping fluid such as damping oil. In some examples, the second fluid chamber 308b may hold or receive gas such as air or nitrogen. The cap assembly 304 may control fluid communication between the reservoir body 308 and the main shock body 200 (e.g., via the main shock passageway 244 and the tube 228). In some examples, the cap assembly 304 may control fluid communication between the main shock body 200 and the shock reservoir 300 via a main shock chamber 316 positioned between the shock reservoir 300 and the main shock passageway 244 of the main shock body 200. The main shock chamber 316 may be in fluid communication with both the main shock passageway 244 and the first fluid chamber 308a. In some examples, the main shock chamber 316 may be located in the connector portion 248 of the main shock body 200.

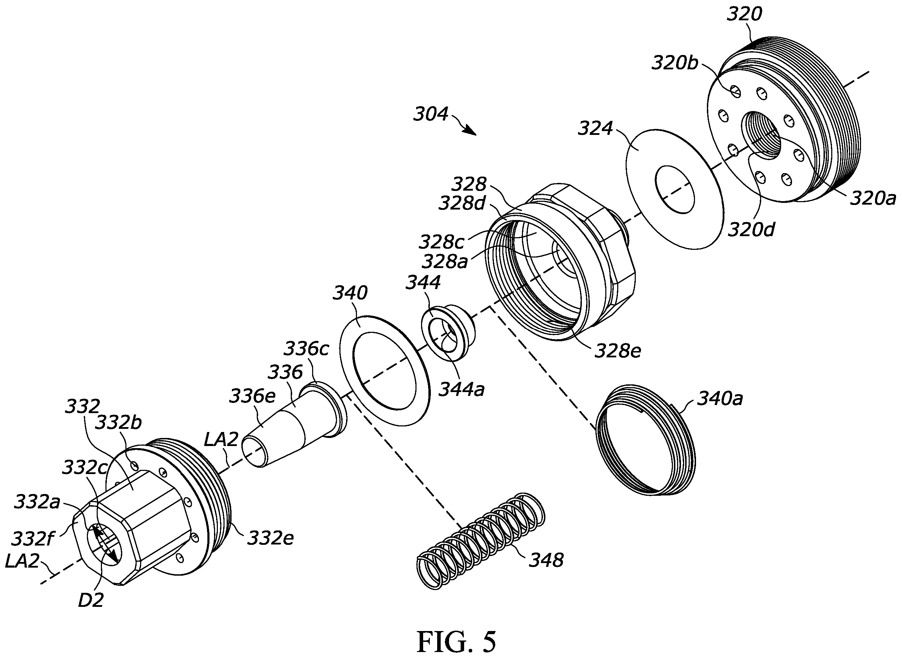

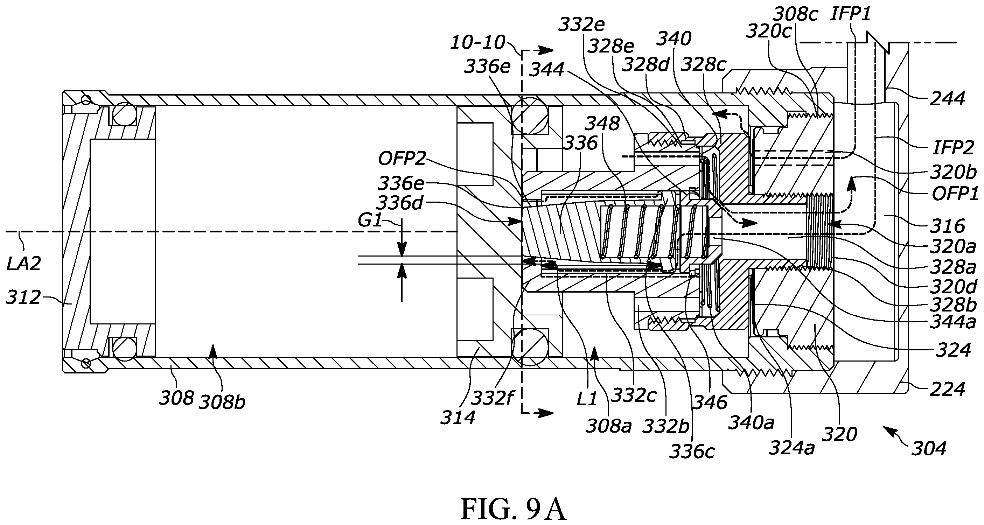

With reference to FIGS. 5-6 and 9A, the cap assembly 304 may include a cap 320, a cap shim 324, a fitting 328, a plunger receiver 332, a plunger 336, a plunger receiver shim 340, a spring retainer 344, and/or a plunger spring 348 (FIG. 9A). Other examples may include different numbers and arrangements of components than that illustrated. In some examples, the plunger receiver 332 and/or the fitting 328 may be integrally formed as part of the connector portion 248, or integrally formed as part of the reservoir body 308, or integrally formed as part of the cap 320.

As will be described in further detail below, the plunger 336 may be movable (e.g., relative to the plunger receiver 332 and/or to other components within the shock reservoir 300) to adjust a damping force of the shock reservoir 300. The plunger 336 may therefore function overall as a position sensitive plunger 336.

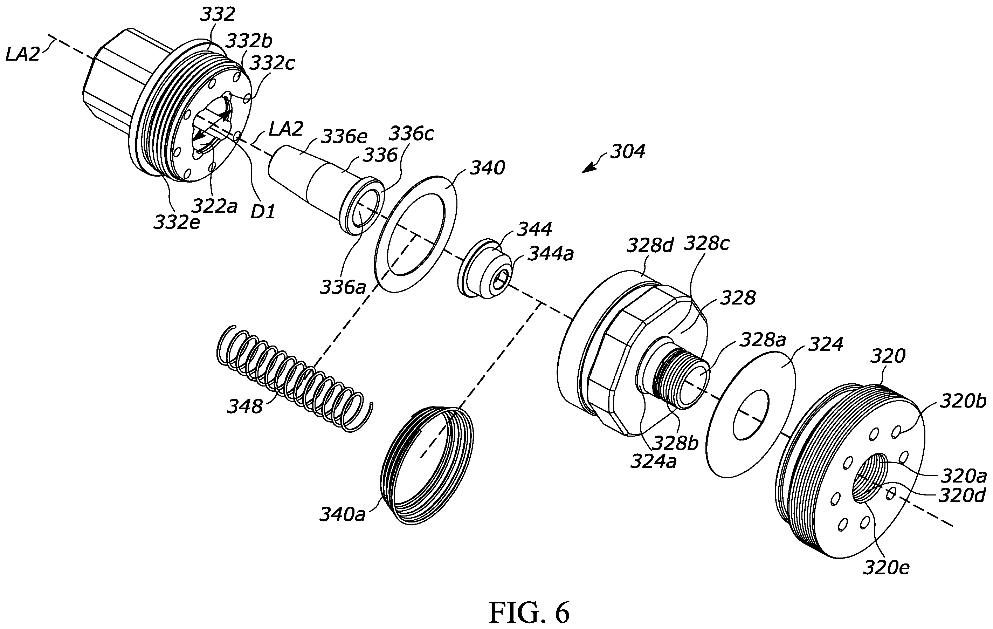

With reference to FIGS. 5 and 6, in some examples the cap 320 may define a central aperture 320a (i.e., a first cap passageway) and a plurality of additional apertures 320b (i.e., a plurality of second cap passageways). The central aperture 320a may extend through the cap 320 and may be positioned in alignment with the reservoir longitudinal axis LA2, defining a main shock passageway through the cap 320.

The additional apertures 320b may extend through the cap 320 and may be positioned outboard of the central aperture 320a at locations radially spaced from and circumferentially spaced about the reservoir longitudinal axis LA2. As illustrated in FIGS. 5 and 6, the apertures 320b may be evenly circumferentially spaced about the reservoir longitudinal axis LA2, although other examples may include other spacing and arrangement of apertures 320b. A collective area defined by the plurality of apertures 320b may contribute to an effective flow area between the main shock chamber 316 and the first fluid chamber 308a.

With reference to FIGS. 4-6 and 9A, in some examples the cap 320 may include external threads 320c (FIG. 9A) for securing the cap 320 to internal threads 308c of the reservoir body 308. The central aperture 320a may also include internal threads 320d.

With reference to FIGS. 5-6 and 9A, the fitting 328 may include a stem 328a having external threads 328b that couple to the internal threads 320d of the central aperture 320a. The stem 328a may be hollow. The fitting 328 may further include a shoulder 328c coupled to and extending radially outwardly from an axial end of the stem 328a, and an outer ring 328d that extends axially from a radially outboard end of the shoulder 328c. The outer ring 328d may be radially spaced from sidewalls of the reservoir body 308 to permit fluid flow therebetween. The outer ring 328d may include internal threads 328e.

With reference to FIGS. 6 and 9A, in some examples the cap shim 324 may be retained against the cap 320 by a cap shim retainer 324a. The cap shim retainer 324a may hold a portion of the cap shim 324 against the cap 320 and permit a portion of the cap shim 324 to move relative to the cap 320. The cap shim retainer 324a may take up axial space between the fitting 328 and the cap 320 upon threading the fitting 328 onto the cap 320 to retain a radially inner portion of the cap shim 324 in contact with the cap 320.

The cap shim 324 may be positioned downstream of the apertures 320b. The cap shim 324 may be movable between a closed position seated against the cap 320 and covering the apertures 320b, and an open position at least partially disposed away from the cap 320 and at least partially uncovering the apertures 320b, depending on a difference in fluid pressure between the first fluid chamber 308a and the main shock chamber 316. For example, when the fluid pressure in the main shock chamber 316 is greater than the fluid pressure in the first fluid chamber 308a, a portion of the cap shim 324 may deflect and/or otherwise move away from the cap 320 (to the left in FIG. 9A), thereby allowing fluid to pass through one or more of the apertures 320b in the cap 320 and into the first fluid chamber 308a. In contrast, when the fluid pressure in the first fluid chamber 308a is greater than the fluid pressure in the main shock chamber 316, the cap shim 324 may cover the apertures 320b in the cap 320, thereby inhibiting fluid to pass through one or more of the apertures 320b in the cap 320. Other examples may not include a cap shim 324, or may include other structures to control fluid flow.

With reference to FIGS. 5 and 6, in some examples the plunger receiver 332 may include a central aperture 332a. The plunger receiver 332 may include a plurality of return flow apertures 332b extending through the plunger receiver 332 and positioned radially outboard of the central aperture 332a at locations radially spaced from and circumferentially spaced about the reservoir longitudinal axis LA2.

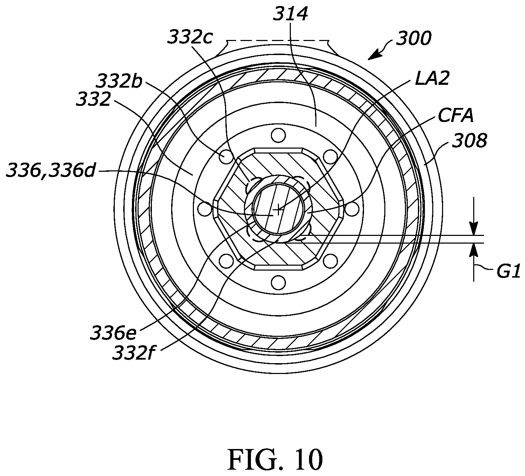

The plunger receiver 332 may include cutouts 332c (see also FIG. 10) that may be positioned (e.g., circumferentially) around the central aperture 332a and in some examples may extend axially into the plunger receiver 332 a similar axial length (along reservoir longitudinal axis LA2) in comparison to the central aperture 332a. Additionally, the cutouts 332c may extend farther radially into (e.g., perpendicular to reservoir longitudinal axis LA2) the plunger receiver 332 (e.g., extending an amount further into the plunger receiver 332 away from the reservoir longitudinal axis LA2 in comparison with the central aperture 332a) than the central aperture 332a. The central aperture 332a may have a circular cross-sectional shape. The cutouts 332c may have arcuate cross-sectional shapes. Other examples may include different shapes for the central aperture 332a and the cutouts 332c. Some examples may not include the cutouts 332c.

With reference to FIGS. 5-6 and 9A, the plunger receiver 332 may include external threads 332e that couple to the internal threads 328e of the fitting 328. At an axial end thereof, the plunger receiver 332 may further include a shoulder 332f extending radially inwardly toward the reservoir longitudinal axis LA2. The central aperture 332a may define an inlet inner dimension D1 (e.g., diameter as seen in FIG. 6) of the plunger receiver 332, and the shoulder 332f may define an outlet inner dimension D2 (e.g., diameter as seen in FIG. 5) of the plunger receiver 332. The cutouts 332c may effectively expand the central aperture 332a beyond the inlet inner dimension D1. In some examples, the outlet inner dimension D2 may be less than the inlet inner dimension D1.

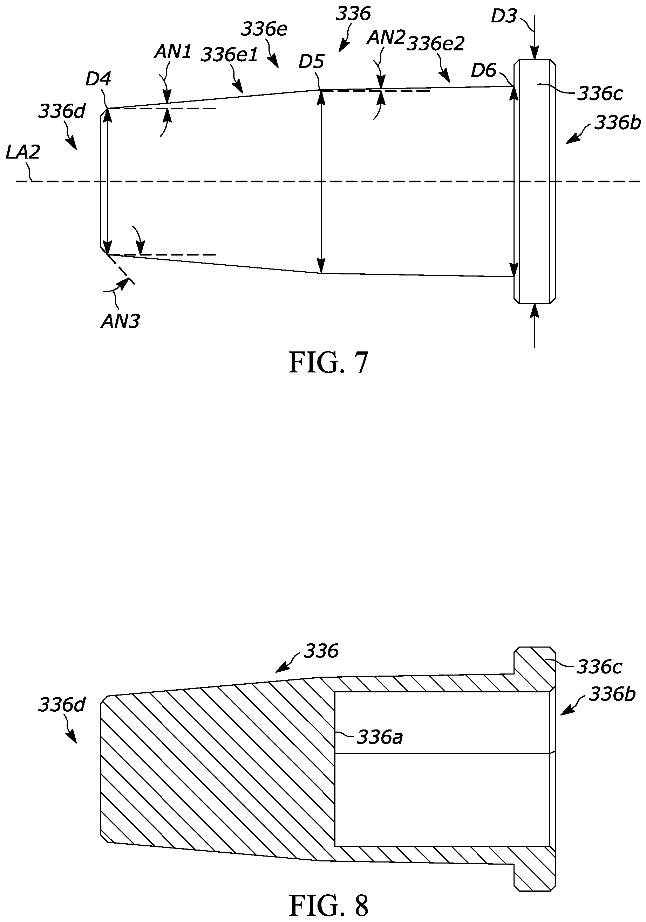

With reference to FIGS. 7 and 8, the plunger 336 may include a spring bore 336a, a base end 336b with a shoulder 336c, a tip end 336d, and an outer surface 336e. The spring bore 336a may be recessed into the base end 336b to receive the plunger spring 348 therein (FIG. 9A). The shoulder 336c may define an outer dimension D3 (e.g., diameter as seen in FIG. 7) that is larger than the outlet inner dimension D2 defined by the shoulder 332f of the plunger receiver 332, and slightly smaller than the inlet inner dimension D1 defined by the central aperture 332a of the plunger receiver 332, such that the plunger 336 may be slidably received in the plunger receiver 332 and selectively abut the plunger receiver 332 in a seated position against the shoulder 332f.

The outer surface 336e of the plunger 336 may be tapered. For example, the outer surface 336e may be tapered from the tip end 336d to the base end 336b along the reservoir longitudinal axis LA2.

With reference to FIG. 7, the outer surface 336e may include a frustoconical first tapered outer surface 336e1 adjacent the tip end 336d and a frustoconical second tapered outer surface 336e2 adjacent the base end 336b. The first tapered outer surface 336e1 and the second tapered outer surface 336e2 may each be dimensioned with a profile (i.e., a first profile, a second profile) that differs from the other profile. In the illustrated example, the first tapered outer surface 336e1 extends in a radially outwardly extending direction away from the reservoir longitudinal axis LA2 moving from the tip end 336d toward the base end 336b.

The profile of the first tapered outer surface 336e1 (i.e., the first profile) may be a first linear profile that is angled at an angle AN1 from between 1 degree and 10 degrees relative to the reservoir longitudinal axis LA2. In some examples, the angle AN1 may be between 2 degrees and 6 degrees relative to the reservoir longitudinal axis LA2.

The first tapered outer surface 336e1 may extend from 25% to 75% an axial length of the plunger 336 along the reservoir longitudinal axis LA2. In some examples, the first tapered outer surface 336e1 may extend from 50% to 60% an axial length of the plunger 336 along the reservoir longitudinal axis LA2.

The first tapered outer surface 336e1 may define a first outer dimension (e.g., outer diameter) D4 closest to the tip end 336d and a second outer dimension (e.g., outer diameter) D5 between the tip end 336d and the base end 336b. The second tapered outer surface 336e2 may share the second dimension D5 with the first tapered outer surface 336e1, and further include a third dimension (e.g., outer diameter) D6 adjacent the shoulder 336c. The outer dimension D6 may be smaller than the outer dimension D3.

Other examples may include different values and ranges of values for the angle AN1, and/or the length of the first tapered outer surface 336e1.

With continued reference to FIGS. 7 and 8, the profile of the second tapered outer surface 336e2 (i.e., the second profile) may be a second linear profile that is angled at an angle AN2 from between 0.1 degrees and 4 degrees relative to the reservoir longitudinal axis LA2. In some examples, the angle AN2 may be between 0.5 degrees and 2 degrees relative to the longitudinal axis LA2. The second tapered outer surface 336e2 (i.e., the second profile) may extend from between 25% to 75% of an axial length of the plunger 336 along the reservoir longitudinal axis LA2. In some examples, the second tapered outer surface 336e2 may extend between 40% to 50% of an axial length of the plunger 336. In the illustrated example, the second tapered outer surface 336e2 extends in a radially outwardly extending direction away from the reservoir longitudinal axis LA2 moving from the tip end 336d toward the base end 336b.

Other examples may include different values and ranges of values for the angle AN2, and/or the length of the second tapered outer surface 336e2.

With continued reference to FIGS. 7 and 8, in some examples the tip end 336d may include a chamfer that defines an angle AN3. The angle AN3 of the chamfer may be between 30 degrees and 60 degrees. In some examples ,the angle AN3 of the chamfer may be 45 degrees. In some examples, the angle AN3 may differ from the angle AN1 and/or the angle AN2 of the first and second tapered outer surfaces 336e1, 336e2. As discussed in further detail below, other profiles for the outer surfaces 336e1, 336e2 of the plunger 336 (such as a taper in the opposite direction, a non-linear taper, or the like) are also possible to fine tune desired damping characteristics of the shock reservoir 300.

With reference to FIGS. 5, 6, and 9A, the plunger receiver shim 340 may be biased by a shim spring 340a (FIG. 9A) to a closed position against the plunger receiver 332. The shim spring 340a may be sandwiched between the plunger receiver shim 340 and the shoulder 328c of the fitting 328. The shim spring 340a may hold the plunger receiver shim 340 in a closed position against the return flow apertures 332b of the plunger receiver 332 to inhibit the flow of fluid through the return flow apertures 332b in the compression direction (right to left in Fig. 9A).

The plunger receiver shim 340 may be moved (e.g., deflected and/or otherwise moved) to an open position by rebound fluid flow (i.e., fluid flow that is flowing from the first fluid chamber 308a toward the main shock chamber 316) moving through the return flow apertures 332b. For example, when the fluid pressure is greater in the first fluid chamber 308a than fluid pressure in the main shock chamber 316, the plunger receiver shim 340 may deflect and/or otherwise move away from the return flow apertures 332b against the biasing force of the shim spring 340a, thereby allowing fluid to pass through one or more of the return flow apertures 332b in the plunger receiver 332 into the central aperture 332a of the fitting 328, the central aperture 320a of the cap 320 and the main shock chamber 316.

With reference to FIGS. 5, 6, and 9A, the spring retainer 344 may be received in the outer ring 328d of the fitting 328 and may be aligned with the stem 328a thereof on the reservoir longitudinal axis LA2. The spring retainer 344 may be retained within the plunger receiver 332. For example, the spring retainer 344 may be inhibited from removal from the plunger receiver 332 by a snap ring 346. Alternatively, the spring retainer 344 may be capable of being removed from the plunger receiver 332. In such examples, the spring retainer 344 may be capable of contacting the fitting 328.

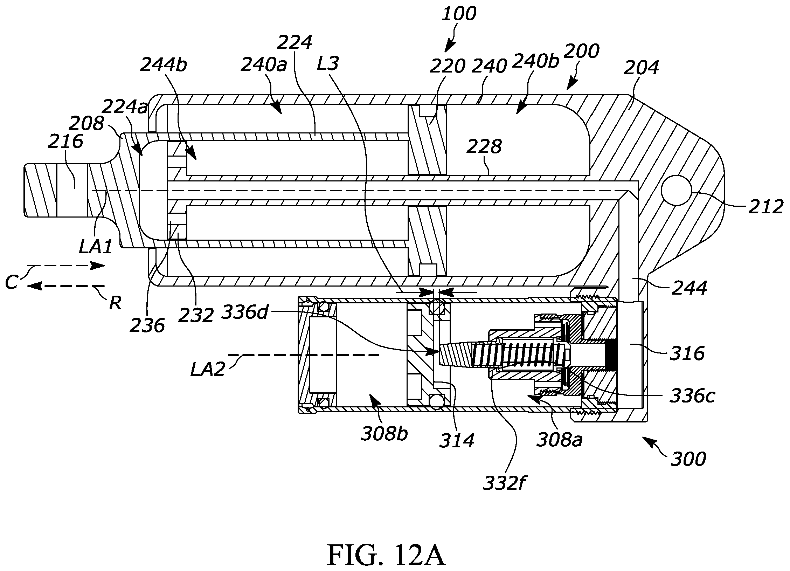

The spring retainer 344 may include a central aperture 344a. The plunger spring 348 may be positioned between the spring retainer 344 and the spring bore 336a of the plunger 336. The plunger spring 348 may bias the plunger 336 away from the spring retainer 344 (e.g., to the left along reservoir longitudinal axis LA2 as viewed in FIG. 9A). The plunger spring 348 may bias the plunger 336 toward a seated position in which the shoulder 336c of the plunger 336 is seated against the shoulder 332f the plunger receiver 332 under certain conditions (e.g., as seen in FIG. 12A).

With reference to FIGS. 4 and 9A, the tip end 336d of the plunger 336 may engage (i.e., contact, touch) the internal floating piston 314 during at least a portion of a compression stroke of the shock absorber 100. FIGS. 4 and 9A illustrate the shock absorber in a top out position where the tip end 336d of the plunger 336 engages the internal floating piston 314 and, as such, the internal floating piston 314 pushes and holds the plunger 336 to the right in Fig. 9A. During a first portion of the compression stroke of the main shock body 200 (e.g., while the main rod 208 is pushed into the main casing 204), the tip end 336d of the plunger 336 may engage the internal floating piston 314, and a gap G1 may form between the outer surface 336e of the plunger 336 and the shoulder 332f of the plunger receiver 332.

The gap G1 may be a radial gap measured perpendicularly from the reservoir longitudinal axis LA2. In some examples, the shoulder 332f may be generally circular in cross-sectional shape, and the plunger 336 may be at least partially generally frustoconical in cross-sectional shape. As such, the gap G1 may represent an annularly shaped cross-sectional area (i.e., annularly shaped cross-sectional flow area CFA, as seen FIG. 10) between the outer surface 336e and the shoulder 332f, where the gap G1 represents a difference between an inner radius (represented by the outer surface 336e) and an outer radius (represented by the shoulder 332f) of the annular cross-sectional area. The size of the gap G1 and the resultant annularly shaped cross-sectional area may contribute, in addition to the collective area of the apertures 320b, to an effective flow area of the cap assembly 304.

With continued reference to FIG. 9A, in the top out position, an initial axial gap L1 may be formed between the shoulder 332f of the plunger receiver 332 and the shoulder 336c of the plunger 336. As explained further below, this axial gap L1 may be shortened during the compression stroke.

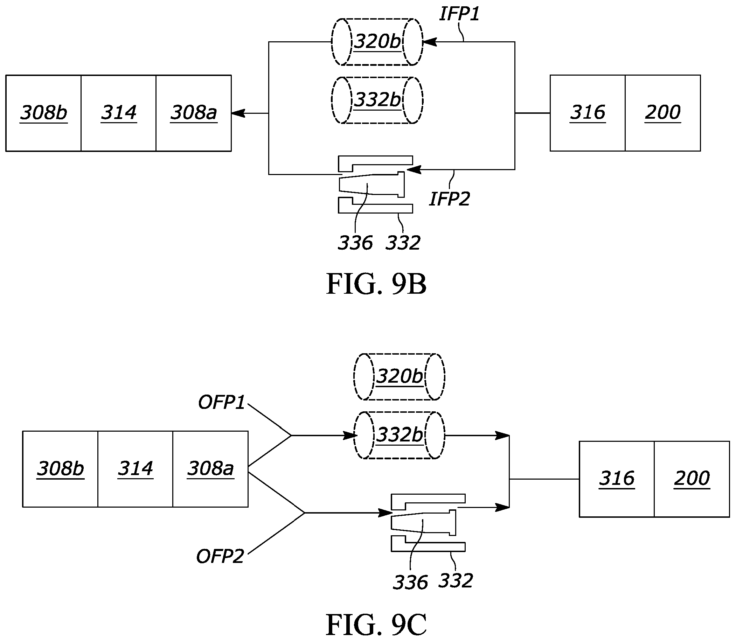

With reference to FIGS. 9A and 9B, during the first portion of the compression stroke, both a first inbound flow path IFP1 and a second inbound flow path IFP2 are capable of passing damping fluid from the main shock body 200 to the first fluid chamber 308a of the shock reservoir 300. The first inbound flow path IFP1 and the second inbound flow path IFP2 may be generally parallel fluid flow paths.

Fluid traveling along the first inbound flow path IFP1 may pass through the apertures 320b in the cap 320, push the cap shim 324 to its open position, and enter the first fluid chamber 308a. Fluid traveling along the second inbound flow path IFP2 may pass through the central aperture 320a of the cap 320, the hollow stem 328a of the fitting 328, and through the cutouts 332c into the central aperture 332a of the plunger receiver 332 before entering the first fluid chamber 308a through the gap G1 between the outer surface 336e of the plunger 336 and the shoulder 332f of the plunger receiver 332. As illustrated in FIG. 9A, when the fluid passes through the gap G1, the fluid may press directly against the internal floating piston 314, thereby pushing the internal floating piston 314 toward the base 312 (to the left in FIG. 9A).

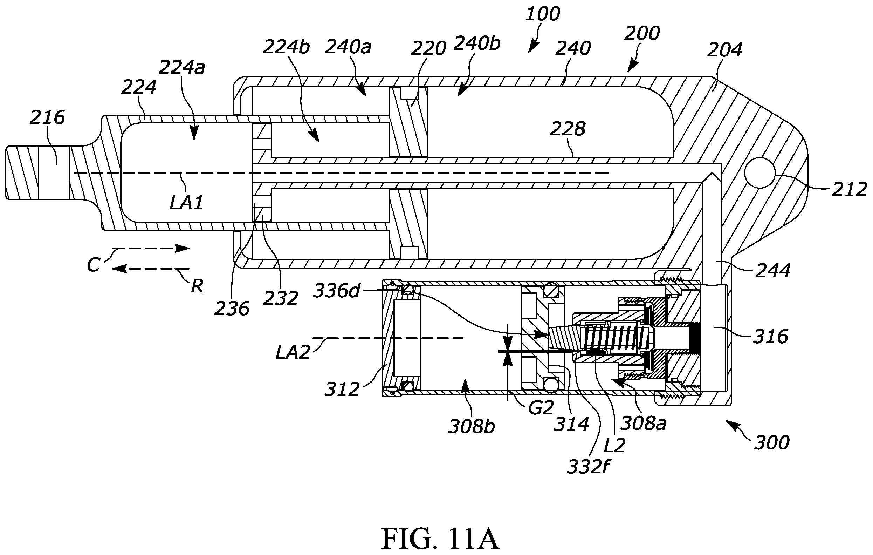

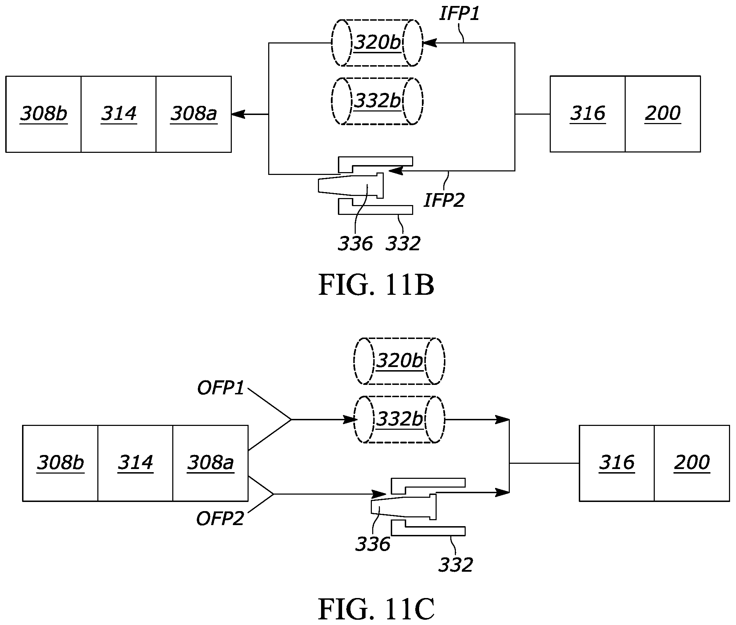

With reference to FIGS. 11A and 11B, as the compression stroke continues to a mid-stroke position, fluid from the main shock body 200 may pass into the first fluid chamber 308a, and the internal floating piston 314 may further advance toward the base 312. As the compression stroke continues, the shoulder 336c of the plunger 336 may advance toward the shoulder 332f of the plunger receiver 332. An axial gap L2 may form in the mid-stroke position between the shoulders 332f, 336c, the axial gap L2 being smaller than the axial gap L1 of the top-out position (FIG. 9A).

With continued reference to FIGS. 11A and 11B, due to the outer surface 336e of the plunger 336 being tapered, a gap G2 (i.e., radial gap) between the outer surface 336e and the shoulder 332f in the mid-stroke position may be smaller than the gap G1 between the outer surface 336e and the shoulder 332f in the top-out position. As such, the annularly-shaped cross-sectional flow area provided between the plunger 336 and the plunger receiver 332 may be reduced in the mid-stroke position in comparison with the top-out position.

In the mid-stroke position, both the aforementioned first inbound flow path IFP1 and the second inbound flow path IFP2 may remain open and capable of passing damping fluid from the main shock body 200 to the first fluid chamber 308a of the shock reservoir 300. However, due to the gap G2 being smaller than the gap G1, the second inbound flow path IFP2 may provide smaller (i.e., a second effective flow area) effective flow area, and thus increased resistance, than provided at the top-out position (which provides a first effective flow area).

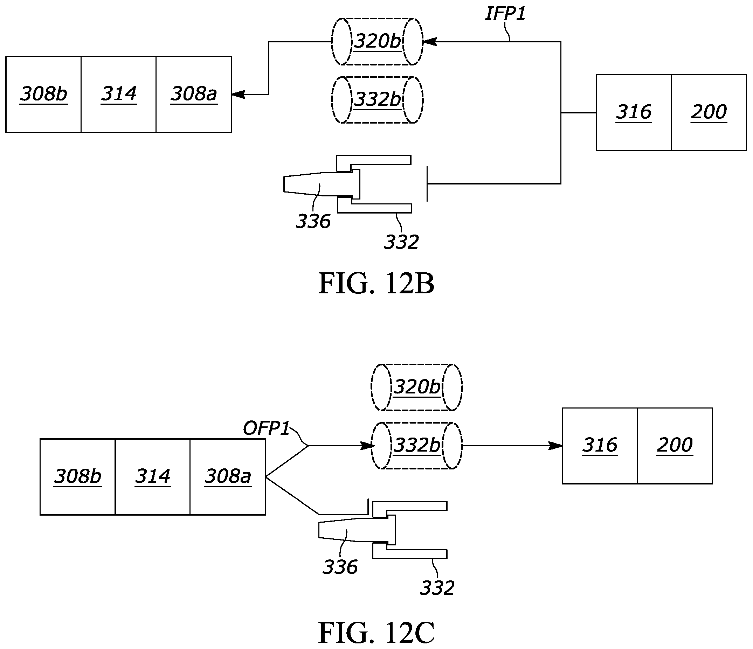

As the compression stroke further continues toward a bottom out position (FIGS. 12A and 12B), the gap L2 may be taken up (e.g., reduced to zero), and the shoulder 336c of the plunger 336 may become seated against the shoulder 332f of the plunger receiver 332. Once the shoulder 336c is seated against the shoulder 332f, flow through the second inbound flow path IFP2 may be inhibited (i.e., restricted), and further compression may pass damping fluid only through the first inbound flow path IFP1.

Upon further compression in at least a second portion of the compression stroke, the internal floating piston 314 may disengage (i.e., physically separate) from the tip end 336d of the plunger 336, and a gap L3 may be formed between the tip end 336d and the internal floating piston 314. In the illustrated example, the gap L3 is an axial gap extending parallel with the reservoir longitudinal axis LA2. Once the plunger 336 is seated against (i.e., held against) the plunger receiver 332, the second inbound flow path IFP2 may be closed, and the effective flow area for passing damping fluid into the first fluid chamber 308a may be reduced to only the collective area of the apertures 320b.

Movement of the plunger 336 during the compression stroke may provide differing effective flow areas between the main shock chamber 316 and the first fluid chamber 308a of the reservoir body 308. In the top-out position, the effective flow area may be a maximum effective flow area provided by the apertures 320b and the annulus defined by gap G1. At the mid-stroke position, the effective flow area may be a second intermediate effective flow area provided by the apertures 320b and the annulus defined by gap G2. Once the plunger 336 is seated on the plunger receiver 332, inbound flow may be inhibited from passing between the plunger 336 and the plunger receiver 332, and the effective flow area may be reduced to only that provided by the apertures 320b.

Pressure differences between the main shock chamber 316 and the first fluid chamber 308a may force damping fluid from the main shock chamber 316 through the cap assembly 304 to the first fluid chamber 308a. The damping fluid may first need to pass through the effective flow area of the cap assembly 304. The position of the plunger 336 may thus provide variable effective flow area of the cap assembly 304 and provide variable damping force applied by the shock reservoir 300.

The larger effective flow area provided at the top out position may provide less resistance to fluid passing from the main shock chamber 316 to the first fluid chamber 308a in comparison to the mid-stroke and bottom out positions. As such, less damping may be provided in the top out position than the mid-stroke and bottom out positions. Conversely, the smaller effective flow area afforded at the bottom out position may provide more resistance to fluid passing from the main shock chamber 316 into the first fluid chamber 308a. As such, more damping may be applied at the bottom out position in comparison with the top out position.

With reference to FIGS. 1 and 12A, in some examples when the force applied to the main rod 208 is decreased (e.g., after the front and/or rear wheels 26, 38 no longer contact the bump B), the main rod 208 may begin to return and move out of the main casing 204. During this return ("rebound"), damping fluid within the first fluid chamber 308a may return to the main shock body 200.

With reference to FIGS. 12A and 12C, during return from the bottom out position, the damping fluid may pass through a first outbound flow path OFP1 (FIG. 12C) passing through the return flow apertures 332b of the plunger receiver 332, the stem 328a of the fitting 328, and the central aperture 320a of the cap 320. The effective flow area of the first outbound flow path OFP1 may be bounded by the smallest of the collective size of the return flow apertures 332b, the cross-sectional area provided by the hollow stem 328a, and the cross-sectional area provided by the central aperture 320a. The fluid flow along the first outbound flow path OFP1 may act against the shim spring 340a (FIG. 9A) to move the plunger receiver shim 340 away from the plunger receiver 332. In this bottom out position, and as illustrated in FIG. 12A, the plunger 336 may be initially seated against the plunger receiver 332.

Upon further return (i.e., mid-stroke position illustrated in FIGS. 11A and 11C), the gap L3 may be taken up, and the internal floating piston 314 may once again come into engagement (i.e., contact) with the plunger 336. The internal floating piston 314 may transmit force (e.g., from a difference in pressure between the second fluid chamber 308b and the first fluid chamber 308a) against the tip end 336d of the plunger 336 to retract (i.e., unseat) the shoulder 336c of the plunger 336 from the shoulder 332f of the plunger receiver 332. Once the plunger 336 is unseated from the plunger receiver 332, (FIGS. 11A and 11C), the gap G2 may form once again, and a second outbound flow path OFP2 may therefore be opened.

As illustrated in FIG. 11C, the second outbound flow path OFP2 may pass between the outer surface 336e of the plunger 336 and the shoulder 332f of the plunger receiver 332 and may pass through the stem 328a of the fitting 328 and the central aperture 320a of the cap 320. Both the first outbound flow path OFP1 and the second outbound flow path OFP2 may remain open as the plunger 336 is fully retracted into the plunger receiver 332, at which time the shock absorber 100 may be returned to the top out position of FIGS. 9A and 9C. In some examples, the first outbound flow path OFP1 and the second outbound flow path OFP2 may generally be parallel outbound flow paths.

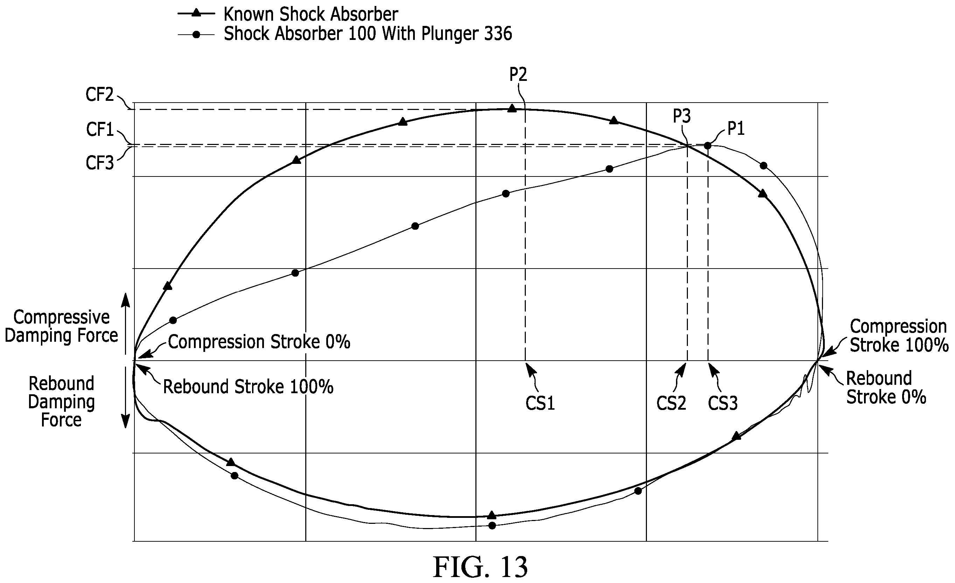

FIG. 13 illustrates an example of damping characteristics of the shock absorber 100, including the shock reservoir 300 with the plunger 336 in comparison with a known shock absorber. FIG. 13 illustrates compressive damping force (+y axis) and return damping force (-y axis) applied by the shock absorber 100 along the compression stroke (x axis). As illustrated by the curve representing the shock absorber 100, the shock absorber 100 may generally linearly increase damping forces along a majority (i.e., at least 50%) of the compression stroke of the main shock body 200. For example, the shock absorber 100 may provide generally linearly increasing damping force from the top out condition (e.g., 0% compression stroke, where minimal compression damping is provided, and a position as illustrated in FIG. 9A) to a peak P1 (where maximum compression damping is provided) at compression stroke status CS3 having compression force CF1. The generally linear increase in damping force along the compression stroke may permit the shock absorber 100 to provide increasing amounts of damping response of corresponding magnitude to the compressive force CF1 along the compression stroke to efficiently dissipate collision energy between the bicycle 10 and the bump B. This may afford less waste of rider input power to allow the rider and the bicycle 10 to advance along the surface S1-S3 at a fast speed and without unnecessarily dissipation. In some examples, the peak P1 may correspond with a position of the plunger 336 whereby the plunger 336 is between the mid-stroke position of FIG. 11A and the bottom-out position of FIG. 12A, and where the gap L3 is present between the tip end 336d of the plunger 336 and the internal floating piston 314.

In some examples, the peak P1 occurs at compression stroke status CS3 of approximately 90% compression stroke. In other examples, the peak P1 may occur at any location between 50% and 99% compression stroke, such as, for example, between 66% and 99% compression stroke or between 50% and 75% compression stroke. In comparison, the known shock absorber increases at a decreasing rate (i.e., rate of increase of damping force decreases as compression stroke advances) from the top out condition (0% compression stroke) to a peak P2 at compression stroke status CS1 having a compression force CF2. In the illustrated embodiment (FIG. 13), The compression stroke status CS1 of peak P2 is less than the compression stroke status CS3 of peak P1. Further, the compression force CF2 of peak P2 is greater than compression force CF1 of peak P1. However, relative locations of the peaks P1, P2 may differ.

Beyond the peak P1, the compression damping force applied by the shock absorber 100 may decrease to zero at a compression stroke of 100%, prior to a rebound stroke as the shock absorber 100, and for example, the piston 220 stops advancing into the second portion 240b (to the right as viewed in FIG. 4) and before turning around to retreat toward the piston 232 (to the left as viewed in FIG. 4). The illustrated shock absorber 100 is capable of producing peak force to the end of the compression stroke (100% compression) so long as the shock absorber is still in motion. The left-right position of the peak P1 on the damping force and compression stroke dynamometer plot of FIG. 13 may, for example, depend on a compression speed (e.g., velocity of compression) of the piston 220 into the second portion 240b, and a direction reversal rate of change (i.e., acceleration of the piston 220 in the retreating direction toward the piston 232 near 100% compression stroke). The faster the direction reversal rate of change, the closer the compression stroke status CS3 of peak P1 will be to 100% compression stroke.

As illustrated in FIG. 13, in some examples the curves of the shock absorber 100 and the known shock absorber intersect at point P3 having a compression stroke status CS2 between compression stroke status CS1 and compression stroke status CS3 and having compression force CF3 lesser than compression force CF1 and compression force CF2.

In some examples, less damping force may be supplied by the shock absorber 100 in comparison with the known shock absorber while in low compression stroke positions between 0% and compression stroke status CS2. Conversely, more damping force may be supplied by the shock absorber 100 in comparison with the known shock absorber while in high compression stroke positions between compression stroke status CS2 and 100%. In other words, the shock absorber 100 may be more compliant than the known shock absorber at low compression stroke positions, and stiffer than the known shock absorber at high compression stroke positions.

The shock absorber 100 may provide enhanced compliance when compliance is needed, and enhanced stiffness when stiffness is needed. The shock absorber may provide comparatively low (with reference to known shock absorbers) amounts of compressive damping force at the beginning of the compression stroke at low compression stroke statuses (i.e., less than compression stroke status CS2) and comparatively high amounts of compressive damping force at high compression stroke statuses (e.g., greater than compression stroke status CS2).. At low compression stroke statuses, the shock absorber 100 may provide enhanced compliance (e.g., to allow more relative movement of the rear frame 22 relative to the main frame 18) when riding, for example, flat surfaces S1 with small on bumps B to soften the blow caused by the small bumps B and experienced by the rider. By providing a plunger 336 with the above-described outer surface 336e to effectively vary the effective cross-sectional flow area (first inbound flow path IFP1, second inbound flow path IFP2) near the end of the compression stroke, compression damping characteristics of the shock absorber 100 (FIG. 13) may be selected to provide enhanced stiffness (e.g., allow less relative movement of the rear frame 22 relative to the main frame 18) when landing from jumps or drops or when encountering large bumps B on descending surfaces S2 for stronger rider support immediately after landing from the jump, drop, or bump B. Because the plunger 336 may move automatically in response to a difference of pressure between the first fluid chamber 308a and the main shock chamber 316, the rider may not need to manually adjust conditions of the shock absorber 100 while riding for the shock absorber 100 to provide enhanced compliance when compliance is needed and enhanced stiffness when stiffness is needed. Rather, damping force applied by the shock absorber 100 may automatically adjust to various amounts depending on a position of the plunger 336 in the compression stroke.

In some examples, the shock absorber 100 may provide similar amounts of return damping force (-y axis, below x axis) in comparison to the known shock absorber. Relative effective flow areas provided by sizes of the return flow apertures 332b, the stem 328a, the central aperture 320a, the outer surface 336e, and the shoulder 332f may allow the effective flow areas provided by the combined outbound flow path OFP1 and the outbound flow path OFP2 to be generally similar to the outbound flow path OFP1 alone. In other examples, the return flow apertures 332b, the stem 328a, the central aperture 320a, the outer surface 336e, and/or the shoulder 332f may be sized differently to adjust amounts of return damping force provided during return of the shock absorber 100.

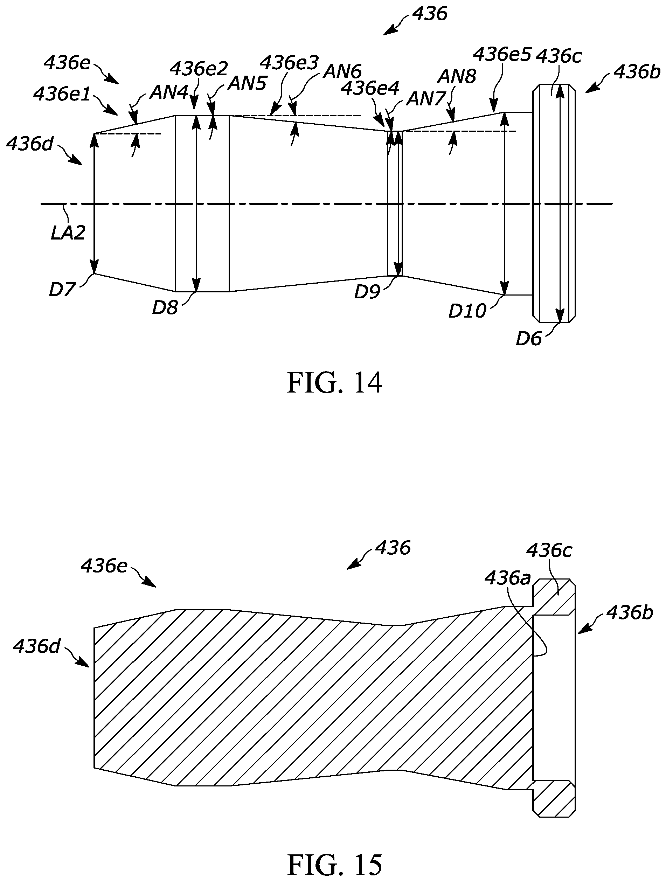

With reference to FIGS. 14-15, in some examples the shock absorber 100 may be designed with, and/or the plunger 336 may be replaced by, an alternate plunger 436 with similar features to the plunger 336. For example, as illustrated in FIG. 15, the alternate plunger 436 may also include a spring bore 436a, similar to the spring bore 336a. The alternate plunger 436 may generally define an hourglass shape having different damping characteristics in comparison to the plunger 336.

The illustrated alternate plunger 436 includes an outer surface 436e having a plurality of tapered outer surfaces 436e1, 436e3, 436e5 separated by generally cylindrical outer surfaces 436e2, 436e4. In some examples, the tapered outer surfaces 436e1 and 436e5 may be linearly tapered at angles AN4, AN8 extending away from a reservoir longitudinal axis LA2 in a direction from a tip end 436d toward a base end 436b.

In some examples, the tapered outer surface 436e1 may extend at an angle AN4 of between 5 degrees and 25 degrees, or at an angle AN4 between 12 degrees and 15 degrees. In some examples, the tapered outer surface 436e1 may extend between 10% and 40% of an axial length of the plunger 436, or between 15% and 25% of an axial length of the plunger 436. In the illustrated example, the tapered outer surface 436e1 extends approximately 20% the axial length of the plunger 436. Other examples include different values and ranges of values for the angle AN4 and the axial length.

With continued reference to FIG. 14, in some examples the tapered outer surface 436e5 may extend an angle AN8 of between 2 degrees and 8 degrees, or at angle AN8 between 2 degrees and 6 degrees. In some examples, the tapered outer surface 436e1 may extend between 40% and 80% of an axial length of the plunger 436, or between 50% and 70% of an axial length of the plunger 436. Other examples include different values and ranges of values for the angle AN8 and the axial length.

The tapered outer surface 436e3 may be linearly tapered at an angle AN6 extending toward the reservoir longitudinal axis LA2 in a direction from the tip end 436d toward the base end 436b. In other words, the tapered outer surface 436e3 may decrease in size (e.g., diameter) from the tip end 436d toward the base end 436b.

In some examples, the tapered outer surface 436e3 may extend an angle AN6 of between 10 degrees and 40 degrees toward the reservoir longitudinal axis LA2, or at an angle AN6 of between 20 degrees and 30 degrees toward the reservoir longitudinal axis LA2. Other examples include different values and ranges of values for the angle AN6.

The cylindrical outer surface 436e2 may be radially outboard of the cylindrical outer surface 436e4 in comparison with the reservoir longitudinal axis LA2. Additionally, in some examples, a tip end 436d of the alternate plunger 436 may define a first outer dimension D7, the cylindrical outer surface 436e2 may define a second outer dimension D8 larger than the first outer dimension D7, and the cylindrical outer surface 436e4 may define a third outer dimension D9 smaller than the second outer dimension D8. The rearward most end of the tapered outer surface 436e5 may define a third outer dimension D10 larger than the third outer dimension D9 but less than an outer dimension D6 of the shoulder 436c.

The alternate plunger 436 is just one example of a differently dimensioned plunger capable of providing different desired damping characteristics. Other differently dimensioned plungers are also possible. For example, plungers having outer surfaces with non-linear tapered portions, stepped surfaces, non-circular cross-sectional shapes (thus defining non-annular cross-sectional flow areas), and the like are possible. In some examples, the plunger 336 may be removable from the shock reservoir 300, and the plunger 436 may be attachable to the shock reservoir 300 to replace the plunger 336 (or vice versa).

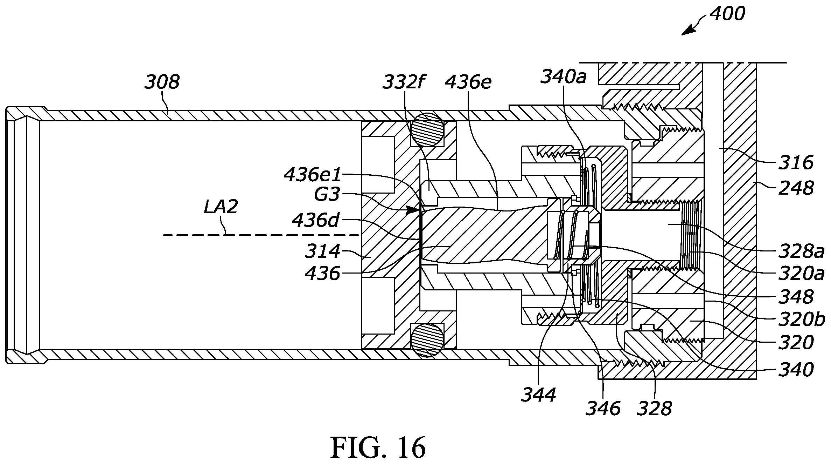

FIGS. 16-19 illustrate an alternate shock reservoir 400 including the alternate plunger 436 and the above-described components of the shock reservoir 300 in a top out, sag, mid-point, and bottom out positions, respectively. In the top out position of the alternate shock reservoir 400 (FIG. 16), the tapered outer surface 436e1 may be positioned radially inboard and axially aligned with the shoulder 332f of the plunger receiver 332. A gap G3 (similar to the gaps G1, G2 of the shock reservoir 300) representative of an annularly shaped cross-sectional area may be present between the outer surface 436e of the plunger 436 and the shoulder 332f of the plunger receiver 332. In this top out position, the tip end 436d of the plunger 436 may contact the internal floating piston 314.

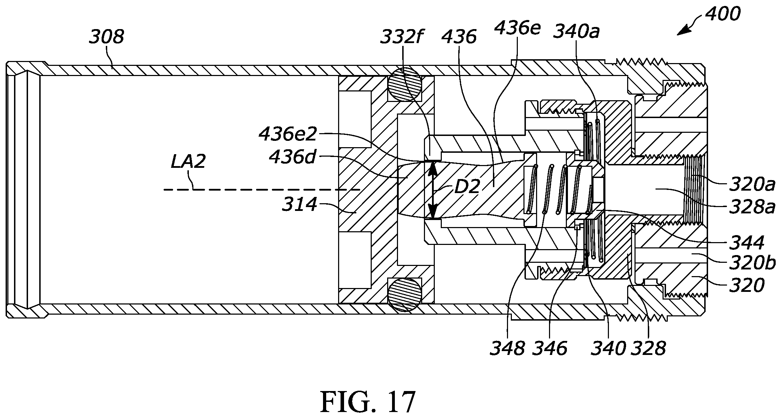

Upon compression of the shock absorber 100 and the alternate shock reservoir 400 to the sag position (e.g., by a user mounting the bicycle 10) of FIG. 17, the gap G3 may be taken up, and the alternate plunger 436 may be partially advanced. In this position, the cylindrical outer surface 436e2 may be positioned radially inboard and axially aligned with the shoulder 332f of the plunger receiver 332. In the illustrated example, the cylindrical outer surface 436e2 is dimensioned similar to the outlet inner dimension D2 (e.g., diameter) of the shoulder 332f of the plunger receiver 332, such that damping fluid cannot pass between the cylindrical outer surface 436e2 and the shoulder 332f. Other examples may provide a smaller gap (not illustrated) between the cylindrical outer surface 436e2 and the shoulder 332f. In this sag position, the tip end 436d of the plunger 436 contacts the internal floating piston 314.

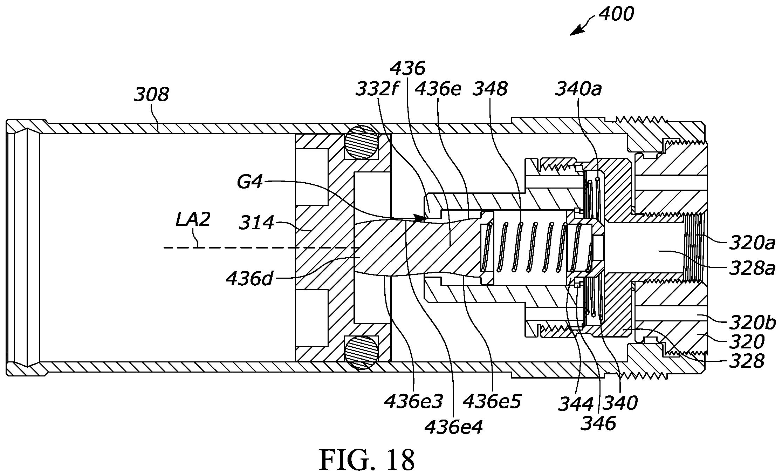

Upon further compression of the shock absorber 100 and the alternate shock reservoir 400 to a midpoint position (e.g., by the bicycle 10 encountering the bump B) of FIG. 18, any of the tapered outer surface 436e3, the cylindrical outer surface 436e4, or the tapered outer surface 436e5 are positioned radially inboard and axially aligned with the shoulder 332f. FIG. 18 illustrates the cylindrical outer surface 436e4 radially inboard and axially aligned with the shoulder 332f. In this midpoint position, a gap G4 (similar to the gaps G1, G2, G3) representative of an annularly shaped cross-sectional area may be present between the outer surface 436e of the plunger 436 and the shoulder 332f of the plunger receiver 332. In some of the midpoint positions (e.g., as illustrated in FIG. 18), the tip end 436d of the plunger 436 may contact the internal floating piston 314.

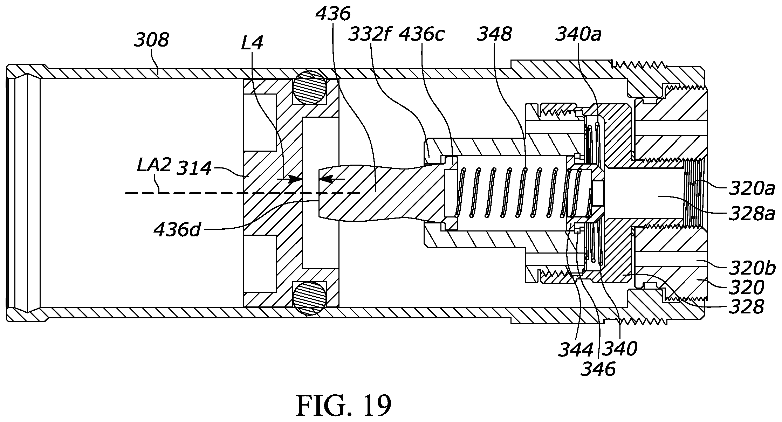

With reference to FIG. 19, upon further compression of the shock absorber 100 and the alternate shock reservoir 400 to the bottom out position, the shoulder 436c of the plunger 436 may be seated against the shoulder 332f of the plunger receiver 332. The internal floating piston 314 may advance further toward the base 312, and may become disengaged (i.e., separated) from the tip end 436d of the plunger 436. A gap L4 may form between the tip end 436d and the internal floating piston 314.

Due to similarities between the shock reservoir 300 and the alternate shock reservoir 400, inboard an outboard flow diagrams are not provided for the alternate shock reservoir 400. The inboard and outboard flow diagrams of the alternate shock reservoir 400 are similar to the inboard and outboard flow diagrams seen for example in FIGS. 9B, 9C, 11B, 11C, 12B, 12C with the exception that, for the alternate shock reservoir 400 at the sag position (FIG. 17), the second inbound flow path IFP2 is blocked during compression and the second outbound flow path OFP2 is blocked during return (due to contact between the cylindrical outer surface 436e2 and the shoulder 332f).

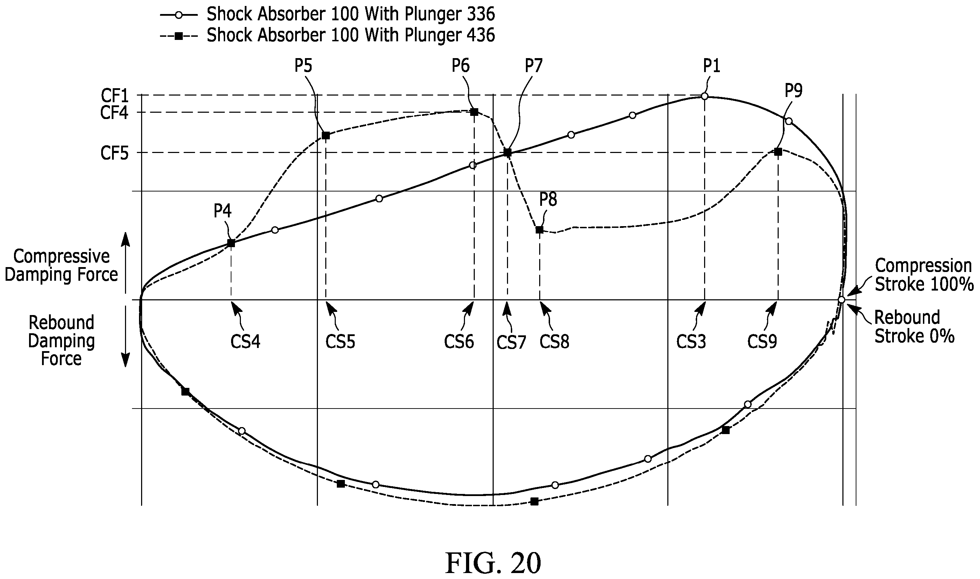

FIG. 20 compares damping characteristics of the shock reservoir 300 with the alternate shock reservoir 400. As mentioned above, the alternate plunger 436 may be dimensioned to personalize the compression damping force curve (+y axis) throughout the compression stroke (x axis) for any desired damping characteristic. As illustrated in FIG. 20, from 0% compression to compression stroke status CS4, the alternate shock reservoir 400 may provide less damping than the shock reservoir 300. From compression stroke status CS4 to compression stroke status CS7, the alternate shock reservoir 400 may provide more damping than the shock reservoir 300. The hourglass shape of the plunger 436, and its resulting damping characteristics illustrated in FIG. 20, may be beneficial for example in a cross country application. For example, a higher level of damping may be provided in the sag position of the stroke to help reduce suspension movement from pedaling forces, and the damping may transition to reduced damping beyond the sag position to better comply with bumps, and then trend back up toward the end of the stroke to help resist bottom-outs.

In some examples, compression stroke status CS5 to compression stroke status CS6 may generally represent the sag position of the alternate shock reservoir 400 (FIG. 17) where the cylindrical outer surface 436e2 is positioned radially inboard and axially aligned with the shoulder 332f. This may permit the alternate shock reservoir 400 to provide stiffness when the rider is supported on the bicycle 10 prior to deeper compression of the alternate shock reservoir 400 beyond the compression stroke status CS6.

In the illustrated example, compression damping force may increase at a higher rate between compression stroke status CS4 and compression stroke status CS5 than between compression stroke status CS5 and compression stroke status CS6 at point P6, which is a first peak of compressive force CF4 in the alternate shock reservoir compressive damping force curve. Compression damping force may then decrease from compression stroke status CS6 to compression stroke status CS8, represented by point P8 which defines a trough of the alternate shock reservoir 400 compressive damping force curve. The curves representing the alternate shock reservoir 400 and the shock reservoir 300 intersect one another at point P7.

The alternate shock reservoir 400 compressive damping force curve further includes a second peak at point P9 corresponding with compressive force CF5. In some examples, the compressive force CF5 provided at the second peak of the alternate shock reservoir 400 curve may be less than the compressive force CF1 at point P1 provided by the shock reservoir 300, and the compressive force CF5 is less than the compressive force CF4 provided by the first peak of the alternate shock reservoir 400 compressive damping force curve at point P6.

Different profiles, shapes, and relative dimensions of the compressive damping force curves of the shock reservoir 300 and the alternate shock reservoir 400 are also possible (e.g., by changing relative sides of effective flow areas and/or dimensioning the plunger 336, 436 in a different manner), for example, by altering the geometry of the outer surface 436e of the plunger 436. The profile illustrated in FIG. 20 is an illustrative example of one such profile.

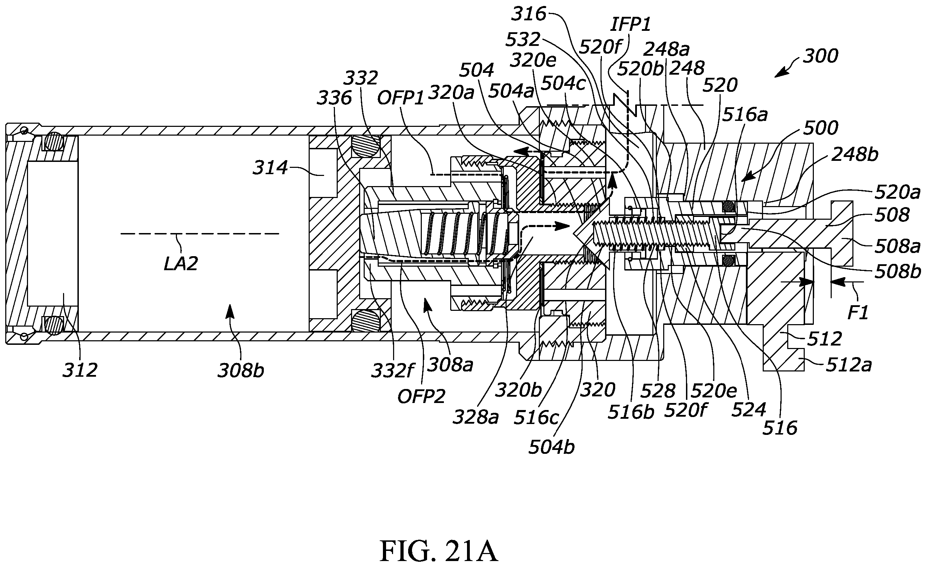

With reference to FIGS. 21A-26, the shock reservoir 300, the shock reservoir 400, and/or any other shock reservoir, may additionally or alternatively include a valve head assembly 500 to adjustably control damping characteristics. The valve head assembly 500 may include one or more valves to control a flow of damping fluid into the shock reservoir 300, 400. The valve head assembly 500 may include knobs, handles, or other structures (e.g., switches) that may be activated to adjust the valve(s), and thus adjust a flow of damping fluid to control damping characteristics of the shock reservoir 300, 400.

In some examples, the valve head assembly 500 may include a valve head 504 capable of moving between a closed, seated position (e.g., against the cap 320) and an open position. This allows the valve head 504 to selectively meter inbound flow of damping fluid into the first fluid chamber 308a. The valve head assembly 500 may include, for example, a fine adjuster 508 and/or a coarse adjuster 512 (e.g., "climb switch") capable of moving the valve head 504.

In some examples, and as described further below, the fine adjuster 508 may be activated to control fine tune adjustment of the flow of damping fluid, and to fine tune the position sensitivity of the shock reservoir 300, while the coarse adjuster 512 may be activated to cancel out any position sensitivity of the shock reservoir 300, and allow for firm damping (e.g., at the beginning of the compression stroke).

As illustrated in FIG. 21A, the fine adjuster 508 may include a head 508a (e.g., knob) that is actuatable (e.g., rotatable) by a user from the exterior of the connector portion 248 to provide access to adjust the position of the valve head 504 (and thus the damping characteristics of the shock reservoir 300). The fine adjuster 508 may be oriented along the reservoir longitudinal axis LA2 and may include a tip 508b located opposite the head 508a.

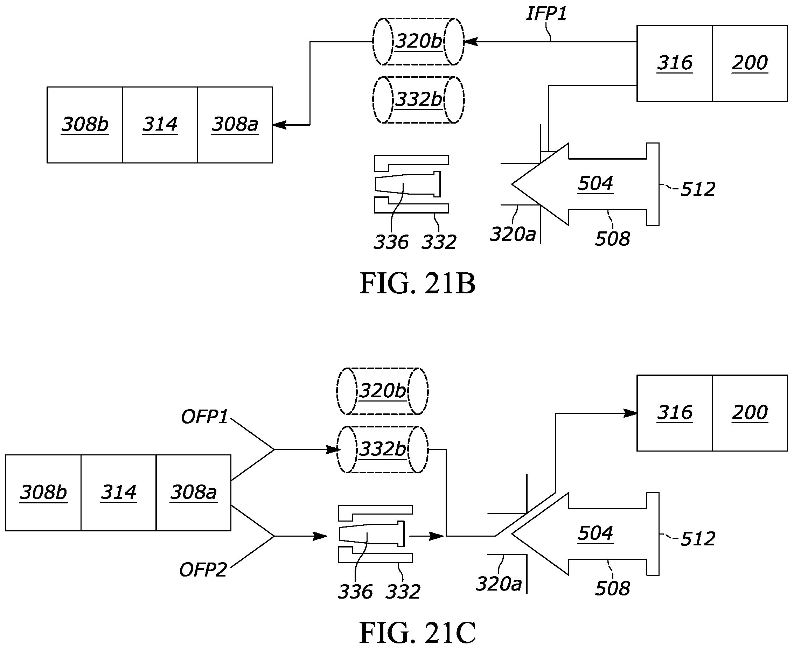

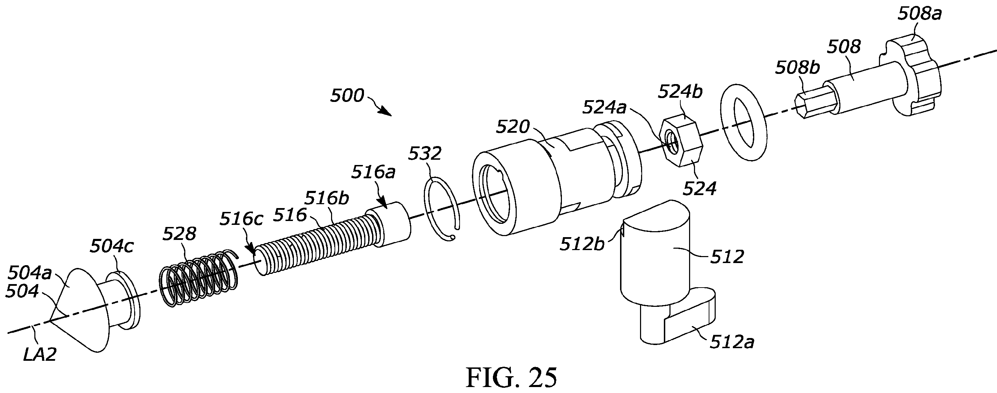

With continued reference to FIGS. 21A, 21B, 21C, and 25, the tip 508b of the fine adjuster 508 may be fixed to a proximal end 516a of a screw 516, or otherwise be rotationally locked with the proximal end 516a of the screw 516 (e.g., via a keyed arrangement). In some examples, the screw 516, the fine adjuster 508, and the valve head 504 may be generally movable with one another (e.g., along the axis LA2).

The screw 516 may extend through a collar 524 located within a shuttle 520. With reference to FIG. 25, the collar 524 may be a threaded nut with internal threads 524a that engage external threads 516b of the screw 516. The collar 524 may sit and/or float within the shuttle 520.

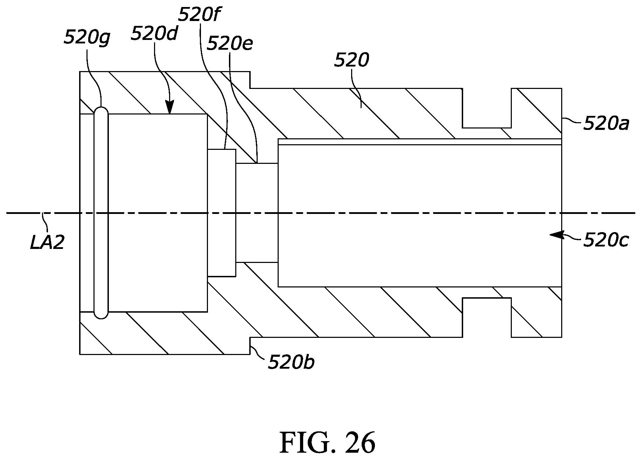

With reference to FIG. 26, the shuttle 520 may include an end surface 520a and a seating surface 520b. The interior of the shuttle 520 may generally be shaped as a hollow cylinder and separated into a collar receiving portion 520c and a valve receiving portion 520d by a central rib 520e. The valve receiving portion 520d may include a step 520f adjacent the central rib 520e and a recess 520g axially spaced from the step 520f.

The illustrated collar receiving portion 520c may be dimensioned with a plurality of planar external faces 524b (e.g., hexagonal in cross section perpendicular to the reservoir longitudinal axis LA2). Other examples may include different shapes, sizes, and surfaces for the shuttle 520. The external faces 524b of the collar 524 sitting in the shuttle 520 may have a cross-sectional geometry (e.g., extending perpendicular to the reservoir longitudinal axis LA2) and may be compatible with the collar receiving portion 520c, such that rotation of the fine adjuster 508 causes the collar 524 to interact with the collar receiving portion 520c and to axially translate the valve head 504 along or parallel to the reservoir longitudinal axis LA2.

With continued reference to FIGS. 21A, 21B, 21C, and 25, a tip 504a (e.g., cone-shaped tip) of the valve head 504 may be coupled (e.g., fixed) to an opposite, distal end 516c of the screw 516 (e.g., with the external threads 516b of the screw 516 engaging internal threads 504b (FIG. 21A) on the valve head 504 to secure the tip 504a in place on the screw 516).

Rotation of the head 508a about the reservoir longitudinal axis LA2 may cause the head 508a, the screw 516, and the valve head 504 to rotate together (e.g., relative to the collar 524) about the reservoir longitudinal axis LA2 and advance or retreat the valve head 504 linearly along the longitudinal axis LA2. Actuation of the fine adjuster 508 may cause the screw 516 and the valve head 504 to move together, as a unit, relative to the cap 320.

In some examples, the head 508a may be rotated or otherwise adjusted manually (e.g., by a user). In other examples, the head 508a (or other portion of the fine adjuster 508) may be adjusted electromechanically, to move the tip 504a of valve head 504 toward or away from the cap 320.

In some examples, the fine adjuster 508 is capable of adjusting the valve head 504 between each of a closed position, an open position, and/or a partially open position. In other examples, the fine adjuster 508 is capable of adjusting the valve head 504 only between an open position and a partially open position.

With continued reference to FIGS. 21A, 21B, 21C, and 25, the valve head assembly 500 may include a valve spring 528 positioned between the tip 504a of the valve head 504 and the shuttle 520. The valve spring 528 may provide a biasing force to bias the tip 504a in a direction along the reservoir longitudinal axis LA2 toward the cap 320 to help hold the valve head 504 against a seating surface 320e of the cap 320. The valve spring 528 may be positioned between the tip 504a of the valve head 504 and the step 520f (FIG. 26) of the shuttle 520. A ring 532 may be positioned within the shuttle 520 to inhibit removal of a flared base portion 504c of the valve head 504 from the shuttle 520. The ring 532 may be positioned within the recess 520g of the shuttle 520.

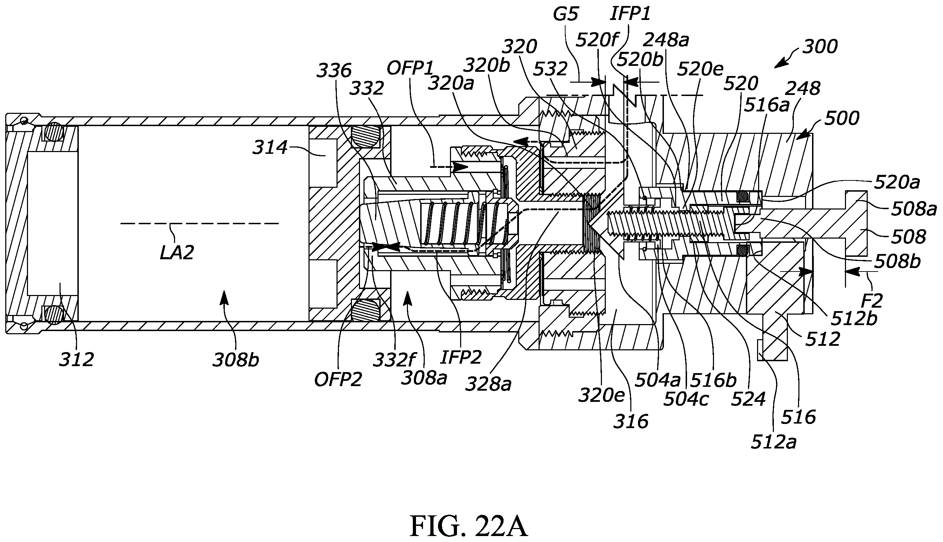

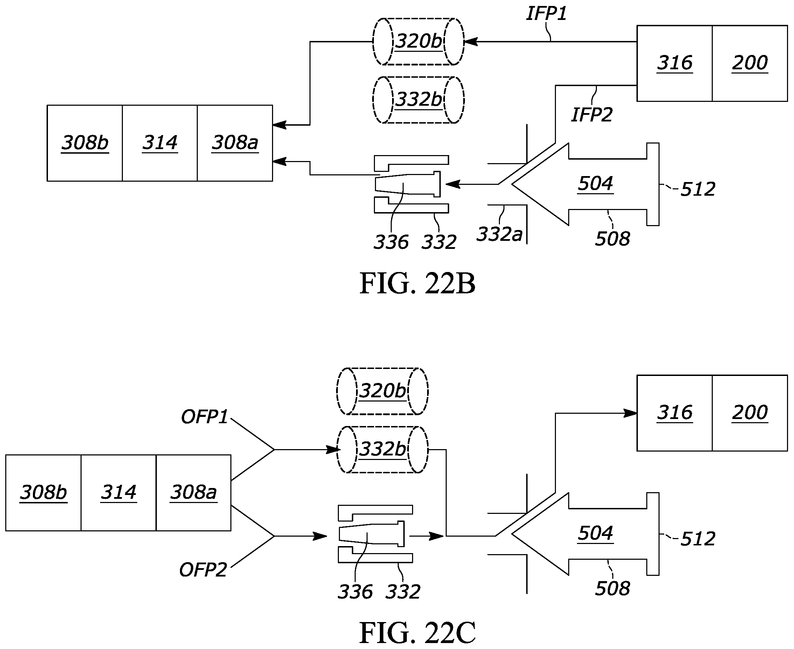

The coarse adjuster 512 may include a head 512a that is accessible from outside of the shock reservoir 300 to provide access to adjust the position of the valve head assembly 500 (and thus damping characteristics of the shock reservoir 300). The illustrated coarse adjuster 512 may be oriented perpendicularly to the reservoir longitudinal axis LA2. Opposite the head 512a, the coarse adjuster 512 may include a cam surface 512b (FIGS. 22 and 25) in contact with the end surface 520a of the shuttle 520.

Rotation of the head 512a may cause the cam surface 512b to press upon the end surface 520a and to advance the shuttle 520 toward the cap 320. Movement of the shuttle 520 (to the left in FIG. 21A) may push the valve head 504 to a closed position seated on the seating surface 320e (e.g., with the assistance of the valve spring 528). As illustrated in FIG. 21A, advancing the movement of the shuttle 520 may also unseat the seating surface 520b of the shuttle 520 from a forward seating surface 248a of the connector portion 248 and the end surface 520a of the shuttle 520 from a rearward seating surface 248b of the connector portion 248.

The coarse adjuster 512 may be rotatable to advance the valve head 504 by linear translation (along reservoir longitudinal axis LA2) between a first (e.g., open or partially open) position and a second (e.g., closed, seated) position. In some examples, actuation of the coarse adjuster 512 causes the shuttle 520, the screw 516, the valve head 504, and the fine adjuster 508 to move together, as a unit, relative to the cap 320. The coarse adjuster 512 may be adjusted manually (e.g., by a user). In other examples, the coarse adjuster 512 may be adjusted electromechanically.

FIGS. 21A - 23C illustrate examples of various positions and uses for the fine adjuster 508 and the coarse adjuster 512.

For example, and with reference to FIGS. 21A-21C, in some examples a closed (e.g., first) position of the valve head 504 may provide a first effective flow area between the main shock chamber 316 (and thus the main shock passageway 244) and the first fluid chamber 308a. FIGS. 21A-21C illustrate the shock reservoir 300 with the valve head assembly 500 in a closed position. FIG. 21A represents one exemplary position where the coarse adjuster 512 is in a closed (activated) position with valve head 504 fully seated against the seating surface 320e (e.g., bevel surface at the end of the central aperture 320a) of the cap 320, the shuttle 520 advanced toward the cap 320, and the collar 524 axially separated from the central rib 520e of the shuttle 520.

Movement of the coarse adjuster 512 to this closed position may cause the valve head 504 to be fully seated against the seating surface 320e of the cap 320 (e.g., regardless of a position of the fine adjuster 508). In this closed position, the valve head 504 may contact and be seated against the seating surface 320e of the cap 320 to inhibit ingress of damping fluid from the main shock chamber 316 through the central aperture 320a. In the illustrated position, the flared base portion 504c of the valve head 504 may be positioned between the ring 532 and the step 520f, and the head 508a of the fine adjuster 508 may be spaced a distance F1 from the connector portion 248.

During inbound flow of fluid into the first fluid chamber 308a (e.g., compression of the shock absorber 100, FIG. 21B), the first effective flow area may be defined by a collective area of the apertures 320b, whereby damping fluid passes along the first inbound flow path IFP1 through the apertures 320b. When the valve head 504 is closed, the first inbound flow path IFP1 may act as the only fluid flow path from the main shock chamber 316 to the first fluid chamber 308a.

With reference to FIGS. 22A-22C, an open (e.g., second) position of the valve head 504 may provide a second effective flow area between the main shock chamber 316 and the first fluid chamber 308a. FIG. 22A represents one exemplary position where the coarse adjuster 512 is in an opened (non-activated) position with the shuttle 520 seated against the connector portion 248 and the fine adjuster 508 is in a fully opened position.

As illustrated in FIG. 22A, the proximal end 516a of the screw 516 may be axially spaced from the collar 524 to allow further tightening of the fine adjuster 508 if desired. In this position, the collar 524 may be seated against the central rib 520e and the base portion 504c of the valve head 504 may be positioned between the ring 532 and the step 520f. The head 508a of the fine adjuster 508 may be spaced a distance F2 from the connector portion 248. The distance F2 is greater than the distance F1.

The valve head 504 may provide the user an option to select, based on preference and/or terrain expected to be ridden, an amount of effective (e.g., inbound) flow area through the central aperture 320a of the cap 320 and the stem 328a of the fitting 328. FIGS. 22A-22C illustrate the shock reservoir 300 with the valve head 504 in a fully opened position. In this position, the valve head 504 is retracted from the cap 320 (more specifically, the seating surface 320e thereof) by a gap G5 between the valve head 504 and the seating surface 320e.

In this position, the second effective flow area may be defined by a collective area of the apertures 320b and by the gap G5, whereby damping fluid from the main shock body 200 can pass along the first inbound flow path IFP1 through the apertures 320b and along the second inbound flow path IFP2 through the gap G5, the central aperture 320a, and between the plunger 336 and the plunger receiver 332.

Depending on the position of the plunger 336 relative to the plunger receiver 332 (i.e., in situations where the plunger 336 is seated against or otherwise blocking the second inbound flow path IFP2 as described above), the second inbound flow path IFP2 may be inhibited from passing fluid from the main shock chamber 316 to the first fluid chamber 308a. When the valve head 504 is opened, the first inbound flow path IFP1 and the second inbound flow path IFP2 may act as parallel fluid flow paths from the main shock chamber 316 to the first fluid chamber 308a.

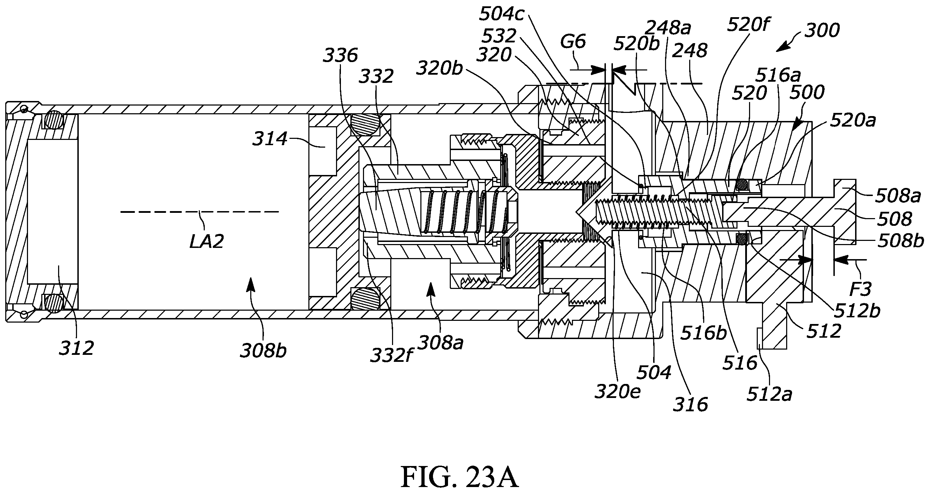

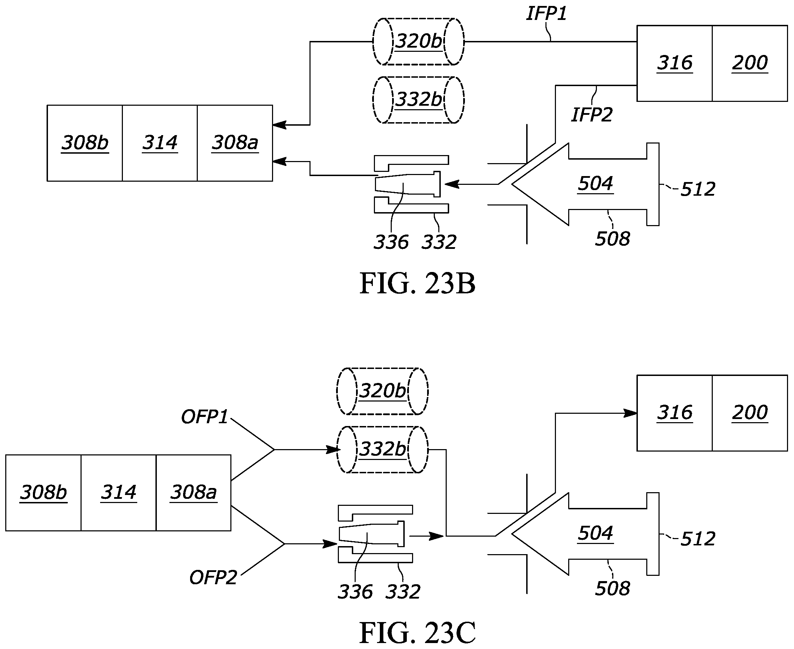

With reference to FIGS. 23A-23C, the valve head 504 is also movable to a partially open (e.g., third) position that provides a third effective flow area between the main shock chamber 316 and the first fluid chamber 308a. FIG. 23A represents one exemplary position where the coarse adjuster 512 is in an open (non-activated) position with the shuttle 520 seated against the connector portion 248 and the fine adjuster 508 in a closed position with the proximal end 516a of the screw 516 in contact with the collar 524.

In this position, the base portion 504c of the valve head 504 may contact the ring 532. The head 508a of the fine adjuster 508 may be spaced a distance F3 from the connector portion 248. The distance F3 is greater than the distance F1 and less than the distance F2. In the illustrated example, the closed position of the fine adjuster 508 corresponds with a partially opened position of the valve head 504. In other examples, a closed position of the fine adjuster 508 may correspond with a closed position of the valve head 504.

With continued reference to FIGS. 23A-23C, the valve head 504 may be spaced from the seating surface 320e of the cap 320 by a gap G6 between the valve head 504 and the seating surface 320e. The gap G6 (FIG. 23A) of the partially open position may be smaller than the gap G5 (FIG. 22A) of the fully open position. When in the partially open position, the third effective flow area may be defined by a collective area of the apertures 320b and by the gap G6, whereby damping fluid passing along the first inbound flow path IFP1 through the apertures 320b and along the second inbound flow path IFP2 through the gap G6, the central aperture 320a, and between the plunger 336 and the plunger receiver 332. When the valve head 504 is partially opened, the first inbound flow path IFP1 and the second inbound flow path IFP2 may act as parallel fluid flow paths (having a different (e.g., lesser) combined effective flow area in comparison to when the valve head 504 is fully opened) from the main shock chamber 316 to the first fluid chamber 308a.

Depending on the position of the plunger 336 relative to the plunger receiver 332 (i.e., in situations where the plunger 336 is seated against or otherwise blocking the second inbound flow path IFP2 as described above regarding the plunger 336 and the plunger 436), the second inbound flow path IFP2 may be inhibited from passing fluid from the main shock chamber 316 to the first fluid chamber 308a. Thus, the third effective flow area provided by the partially open position (FIG. 23A) may be greater than the first effective flow area provided by the closed position (FIG. 21A) and may be less than the second effective flow area provided by the fully open position (FIG. 22A).

In some examples, the valve head 504 may be movable (e.g., via the fine adjuster 508) to an infinite number of partially opened positions, and the coarse adjuster 512 may be used to fully (and for example immediately) close and seat the valve head 504. The partially open positions may meter fluid passage between the main shock chamber 316, the central aperture 320a (i.e., the first cap passageway) and the first fluid chamber 308a by adjusting an effective flow area passing into and ultimately through the central aperture 320a.

Additionally, in some examples, when a pressure in the first fluid chamber 308a exceeds a pressure in the main shock chamber 316, the biasing force of the valve spring 528 may be overcome, and the valve head 504 may retreat from the seating surface 320e of the cap 320. This phenomenon is illustrated in FIG. 21C where, even in the closed position in which the valve head 504 is held and seated against the seating surface 320e during an inboard pressure differential, the outboard pressure differential acting on the valve head 504 deflects the tip 504a of the valve head 504 to permit the first outbound flow path OFP1 and the second outbound flow path OFP2 to pass between the central aperture 320a and the valve head 504. Similarly, the same outboard pressure differential may cause the shuttle 520 to retreat, with the seating surface 520b of the shuttle 520 engaging the forward seating surface 248a.

While a fine adjuster 508 and a coarse adjuster 512 are illustrated, in other examples only a single adjuster (e.g., only the fine adjuster 508, only the coarse adjuster 512) may be provided. Additionally, other adjusters may include other arrangements of components than that illustrated, and may include other structures (e.g., springs, valve seats, screws, knobs, etc.) than that illustrated, so as to cause a valve tip (such as the tip 504a) to engage and disengage the cap 320 and control the movement of damping fluid. In some examples, no adjusters are provided.

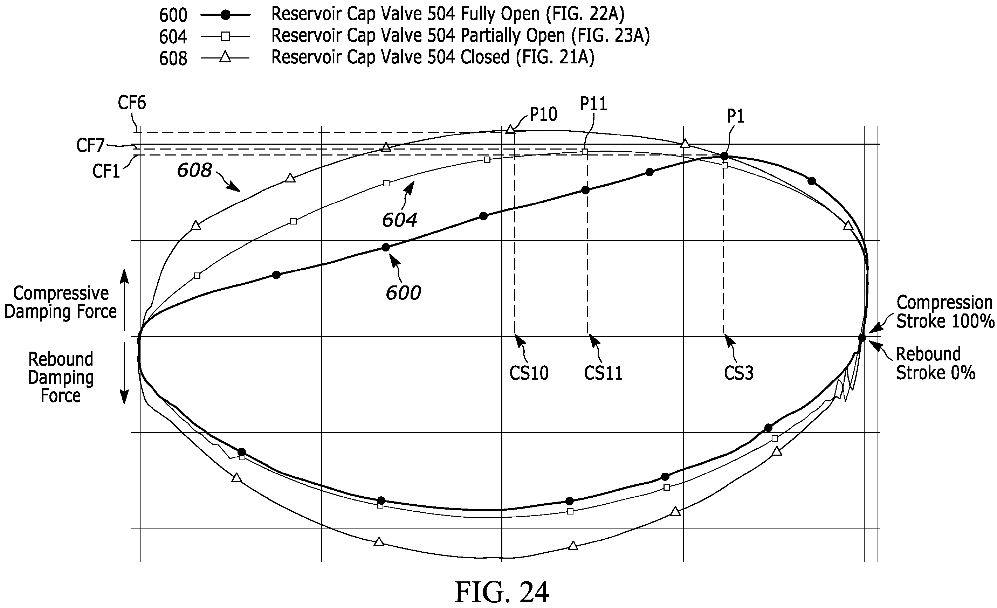

With reference to FIG. 24, in some examples, it may be beneficial to adjust the damping profile of the shock absorber 100 (e.g., curve 608, FIG. 24) by actuation of the fine adjuster 508 and/or the coarse adjuster 512 to move the valve head 504 into the closed, seated position (FIG. 21A) to provide higher compressive damping force earlier in the compression stroke, for example depending on user preference where the rider desires the higher compressive damping force earlier in the compression stroke.

In some examples, it may be beneficial to adjust the damping profile of the shock absorber 100 (e.g., curve 600, FIG. 24) by actuation of the fine adjuster 508 and/or the coarse adjuster 512 to move the valve head 504 into the fully open position (FIG. 22A), for example again depending on user preference.

In some examples, it may be beneficial to finely adjust the damping profile of the shock absorber 100 (to curve 604, FIG. 24) by adjustment of the fine adjuster 508 to locate the valve head 504 in the partially open position (FIG. 23A), again depending on user preference.

As shown by the similarities of curve 600 to the FIG. 13 and FIG. 20 plots, while the valve head 504 is in the fully open position, the shock absorber 100 may exhibit a damping profile similar to that of the shock absorber 100 not including a valve head 504. In other words, the valve head assembly 500 can be located in a position (the open position) in which the valve head has minimal impact on the damping profile of the shock absorber 100. The curve 600 peaks at point P1 at compression stroke status CS3 having compression force CF1.

While the valve head 504 is closed (curve 608), the shock absorber 100 may provide higher compressive damping force in comparison to when the valve head 504 is opened (curve 600) at low compression stroke statuses (e.g., below compression stroke status CS3 near which the curve 608 intersects the curve 600). The curve 608 peaks at point P10 at compression stroke status CS10 having compression force CF6.

To cater to user preference, the fine adjuster 508 may be closed to provide a damping curve 608 that, along the compression stroke, increases at decreasing rate to peak P10 and decreases at increasing rate beyond peak P10.

While the valve head 504 is partially opened (curve 604), the shock absorber 100 may provide compressive damping force between that provided when the valve head 504 is fully open and closed. The curve 604 peaks at point P11 at compression stroke status CS11 having compression force CF7. Compression force CF7 provided at peak point P11 is between the compression force CF1 provided at point P1 and compression force CF6 provided at peak point P10. FIG. 24 illustrates only a single curve 604 representing a single partially opened position of the valve head 504. Other partially opened positions are possible, each of which would provide a curve generally between the curve 600 of the fully open position and the curve 608 of the closed position.

The shock absorber 100 with the valve head assembly 500 may provide a rider of the bicycle 10 the ability to adjust an effective flow area between the main shock chamber 316 and the first fluid chamber 308a. As such, the damping profile of the shock absorber 100 can be adjusted by either installing a plunger 336, 436 having a profile corresponding with a desired damping profile and/or by closing, opening, or partially opening a valve head 504.

In the illustrated example, the head 508a of the fine adjuster 508 and the head 512a of the coarse adjuster 512 may be located in proximity to the connector portion 248 of the main shock body 200. In other examples, the fine adjuster 508 and/or the coarse adjuster 512 can be actuated by the rider at a distance from the main shock body 200. In the illustrated example, the fine adjuster 508 and coarse adjuster 512 are mechanically actuated by a user applying input torque to the heads 508a, 512a. As described above, the fine adjuster 508 and/or the coarse adjuster 512 may be actuated by other actuation mechanisms, which may include one or more electromechanically controlled actuators or the like.

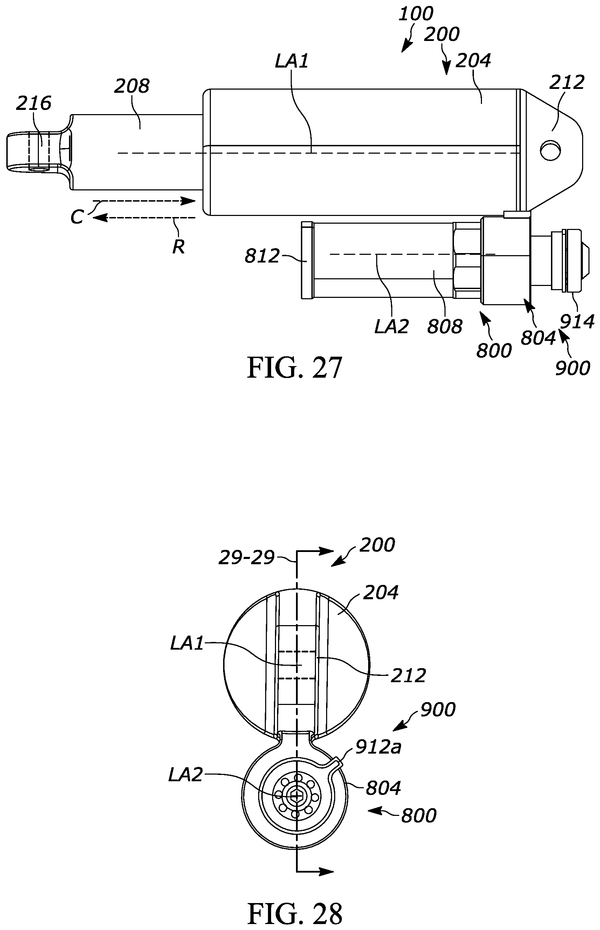

FIGS. 27-40 illustrate an alternate shock reservoir 800 including the above-described components of the shock reservoir 300 (with similar components in the 800 series of reference numerals), and an alternate valve head assembly 900 to adjustably control damping characteristics. The valve head assembly 900 may include one or more valves to control a flow of damping fluid into the shock reservoir 800. The valve head assembly 900 may include knobs, handles, or other structures (e.g., switches, threads, hex-connectors or the like) that may be activated to adjust the valve(s), and thus adjust a flow of damping fluid to control damping characteristics of the shock reservoir 800. The alternate shock reservoir 800 and valve head assembly 900 may be operable with the same or a different main shock body 200 to form the shock absorber 100, and may include like components and features of the shock reservoir 300.

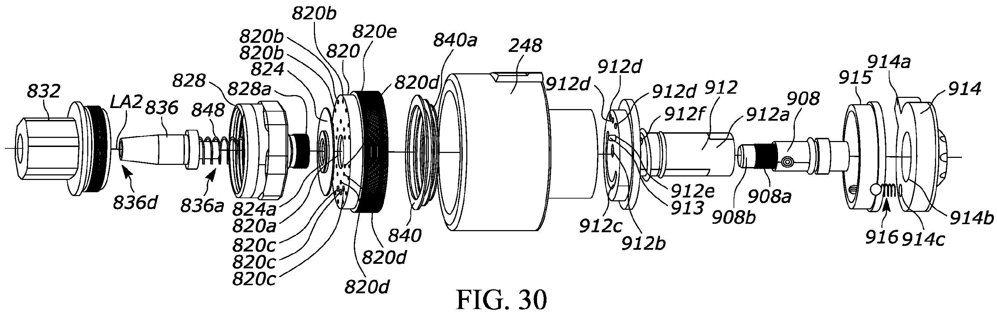

In the illustrated example, and with reference to FIG. 30, rather than a spring bore 336a (FIG. 8), the plunger 836 of the shock reservoir 800 includes a spring receiving protrusion 836a that opposes a tip end 836d and receives axial force by a plunger spring 848 that biases the plunger 836 away from a fitting 828 and toward a plunger receiver 832. The plunger receiver 832 is generally like the plunger receiver 332. As described above in detail regarding the plunger 336, the shape of the plunger 836 may be adjusted to achieve desired damping characteristics during a compression stroke of the shock reservoir 800.

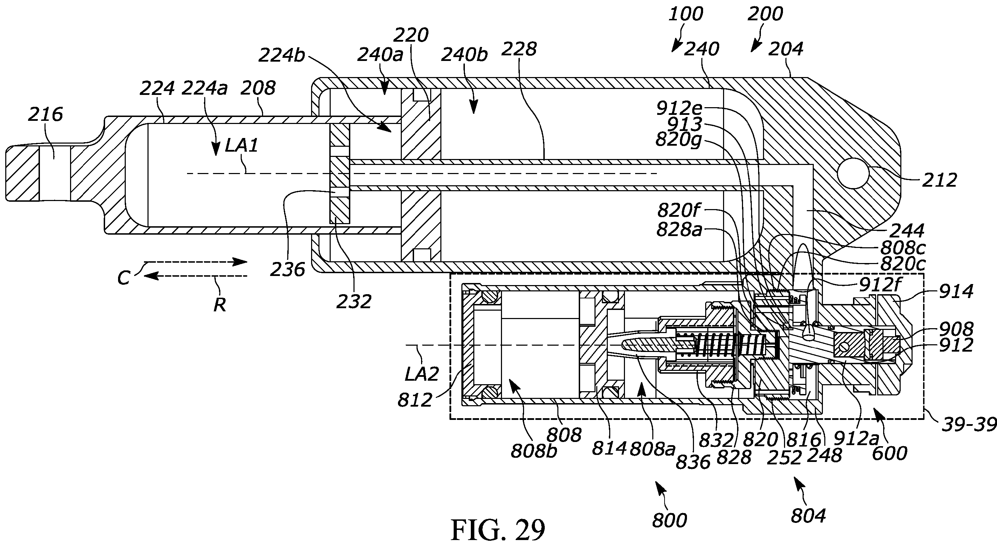

In some examples, the shock reservoir 800 may include components like the shock reservoir 300. For example, and with reference to FIG. 29, the shock reservoir 800 may include a cap assembly 804, a reservoir body 808, a base 812, and an internal floating piston 814 that separates the reservoir body 808 into a first fluid chamber 808a (located between the internal floating piston 814 and the connector portion 248) and a second fluid chamber 808b (located between the internal floating piston 814 and the base 812). Fluids include gas and liquids. Fluids may be compressible. In some examples, the first fluid chamber 808a may hold or receive liquid damping fluid such as damping oil. In some examples, the second fluid chamber 808b may hold or receive gas such as air or nitrogen. In some examples, the cap assembly 804 may control fluid communication between the main shock body 200 and the shock reservoir 800. As described in detail below, the valve assembly 900 may be movable relative to a cap 820 of the shock reservoir 800 to provide different amounts of effective cross-sectional areas for permitting fluid flow between the main shock body 200 and the first fluid chamber 808a.

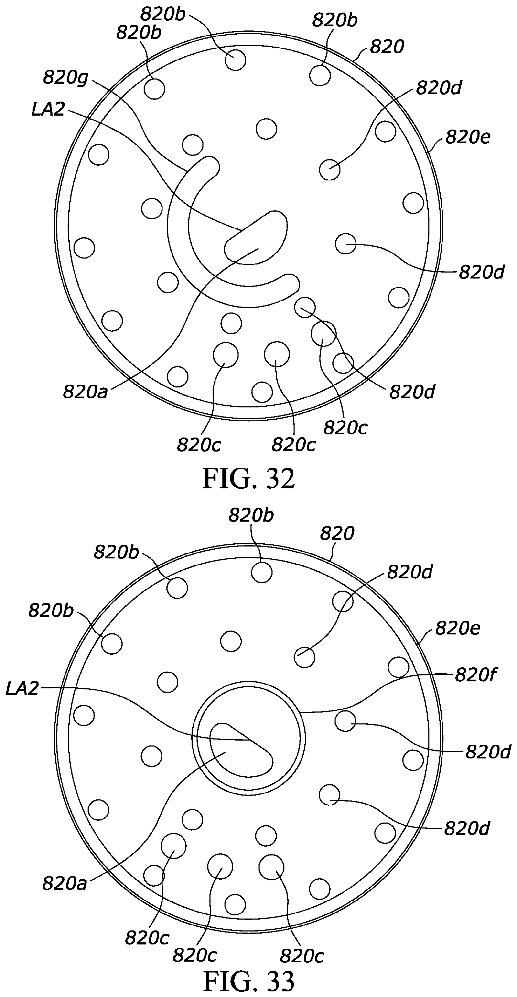

With reference to FIGS. 29-38, the shock reservoir 800 may include a cap 820 resembling the cap 320 of the shock reservoir 300. The cap 820 may include a central aperture 820a (FIGS. 32 and 33) in communication with a stem 828a of a fitting 828 (FIG. 30); a plurality of check valve apertures 820b (FIGS. 32 and 33) near a radial outer surface of the cap 820; a plurality of base valve adjustment apertures 820c (FIGS. 32 and 33) radially inboard of the check valve apertures 820b, and a plurality of inner apertures 820d (FIGS. 32 and 33) inboard of the base valve adjustment apertures 820c and outboard of the central aperture 820a. The check valve apertures 820b, the base valve adjustment apertures 820c, and the inner apertures 820d may each extend along the longitudinal axis LA2 through the cap 820. Other radial arrangements of the central aperture 820a, the check valve apertures 820b, the base valve adjustment apertures 820c, and the inner apertures 820d are possible. In the illustrated embodiment, there are three circularly shaped base valve adjustment apertures 820c. Other quantities and cross-sectional shapes of base valve adjustment apertures 820c are possible. The cap 820 further includes external threads 820e (FIGS. 32 and 33) capable of securing the cap 820 to internal threads 808c (FIG. 29) of the reservoir body 808. The cap 820 may also include internal threads 820f coupling the stem 828a to the cap 820 (FIG. 29).

With reference to FIG. 32, the central aperture 820a may generally be semi-circular in cross-sectional shape with respect to the longitudinal axis LA2, and may include rounded corners, although other examples may include other shapes. The cap 820 may further include a blind slot 820g. With reference to FIGS. 29 and 32, the blind slot 820g may be recessed from front face of the cap 820 in a direction along the longitudinal axis LA2 toward the fitting 828. The blind slot 820g may generally be semi-circular in shape about the longitudinal axis LA2, although other examples may include other shapes.

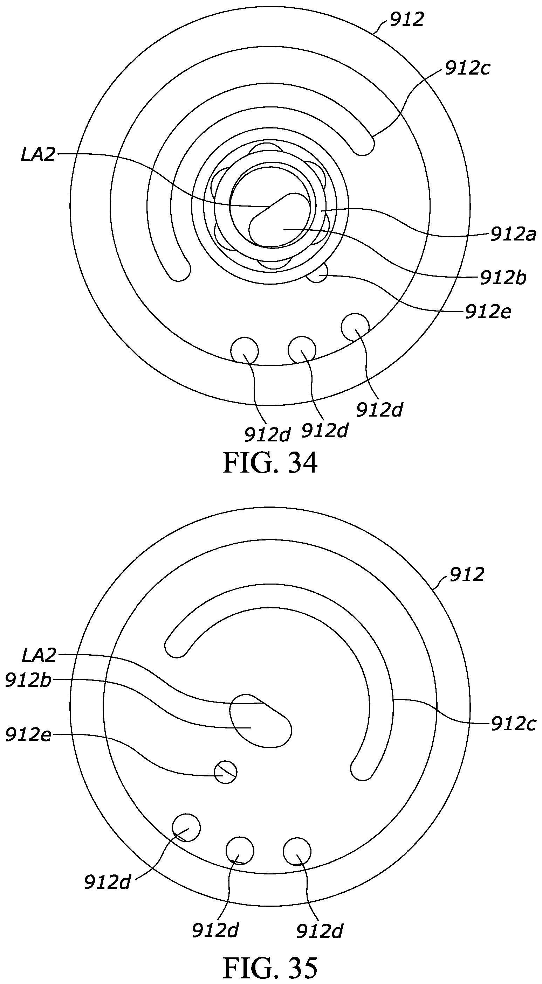

With reference to FIGS. 29-35, the valve head assembly 900 may include a fine adjuster 908 and a coarse adjuster 912. The coarse adjuster 912 may include a hollow stem 912a, a central aperture 912b, an elongated slot 912c, and a plurality of base valve adjustment apertures 912d. In the illustrated embodiment, there are three circular base valve adjustment apertures 912d. Other quantities and cross-sectional shapes of base valve adjustment apertures 912d are possible. With reference to FIGS. 34 and 35, the central aperture 912b may generally be semi-circular in cross-sectional shape with respect to the longitudinal axis LA2 and may include rounded corners. The shape of the central aperture 912b may differ or may be similar to the shape of the central aperture 820a of the cap 820. The elongated slot 912c may be curved about the longitudinal axis LA2. The elongated slot 912c may be positioned relative to the longitudinal axis LA2 and include a width generally corresponding in size with the inner apertures 820d.

The coarse adjuster 912 may further include a blind (or partially blind) recess 912e dimensioned to receive a pin 913 (FIG. 30). The blind recess 912e extends in a direction parallel to the longitudinal axis LA2, and is positioned relative to the longitudinal axis LA2 in correspondence with an end of the blind slot 820g of the cap 820. The pin 913, when the valve head assembly 900 is assembled, may be received in the blind slot 820g. The pin 913 serves to limit relative rotational movement of the coarse adjuster 912 relative to the cap 820. In the illustrated embodiment, the blind slot 820g extends about 180 degrees of the cap 820 about the longitudinal axis LA2, where longitudinal ends of the blind slot 820g are configured to limit rotational movement of the coarse adjuster 912 within a corresponding range of motion. In other embodiments, the blind slot 820g may extend about different rotational amounts (e.g., about 90 degrees of the cap 820, about 270 degrees of the cap 820, about any amount from between 75 degrees and 285 degrees of the cap 820, etc.) about the longitudinal axis LA2 to provide desired limits to rotational movement of the coarse adjuster 912.

The stem 912a of the coarse adjuster 912 may include at least one aperture 912f (FIGS. 29, 30, and 39). The aperture 912f extends at least partially in a radial direction perpendicular to the longitudinal axis LA2 between radial inner and outer surfaces of the stem 912a. In the illustrated embodiment, the stem 912a includes two diametrically opposed apertures 912f. In other embodiments, any number of apertures 912f may be present. The aperture 912f are dimensioned and configured to receive fluid from a main shock chamber 816 (FIG. 29) and the main shock passageway 244, and to pass fluid through the stem 912a between the central aperture 912b of the coarse adjuster 912 and the central aperture 820a of the cap 820.

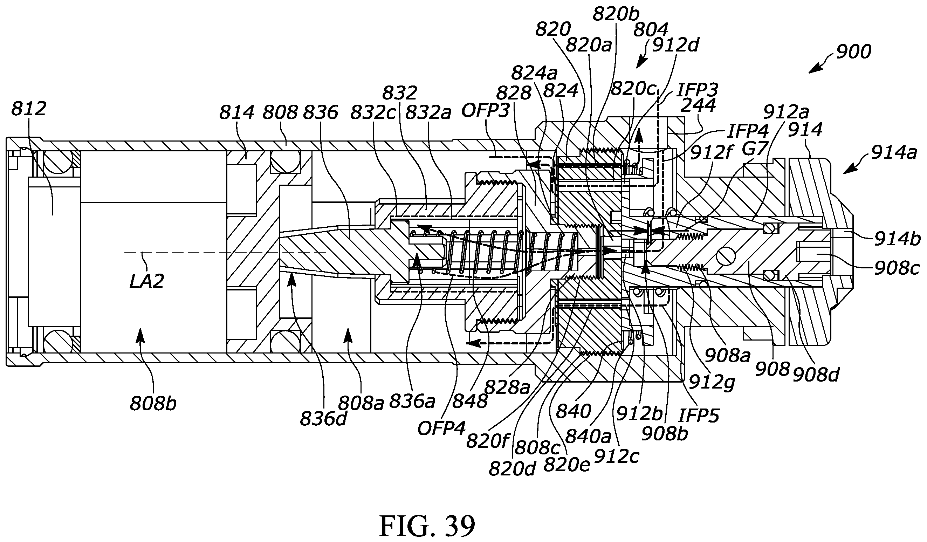

With reference to FIG. 39, the stem 912a may include internal threads 912g. The internal threads 912g are positioned, with the frame of reference of FIG. 39, to the right of the aperture 912f. The internal threads 912g are engaged by external threads 908a of the fine adjuster 908. The fine adjuster 908 may include a tip end 908b and an opposite base end 908c defined by a hexagonal connector. The external threads 908a may be located between the tip end 908b and the base end 908c. The base end 908c may be engageable by a hexagonal tool (e.g., an Allen key) of size corresponding to the hexagonal connector.

Actuation of the base end 908c by rotating the hexagonal tool while in the base end 908c or otherwise simply rotating the base end 908c may cause rotation of the fine adjuster 908 about the longitudinal axis LA2. With continued reference to FIG. 39, due to engagement between the external threads 908a and the internal threads 912g, rotation of the fine adjuster 908 about the longitudinal axis LA2 may cause the tip end 908b to axially translate along the longitudinal axis LA2. The tip end 908b may be movable to adjust an effective flow area afforded by a gap G7 between the aperture 912f and the central aperture 912b.

In some embodiments, the fine adjuster 908 may be capable of entirely taking up the gap G7 to effectively close off the aperture 912f and the central aperture 912b. In other embodiments, a most closed (e.g., advanced, to the left along longitudinal axis LA2 as viewed in FIG. 39) position of the fine adjuster 908 may provide a nonzero gap G7 between the aperture 912f and the central aperture 912b. The gap G7 may be an axial gap extending in parallel with the longitudinal axis LA2, whereby fluid flow between the aperture 912f and the central aperture 912b is choked by the gap G7. The gap G7 may generally be representative of a location of most limited cross-sectional flow area between the aperture 912f and the central aperture 912b. The most limiting (e.g., smallest) cross-sectional flow area (e.g., orientation of gap G7) between the tip end 908b, the aperture 912f, and the central aperture 912b may differ in other embodiments and/or positions of the fine adjuster 908.

With continued reference to FIG. 39, the stem 912a of the coarse adjuster 912 may be coupled to a handle 914. The handle 914 may include a knob 914a extending radially outwardly from the longitudinal axis LA2 and a central aperture 914b. The handle 914 may be press fit or otherwise mechanically coupled to the coarse adjuster 912 such that rotation of the handle 914 by actuation of the knob 914a causes rotation of the coarse adjuster 912 about the longitudinal axis LA2. The central aperture 914b may be sized to permit axial movement of the fine adjuster 908 relative into and out of the stem 912a, and to inhibit ejection of the fine adjuster 908 from the handle 914. The central aperture 914b may define a stepped inner surface whereby the stepped surface is capable of contacting a shoulder 908d of the fine adjuster 908 to inhibit ejection of the fine adjuster 908 from the handle 914. The central aperture 914b may also be sized to permit the hexagonal or otherwise-shaped tool (e.g., an Allen key) to pass through to enter and/or engage the base end 908c of the fine adjuster 908.

The adjustability of the gap G7 may permit the valve head assembly 900 to adjust compressive damping force in a similar manner to the shock reservoir 300. For example, and with reference to FIG. 24 and its illustration of the adjustability of gap G6 of shock reservoir 300, the fine adjuster 908 may similarly be fully open (e.g., where the tip end 908b is retracted from the aperture 912f), partially open (e.g., where tip end 908b allows for a gap G7 smaller than a size of the aperture 912f), or closed (e.g., where tip end 908b takes up gap G7) to provide desired compressive damping force - compression stroke plot of a rider. As described above regarding FIG. 24, various partially opened positions are possible. Since the central aperture 914b of the handle is sized to permit actuation of the base end 908c without removal of the handle 914, the fine adjuster 908 can be actuated to provide desired damping without disassembly of the valve head assembly 900.

In some examples, the valve head assembly 900 is capable of being adjusted to various statuses each permitting passage of fluid between the main shock chamber 816 and the first fluid chamber 808a through different chambers and/or with different effective flow areas.

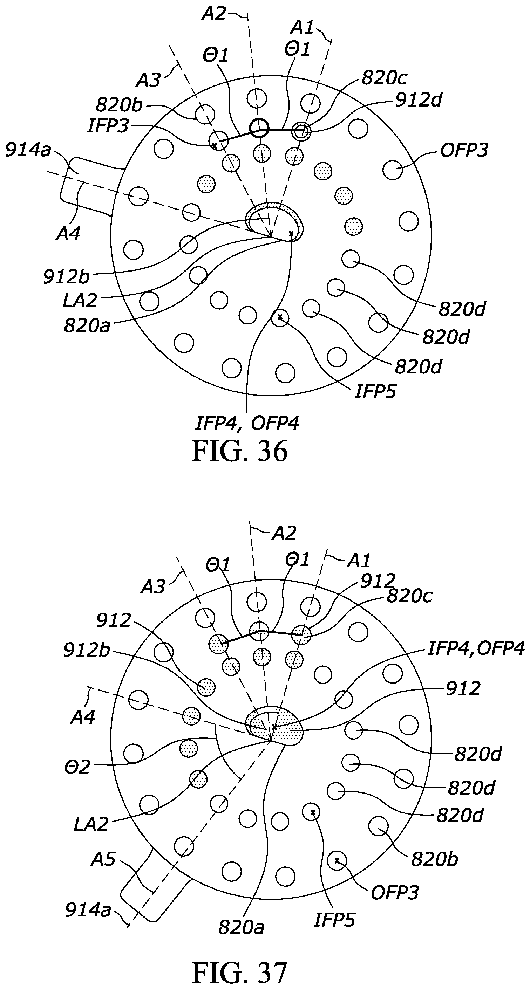

For example, FIG. 36 represents an open condition of the valve head assembly 900 whereby the central aperture 912b of the coarse adjuster 912 is aligned with the central aperture 820a of the cap 820. In the position illustrated in FIG. 36, the base valve adjustment apertures 820c are aligned with axes A1, A2, A3 that pass through the longitudinal axis LA2. The axes A1, A2, A3 are separated by increment angles Θ1. In the illustrated embodiment, the increment angles Θ1 are the same between each pair of axes A1/A2, and A2/A3. In other embodiments, the increment angles Θ1 may differ, and the base valve adjustment apertures 820c may be spaced any desired amount circumferentially about the longitudinal axis A2. In this position, the knob 914a is oriented along axis A4 that also passes through longitudinal axis LA2. Also, in this position, each of the base valve adjustment apertures 912d are aligned circumferentially with the base valve adjustment apertures 820c.

The knob 914a is rotatable about the longitudinal axis LA2 to orient the coarse adjuster 912 at different partially open conditions whereby only a portion of the central aperture 912b aligns with the central aperture 820a. For example, the knob 914a may be rotatable in a counter-clockwise direction in correspondence with increment angles Θ1 or any other increment angle. The knob 914a may be rotatable by steps that differ from the spacing of the increment angles Θ1. For example, the steps may be approximately 30 degree steps, and the increment angles Θ1 may measure approximately 22 degrees. In other embodiments, the steps may be the same as the increment angles Θ1. The steps may be between 5 degrees and 45 degrees. The steps may be between 10 degrees and 35 degrees. The increment angles Θ1 may be between 5 and 45 degrees. The increment angles Θ1 may be between 10 and 35 degrees. With the increment angles Θ1 differing from the rotational steps of the knob 914a, the base valve adjustment apertures 820c and base valve adjustment apertures 912d may not be perfectly aligned with one another once the knob 914a rotates the coarse adjuster 912 by one step.

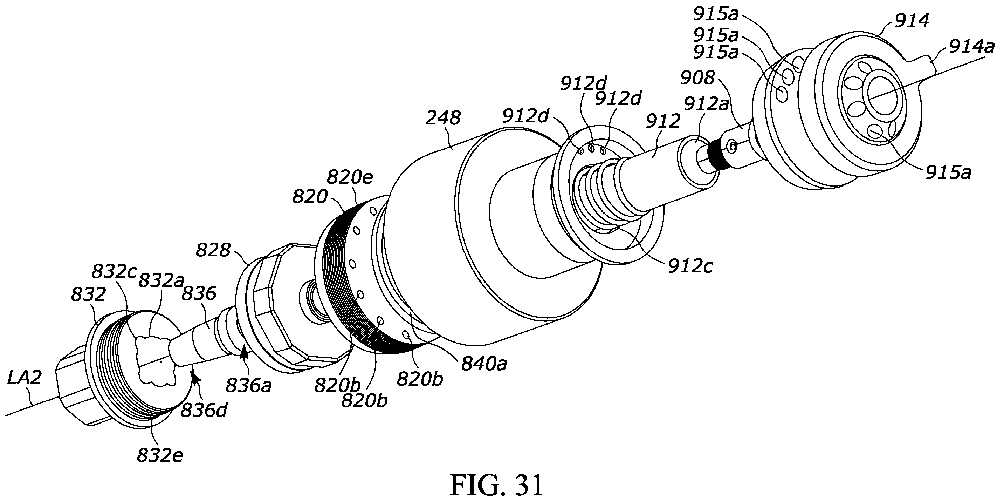

As illustrated in FIGS. 30 and 31, in some examples the knob 914a may be rotatable relative to a handle connector 915. The handle connector 915 may be secured to the connector portion 248 and may include detents 915a. The detents 915a may be recessed into the handle connector 915 and may be configured to cooperate with a spring biased ball detent 916 located in a bore 914c of the handle 914. The detents 915a may retain the spring biased ball detent 916 to hold the handle 914 and thus the coarse adjuster 912 in a desired position. In the illustrated embodiment, four detents 915a are present. Three of the detents 915a are positioned at an angular step about the longitudinal axis LA2 of approximately 30 degrees, and the fourth detent 915a is diametrically opposed from the other three detents 915a such that to reach the fourth detent 915a, a one hundred and eighty degree turn of the handle 914 about the longitudinal axis LA2 is required. Any number of detents 915a or other mechanical retaining mechanism may be positioned circumferentially about the longitudinal axis LA2 for securing relative position of the handle 914 and thus the coarse adjuster 912.

The fully open position of FIG. 36 may provide a maximum effective flow area of the valve head assembly 900. In this position, and as illustrated in FIG. 39, damping fluid passing from the main shock passageway 244 into the first fluid chamber 808a may pass along a first inbound flow path IFP3, a second inbound flow path IFP4, and a third inbound flow path IFP5. The first inbound flow path IFP3 passes through each of the base valve adjustment apertures 912d, each of the base valve adjustment apertures 820c, and deflects a cap shim 824 prior to entering the first fluid chamber 808a. Presuming the fine adjuster 908 is at least partially opened, the second inbound flow path IFP4 passes through the aperture 912f, the gap G7, the central aperture 820a, the fitting 828, and conditionally enters the first fluid chamber 808a when the plunger 836 is retracted from the plunger receiver 832.

FIG. 39 illustrates the valve head assembly 900 in a mid-stroke position where the plunger 836 is seated against the plunger receiver 832, and the second inbound flow path IFP4 is choked by the closure of the plunger 836. In other positions (e.g., top out) of the valve head assembly 900 and as described above with regard to the plunger 336 and the plunger receiver 332, a gap G1 (see FIG. 9A) may be present between the plunger 836 and the plunger receiver 832, and the second inbound flow path IFP4 can pass fluid into the first fluid chamber 808a. The third inbound flow path IFP5 passes through the elongated slot 912c, a subset of the inner apertures 820d, and deflects the cap shim 824 prior to entering the first fluid chamber 808a.

In the fully open position (FIG. 36), the valve head assembly 900 is capable of returning damping fluid from the first fluid chamber 808a to the main shock passageway 244 via either or both of a first outbound flow path OFP3 and a second outbound flow path OFP4. The first outbound flow path OFP3 extends through the plurality of check valve apertures 820b and deflects a check shim 840 and check shim spring 840a prior to entering the main shock passageway 244. Depending on the relative position of the plunger 836 and the plunger receiver 832 and the opened/closed/partially open condition of the fine adjuster 908, the second outbound flow path OFP4 may or may not be present. When the fine adjuster 908 is at least partially opened, and the plunger 836 is not seated against the plunger receiver 832, fluid from the first fluid chamber 808a may pass between the plunger 836 and the plunger receiver 832, through the fitting 828, the central aperture 820a, the central aperture 912b, the gap G7, and the aperture 912f prior to entering the main shock passageway 244.

With each closing rotation step (e.g., in a counter-clockwise rotational direction as viewed in FIG. 36), the effective flow area through the valve head assembly 900 may be diminished due to at least partial closure of one or more of the base valve adjustment apertures 912d relative to the base valve adjustment apertures 820c and/or partial closure of the central aperture 912b relative to the central aperture 820a.

For example, FIG. 37 represents a partially open condition of the valve head assembly 900 whereby the central aperture 912b of the coarse adjuster 912 is partially aligned with the central aperture 820a of the cap 820. In FIG. 37, the knob 914a is oriented along axis A5 at an angle Θ2 relative to the axis A4. In the illustrated embodiment, the angle Θ2 is approximately 90 degrees. The angle Θ2 may be between 40 degrees and 140 degrees. In other embodiments, the angle Θ2 may be greater than 90 degrees.

In FIG. 37, only approximately half (e.g., 50%) of the area of the central aperture 912b is axially aligned with the central aperture 820a. In FIG. 37, the coarse adjuster 912 blocks each of the base valve adjustment apertures 820c. In other words, the FIG. 37 partially open condition closes off the first inbound flow path IFP3 through each of the base valve adjustment apertures 912d and each of the base valve adjustment apertures 820c. The partially open condition of FIG. 37 provides a second inbound flow path IFP4 that is approximately half (e.g., approximately 50%) closed in comparison with the open condition of FIG. 36. The third inbound flow path IFP5 passes through the elongated slot 912c and a different subset of the inner apertures 820d, but is otherwise unchanged in providing differing size effective flow area in comparison with the third inbound flow path IFP5 of the open condition since the inner apertures 820d are generally evenly circumferentially spaced about the longitudinal axis LA2 and are each sized with similar cross-sectional shapes (e.g., circles) and areas. There are also additional partially open conditions whereby one or more pairs of the base valve adjustment apertures 820c and base valve adjustment apertures 912d are aligned with one another such that any number of (e.g., one, two, or three in the illustrated example, or more than three in other examples) pairs of the base valve adjustment apertures 820c and the base valve adjustment apertures 912d contribute to an effective flow area of the first inbound flow path IFP3.

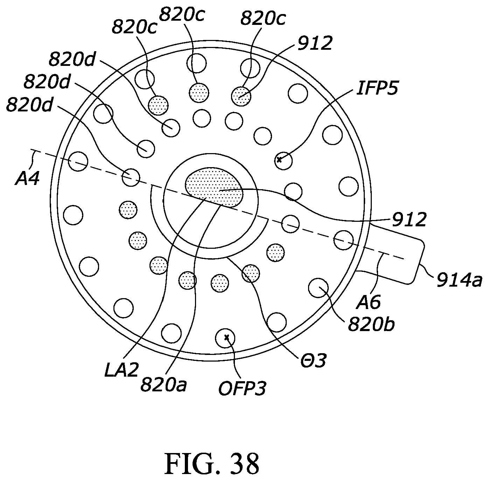

Upon further counter-clockwise rotation of the knob 914a about longitudinal axis LA2, a center-closed position of the valve head assembly 900, as illustrated in FIG. 38, may be reached. In the illustrated embodiment, the knob 914a is aligned with the axis A6 as separated by angle Θ3 from axis A4 in comparison with the fully open position of FIG. 36. The knob 914a may be required to be rotated about any suitable angle Θ3 (e.g., 90 degrees, 270 degrees, approximately 360 degrees, etc.) between the open position and the center-closed position. In the center-closed position, the central aperture 912b of the coarse adjuster 912 may no longer be aligned with the central aperture 820a of the cap 820. In this center-closed position, the second inbound flow path IFP4 and the second outbound flow path OFP4 may be entirely closed, a different subset of the inner apertures 820d may provide the third inbound flow path IFP5, and the check valve apertures 820b may continue to provide the first outbound flow path OFP3.

FIG. 39 illustrates a cross-sectional view of the alternate shock reservoir 800 including the alternate valve head assembly 900. The cross-section is taken through one of the base valve adjustment apertures 820c, one of the base valve adjustment apertures 912d, one of the apertures 912f, the fine adjuster 908, the central aperture 912b, the central aperture 820a, one of the inner apertures 820d, the elongated slot 912c, and one of the check valve apertures 820b. In accordance with the description above, the fine adjuster 908 may axially move upon rotation of the base end 908c, the coarse adjuster 912 may radially move upon rotation of the handle 914, and the plunger 836 may axially move depending on a stroke condition of the shock absorber 100 as a whole (see FIGS. 9A, 11A, 12A).

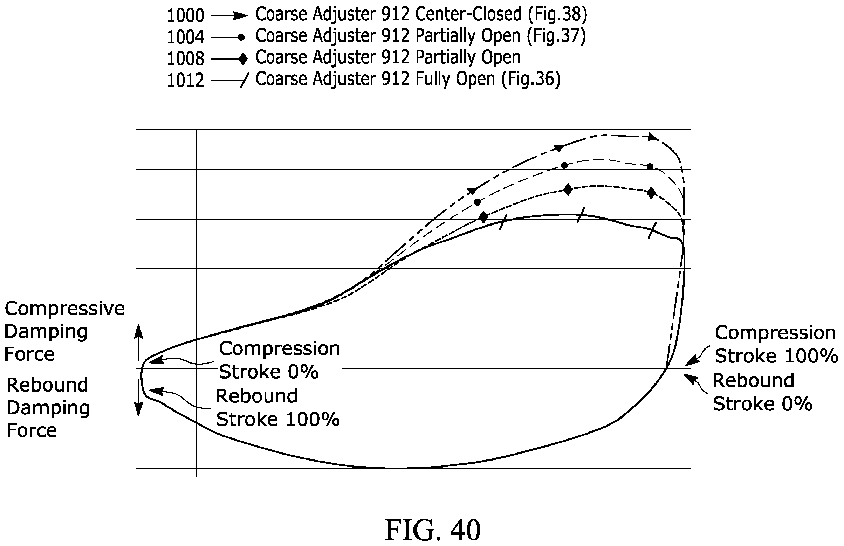

With reference to FIG. 40, in some examples, it may be beneficial to adjust the damping profile of the shock absorber 100 by actuation of the fine adjuster 908 and/or the coarse adjuster 912 to move the valve head assembly 900 between the aforementioned opened, partially opened, and center-closed positions before or while riding the bicycle 10 in conditions where high compressive damping force is desired near the end of the compression stroke (e.g., greater than 50% compression stroke). The end of the compression stroke (e.g., greater than 50% compression stroke) may be reached when high amounts of force compress the shock absorber 100. These types of impacts may occur frequently when riding or anticipating to ride a course with high quantities or size jumps or on a descending surface S2 (i.e., descent) with high quantities or size of bumps B. High compressive damping forces near the end of the compression stroke may be desired to counteract the compressive force CF 1 of the rear frame 22 compressing the shock absorber 100. By adjusting the coarse adjuster 912, the shock absorber 100 may be reconfigured to provide a desired compressive damping curve near the end of the compression stroke. The shock absorber 100 may also provide sufficient compliance to permit the shock absorber to deflect when encountering small bumps B. Lesser absolute compressive damping force (e.g., y-axis of curves 1000, 1004, 1008, 1012 in FIG. 40) and the generally linear profile of curves 1000, 1004, 1008, 1012 near the beginning of the compression stroke (e.g., lesser than 50% compression stroke) may allow the shock absorber 100 to dissipate low quantities of energy when riding on relatively flat, level surface S1 (e.g., flat road), level surfaces S1 or descending surfaces S2 with small bumps B, and/or an ascending surface S3 (i.e., a climb). Less dissipation of energy by the shock absorber 100 may allow the input power from the rider to be maintained to propel the bicycle 10 and to not be unnecessarily dissipated when encountering a small bump. Less unnecessary dissipation of input power may allow the rider and bicycle 10 to obtain and maintain high speeds to traverse the descending surface S2 (or other surface S1) which may be beneficial in racing or when attempting to maintain or increase speed in advance of a jump.

Adjustment of the valve head assembly 900 (e.g., from fully open to partially open, partially open to another less partially open condition, or a partially open condition to the center-closed condition) may provide a higher amount of damping force (e.g., more stiffness) near the end of the compression stroke (e.g., greater than 50% compression stroke) to provide increased compressive damping force upon jump landings or drops or when encountering large bumps B (e.g., on a descending surface S2).. The curves 1000, 1004, 1012 in FIG. 40 represent the conditions illustrated and described above with regard to FIGS. 36-38. Curve 1008 represents another partially open condition whereby the coarse adjuster 912 is stepped with at least one of the base valve adjustment apertures 820c being aligned with base valve adjustment apertures 912d, and the central aperture 912b of the coarse adjuster 912 being partially open to the central aperture 820a of the cap 820.

Each of the curves 1000, 1004, 1008, 1012 represents a condition where the fine adjuster 908 is in the same open/partially open/closed position. As described above regarding FIG. 24, the fine adjuster 908 may be moved to provide desired amounts of pedaling support near the start of the compression stroke (e.g., less than 50%).

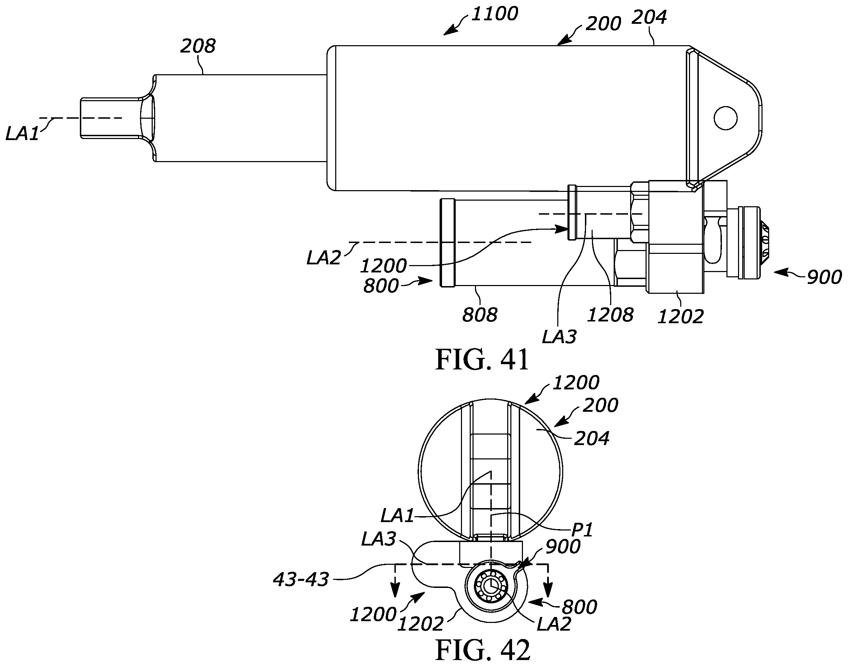

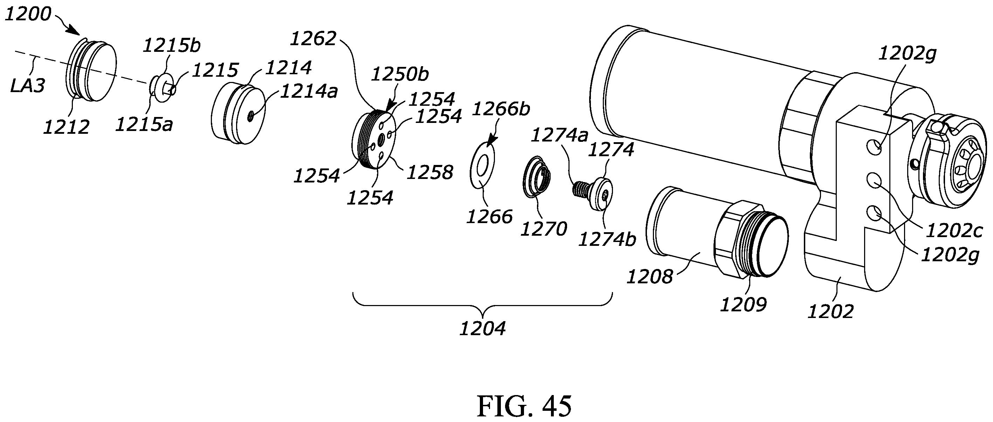

FIGS. 41-50 illustrate a shock absorber 1100 and components thereof similar to the shock absorber 100 including the main shock body 200 and the shock reservoir 800 and further including a fluid reservoir 1200 (i.e., a thermal compensation fluid reservoir) fluidly coupled to main shock body 200 and the shock reservoir 800. Operation of the shock reservoir 800 of the shock absorber 1100 of FIGS. 41-50 may be similar to that described above with regard to the shock absorber 100 of FIGS. 29-40, and elements of reservoir 800 of the shock absorber 1100 of FIGS. 41-50 annotated with the same reference numerals used for shock absorber 100 of FIGS. 29-40 may have similar or identical operation.

Where an internal floating piston shock absorber does not provide position sensitive damping, achieving a desired damping may depend less on accurately positioning the internal floating piston during assembly than where it does provide position sensitive damping. For example, after assembly is complete, the internal floating piston itself may move to adjust to any assembly inaccuracies in positioning the internal floating piston and such adjustment may occur without significant changes to the internal floating piston's underlying compression damping profile. In addition, where an internal floating piston shock absorber does not provide position sensitive damping, its internal floating piston may be free to expand or contract with the damping fluid to compensate for expansion or contraction of the damping fluid during temperature changes.

However, because the shock absorber 100 provides position sensitive damping for which the desired damping force may depend on, for example, the position of the internal floating piston 314 and position and profile of the plunger 336, assembly position of the internal floating piston 314 and/or thermal contraction or expansion of the damping fluid may alter performance of the shock absorber 100. For example, thermal expansion due to as little as 20 degrees Fahrenheit change in ambient temperature or shock temperature may significantly alter the compression damping profile of the shock absorber 100.

As described in detail below, the shock absorber 1100 of FIGS. 41-50 provides a system that is capable of at least partially compensating for expansion and contraction of the damping fluid. Additionally, the shock absorber 1100 is position sensitive, and can be charged or recharged with the internal floating piston 814 thereof abutting the plunger receiver 832. Regarding the shock absorber 100 illustrated in FIGS. 27-40, during assembly thereof, the internal floating piston 814 is carefully positioned in the shock reservoir 800 between +/- 2mm from a target position functional to provide the desired damping characteristics. In assembly of the shock absorber 1100, the plunger receiver 832 functions as a physical barrier to provide a home position in which the internal floating position 814 contacts the plunger receiver 832 to locate the internal floating piston 814 at a known position to provide a high reliability target position at which the shock absorber 1100 can be filled with damping fluid. This physical barrier may promote a tighter tolerance (e.g., smaller than +/- 2 mm) of the target position and improve correspondence between the actual damping profile of the system and the desired damping profile (e.g., in comparison with the shock absorber 100).

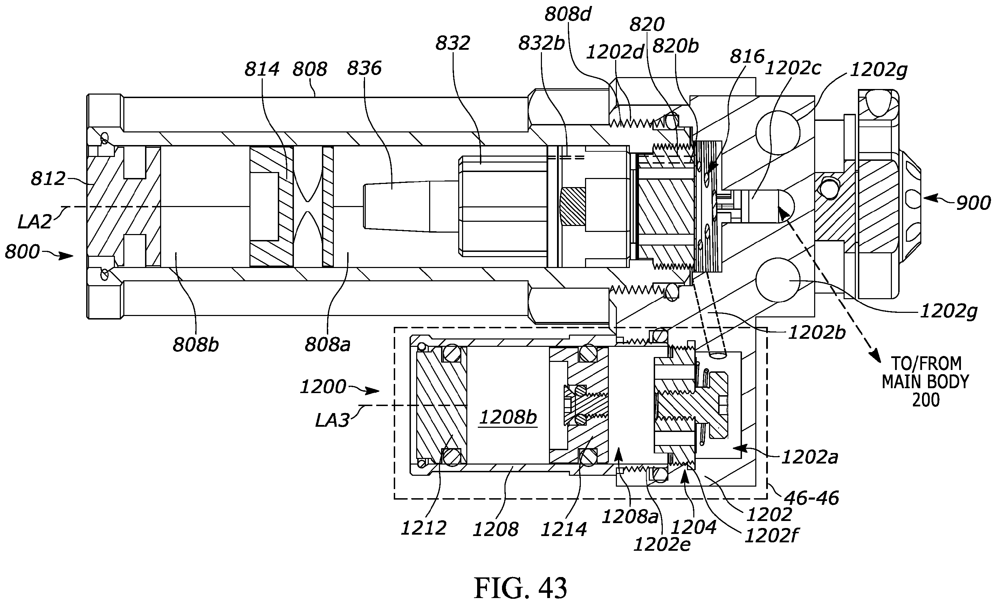

The shock absorber 1100 of FIGS. 41-50 includes a mounting block 1202 physically coupling both the shock reservoir 800 and the fluid reservoir 1200 to the main shock body 200. With reference to FIG. 43, the mounting block 1202 defines a main compensation chamber 1202a, a first passageway 1202b between the fluid reservoir 1200 and the main shock chamber 816 of the shock reservoir 800, and a second passageway 1202c in fluid communication between the main shock chamber 816 and the main shock body 200. The second passageway 1202c is coupled to the main shock passageway 244. As explained in detail below, the fluid reservoir 1200 is configured to pass damping fluid (e.g., oil) through at least the main compensation chamber 1202a and the passageway 1202b and to/from the fluid reservoir 1200 upon expansion or contraction of the damping fluid. The fluid reservoir 1200 functions to ensure that the position sensitive damping provided by the shock reservoir 800, which is based on the position of the internal floating piston 814 and the plunger 836, is substantially unaltered by expansion or contraction of the damping fluid, as described below in more detail. As a result, the desired compression damping force along the compression stroke (i.e., the desired compression damping profile) is substantially retained even after the damping fluid is expanded or contracted.

For example, in a situation where a temperature (and/or pressure) of the damping fluid increases for any reason, the damping fluid may expand in volume from its original volume, and damping fluid may flow from the main shock chamber 816 to the fluid reservoir 1200 through the passageway 1202b. Conversely, in a situation where a temperature (and/or pressure) of the damping fluid decreases for any reason, the damping fluid may contract in volume from its original volume, and the damping fluid may exit the fluid reservoir 1200 through the passageway 1202b and enter the main shock chamber 816. Exemplary situations in which the damping fluid may expand or contract include but are not limited to a change in ambient temperature of the shock absorber 1100, a change in altitude of the shock absorber 1100, temperature increase due to rapid compression and rebound of the main rod 208 into the main casing 204, and the like.

FIG. 42 illustrates an end view of the shock absorber 1100, which shows the relative physical positions of the main shock body 200, the shock reservoir 800, and the fluid reservoir 1200. The main shock body 200 is oriented along a longitudinal axis LA1, the shock reservoir 800 is oriented along a longitudinal axis LA2, and the fluid reservoir 1200 is oriented along a longitudinal axis LA3. The fluid reservoir 1200 is generally cylindrical in shape about the longitudinal axis LA3. Each of the axes LA1, LA2, LA3 are substantially parallel to one another in the illustrated embodiment and are defined by the movement of the respective pistons 220, 314, 814. However, in other embodiments, one or more of the axes LA1, LA2, LA3 may be non-parallel with the other axes LA1, LA2, LA3. The longitudinal axis LA3 is offset from a plane P1 that intersects the axes LA1, LA2. As a result, the shock absorber 1100 is arranged with the fluid reservoir 1200 laterally offset from the plane P1 bisecting both the shock reservoir 800 and the main shock body 200. In other embodiments, a portion of the fluid reservoir 1200 may be laterally aligned with the plane P1. Further, in other embodiments, the fluid reservoir 1200 may be positioned physically between the shock reservoir 800 and the main shock body 200 with the longitudinal axis LA3 located on the plane P1 between the longitudinal axes LA1, LA2.

The fluid reservoir 1200 may be dimensioned smaller in size than the shock reservoir 800, and the shock reservoir 800 may be dimensioned smaller in size than the main shock body 200. This arrangement may reduce the profile of the shock absorber 1100 while providing interior volumes necessary to provide the desired compression and rebound damping profile as dependent on positions of the internal floating piston 814 and the plunger 836. The illustrated fluid reservoir 1200 defines an outer diameter perpendicular to the longitudinal axis LA3 of approximately 60% of an outer diameter of the shock reservoir 800 perpendicular to the longitudinal axis LA2. The illustrated shock reservoir 800 outer diameter is approximately equivalent to an outer diameter of the main rod 208 but is approximately 60% of an outer diameter of the main casing 204.

FIG. 43 illustrates threads 1202d, 1202e, 1202f of the mounting block 1202 configured to secure the shock reservoir 800 and fluid reservoir 1200 to the mounting block 1202. In other words, the mounting block 1202 is a common mounting block connecting both the shock reservoir 800 and the fluid reservoir 1200 to one another and to the main shock body 200). The threads 1202d are engageable with external threads 808d of the reservoir body 808. The threads 1202e are engageable with external threads 1209 of a reservoir body 1208. The mounting block 1202 further includes mounting holes 1202g capable of receiving fasteners (not shown) to physically couple the mounting block 1202 to the main shock body 200. The mounting block 1202 may be physically coupled to the main shock body 200, shock reservoir 800, and fluid reservoir 1200 via different mechanisms.

In the illustrated embodiment, the main compensation chamber 1202a is formed at least in part by the mounting block 1202. However, in other embodiments, the main compensation chamber 1202a can be defined by a structure other than the mounting block 1202.

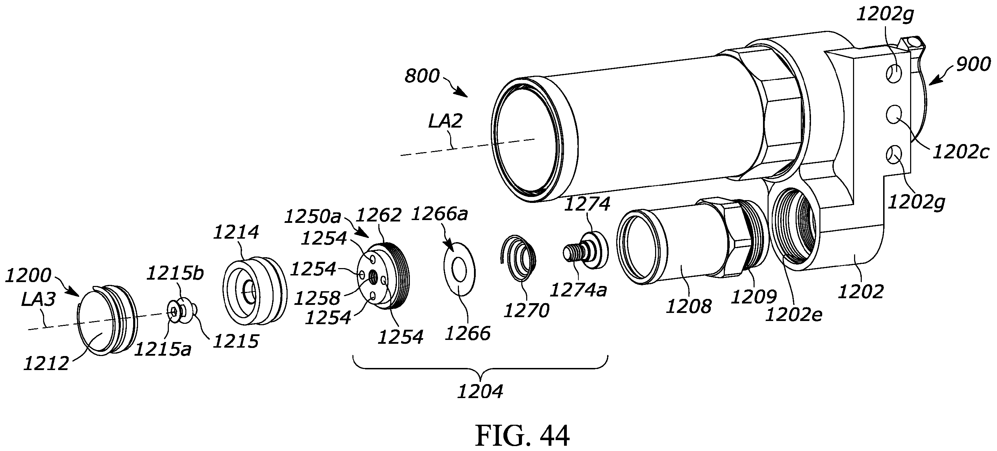

FIGS. 44-46 illustrate components and arrangement of the fluid reservoir 1200 itself. The fluid reservoir 1200 includes the reservoir body 1208, a check valve 1204, a reservoir internal floating piston 1214 (i.e., reservoir IFP 1214), and a base 1212. The base 1212, reservoir body 1208, check valve 1204, and reservoir IFP 1214 cooperatively define a third fluid chamber 1208a and a fourth fluid chamber 1208b.

In the illustrated embodiment, the reservoir IFP 1214 includes a threaded central bore 1214a which is engaged by a fastener 1215 during assembly of the fluid reservoir 1200. The fastener 1215 may be removed to introduce damping fluid through the threaded central bore 1214a and into the third fluid chamber 1208a and re-attached once damping fluid is introduced. The fastener 1215 may include a drive head 1215a with desired cross-sectional geometry (e.g., regular, Phillips, hexagonal etc.) about the longitudinal axis LA3 to allow a tool (e.g., screwdriver, Allen key) to engage the fastener 1215. Upon tightening the fastener 1215, the fastener 1215 presses against a seal 1215b and the reservoir IFP 1214 itself. The reservoir IFP 1214 and seal 1215b separate the third fluid chamber 1208a and fourth fluid chamber 1208b from one another. The base 1212 may include or be couplable with a fill port (not shown) capable of engaging a fitting (e.g., a Schrader valve fitting, not shown) to supply pressurized fluid (e.g., air or another gas) to the fourth fluid chamber 1208b after the fastener 1215 is secured.

The illustrated check valve 1204 is positioned within the mounting block 1202 between the main compensation chamber 1202a and the third fluid chamber 1208a. In other embodiments, the check valve 1204 may be otherwise positioned between the main shock body 200 or shock reservoir 800 and the third fluid chamber 1208a. For example, the check valve 1204 may be positioned outside the mounting block 1202 but within the reservoir body 1208.

The check valve 1204 includes a check valve body 1250, a valve element 1266, a spring 1270, and a bolt 1274. The check valve body 1250 defines a plurality of check valve passageways 1254 therethrough from a first side 1250a of the check valve body 1250 to an opposite second side 1250b of the check valve body 1250. The first side 1250a faces the third fluid chamber 1208a, and the second side 1250b faces the main compensation chamber 1202a (away from the third fluid chamber 1208a). In the illustrated embodiment, four passageways 1254 are arranged circumferentially about the longitudinal axis LA3, with each passageway 1254 extending parallel to the longitudinal axis LA3. Other embodiments may have more or fewer passageways 1254, any of which may be oriented in different non-parallel orientations relative to the longitudinal axis LA3. The valve body 1250 includes a threaded central passageway 1258 capable of being engaged by threads 1274a of the bolt 1274. The valve body 1250 also includes exterior threads 1262 that engage the threads 1202f of the mounting block 1202 to secure the position of the check valve body 1250 to the mounting block 1202. In other embodiments, the position of the check valve body 1250 may be secured in a different manner. The bolt 1274 further includes a drive head 1274b with desired cross-sectional geometry about longitudinal axis LA3 to allow a tool (e.g., screwdriver, Allen key, etc.) to engage the bolt 1274 and tighten the threads 1274a onto the threaded central passageway 1258.

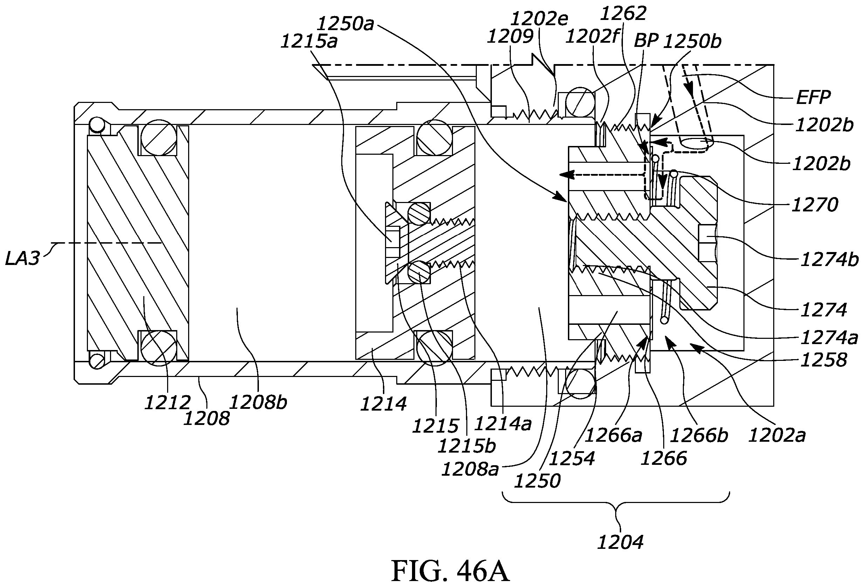

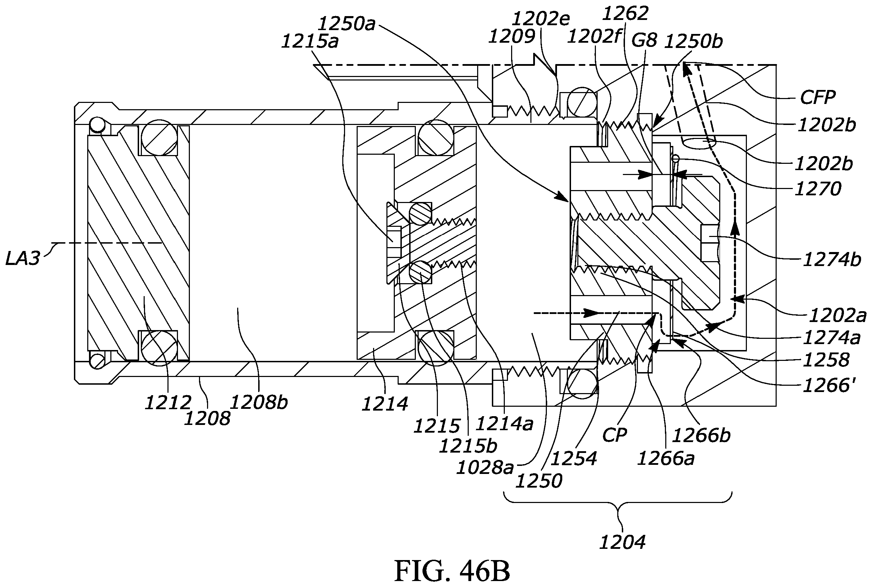

The valve element 1266 and spring 1270 are positioned between the valve body 1250 and the drive head 1274b, with the spring 1270 biasing a first side 1266a of the valve element 1266 to a seated position in contact with the second side 1250b of the check valve body 1250. The first side 1266a faces the third fluid chamber 1208a, and the valve element 1266 defines an opposite second side 1266b that faces away from the third fluid chamber 1208a. The valve element 1266 is movable relative to the second side 1250b of the check valve body 1250 between a seated position (FIG. 46A) in contact with the second side 1250b and an unseated position (FIG. 46B) separated from the second side 1250b. The spring 1270 biases the valve element 1266 to its seated position.

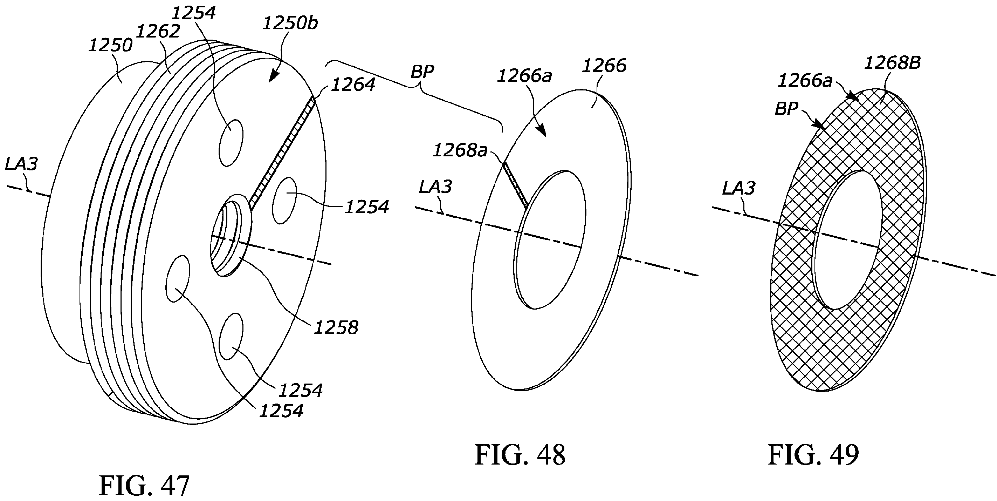

With reference to FIG. 46A, the valve element 1266 may be in its seated position when pressure of fluid in the main compensation chamber 1202a exceeds pressure in the third fluid chamber 1208a. In the seated position, the valve element 1266 at least partially defines a bleed path BP through which expansion fluid flow is permitted from the main compensation chamber 1202a to the third fluid chamber 1208a. The bleed passageway BP may be provided by a channel 1264 (FIG. 47) formed in the second side 1250b of the valve body 1250 and/or a channel 1268a (FIG. 48) formed in the first side 1266a of the valve element 1266. The illustrated channels 1264, 1268a extend in a radial direction between a periphery of the valve body 1250 and/or valve element 1266 and a central portion thereof. In some embodiments, the channels 1264, 1268a may be circumferentially aligned with one another about the longitudinal axis LA3. In other embodiments, channels 1264, 1268a may both be present, but be circumferentially offset from one another about the longitudinal axis LA3. Further, the illustrated channels 1264, 1268a extend in a radially extending linear path. Other non-linear paths are possible. Alternatively, as shown in Fig. 49, which shown an alternative valve element 1266, the first side 1266a of the valve element 1266 or a portion thereof may have a rough surface texture 1268b (i.e., a textured surface) where the bleed path BP is provided through peaks and valleys of the rough surface texture. The surface texture may be applied to the first side 1266a of the valve element 1266 by, for example, sandpaper. Additionally, or alternatively, rough surface texture may be applied to the second side 1250b of the valve body 1250. Due to at least one of the channels 1264, 1268a, or the surface texture 1268b, the bleed path BP is present even with the valve element 1266 seated against (i.e., in contact with) the check valve body 1250.

The effective flow area of the bleed passageway BP is large enough to, with the valve element 1266 in its seated position and upon a pressure gradient (e.g., due to increased temperature and thus volumetric expansion of the damping fluid) between the main compensation chamber 1202a and the third fluid chamber 1208a, to permit expansion fluid flow to pass the check valve 1204 and into the third fluid chamber 1208a. More specifically, the expansion flow may travel along an expansion flow path EFP extending sequentially through the first passageway 1202b, the main compensation chamber 1202a, the bleed path BP, the passageways 1254, and into the third fluid chamber 1208a. In the illustrated embodiment, the expansion flow path EFP passes from the main compensation chamber 1202a to the passageways 1254 along both an inner radial side of the valve element 1266 (e.g., between the valve element 1266 and the longitudinal axis LA3) and an outer radial side of the valve element 1266 (e.g., between the valve element 1266 and an inner sidewall of the block 1202 that defines the main compensation chamber 1202a).

FIG. 46B illustrates the valve element 1266 in its unseated position as represented by reference numeral 1266'. The unseated position may be reached when pressure of the third fluid chamber 1208a exceeds pressure in the main compensation chamber 1202a and is high enough to at least partially compress the spring 1270 and move the valve element 1266 toward the drive head 1274b. Such a pressure gradient may be caused by thermal contraction of the damping fluid in the system such that pressure in the fourth fluid chamber 1208b pushes the reservoir IFP 1214 to the right in FIG. 46B to force damping fluid in the third fluid chamber 1208a through the check valve 1204 and into the main compensation chamber 1202a.

In the unseated position of the valve element 1266, the valve element 1266 may be separated from the second side 1250b of the check valve body 1250, and both the passageways 1254 and a gap G8 between the valve element 1266 and the check valve body 1250 at least partially define a contraction passageway CP through which contraction fluid flow is permitted to exit the third fluid chamber 1208a. In the illustrated embodiment, the valve element 1266 is movable in a direction perpendicular to the longitudinal axis LA3, with the gap G8 being measured perpendicular to the longitudinal axis LA3. The contraction fluid flow passes along a contraction flow path CFP sequentially from the third fluid chamber 1208a, the passageways 1254, the main compensation chamber 1202a, and the first passageway 1202b at least to the shock reservoir 800 and optionally to the main shock body 200. Quantities of, arrangement of, and dimensions of the passageways 1254, in combination with biasing force of the spring 1270 may be selected such that the contraction flow path CFP provides a contraction path effective flow area larger than the bleed path effective flow area.

Quantities of, arrangement of, and dimensions of channels 1264, 1268a, or surface texture 1268b that form the bleed path BP may be dimensioned to achieve desired effective cross-sectional flow through the bleed path BP. An effective flow area of the bleed passageway BP may be small so to inhibit ingress of damping fluid into the third fluid chamber 1208a when the damping fluid is not expanding. In other words, the bleed passageway BP may be so small to choke ingress of damping fluid into the third fluid chamber 1208a during compression of the main shock body 200. For example, an effective flow area of the bleed passageway BP may be smaller than the effective flow area of the first inbound flow path IFP1, the second inbound flow path IFP2, the first outbound flow path OFP1, and the second outbound flow path OFP2 of the shock reservoir 800. The effective flow area of the bleed passageway BP may also be smaller than the effective flow area of the contraction passageway CP. With the damping fluid taking a path of least resistance (e.g., the path provided by the larger effective flow area) upon compression or rebound, the damping fluid may pass through the shock reservoir 800 and not the fluid reservoir 1200. The bleed path BP may also be large enough to permit passage expansion damping fluid therethrough with the valve element 1266 seated against the second side 1250b of the valve body 1250.

As noted above, the second fluid chamber 808b in the shock reservoir 800 and the fourth fluid chamber in the fluid reservoir 1200 may be filled with pressurized air or other gas. In one embodiment, in order to ensure that the internal floating piston 814 will move back to its top-out position (represented by FIG. 9A) during steady state, a pressure level of the second fluid chamber 808b in the shock reservoir 800 exceeds a pressure level of the fourth fluid chamber 1208b. The pressure of the second fluid chamber 808b may exceed the pressure of the fourth fluid chamber 1208b at least immediately after assembly of the shock absorber 1100. For example, in the illustrated embodiment, a pressure level of the second fluid chamber 808b may be approximately 200 pounds per square inch (psi) immediately after filling and with the internal floating piston 814 in the top-out position (in contact with the plunger receiver 832, as generally represented by the plunger 336 and plunger receiver 332 in Fig. 9A), and a pressure level of the fourth fluid chamber 1208b may be approximately 50 psi immediately after filling. In other embodiments, the fill pressure of the second fluid chamber 808b immediately after filling or during use of the shock absorber 1100 may be between 150 psi and 200 psi; and the pressure in the fourth fluid chamber 1208b immediately after filling or during use of the shock absorber 1100 may be between 50 psi and 100 psi. Other operating pressures for the second fluid chamber 808b and the fourth fluid chamber 1208b are also possible.

Functionally, the pressure in the second fluid chamber 808b exceeding the pressure of the fourth fluid chamber 1208b allows the shock reservoir 800 to function as a gas spring of a relatively high stiffness for providing compression and rebound damping force and allows the fluid reservoir 1200 to function as a gas spring of a relatively low stiffness for permitting expansion or contraction of the damping fluid.

For example, with the shock absorber 1100 held stationary and upon an increase in ambient temperature, the damping fluid may expand, and the expanded damping fluid may follow a path of least resistance through the bleed path BP and into the third fluid chamber 1208a rather than being passed along a high resistance path into the first fluid chamber 808a to press against the internal floating piston 814 and counteract the high pressure of the second fluid chamber 808b. Conversely, with the shock absorber 1100 held stationary and upon a decrease in ambient temperature, the damping fluid may contract, and pressure applied by the third fluid chamber 1208a against the reservoir IFP 1214 is decreased below an amount required to counteract the pressure in the fourth fluid chamber 1208b. As a result, the fourth fluid chamber 1208b presses against the reservoir IFP 1214 with higher force than that applied by the third fluid chamber 1208a; and the reservoir IFP 1214 is advanced to the right as viewed in FIG. 46A. As a result, the contraction of damping fluid changes a position of the reservoir IFP 1214, and the positions of the internal floating piston 814 and plunger 836 are unchanged. Since the positions of the internal floating piston 814 and plunger 836 are unchanged at the decreased temperature, compression and rebound damping force provided at the decreased temperature is unchanged.

For these reasons, the check valve 1204 may be described as a pressure sensitive check valve operable to selectively permit expansion and contraction fluid flow between the fluid reservoir 1200 and at least one of the shock reservoir 800 and the main shock body 200. The shock absorber 1100 provides a system whereby compression or rebound of the main shock body 200 is damped by the position sensitive shock reservoir 800 and is relatively less affected by the fluid reservoir 1200; and expansion or contraction of the damping fluid is counteracted by the fluid reservoir 1200 without affecting the position sensitive shock reservoir 800.

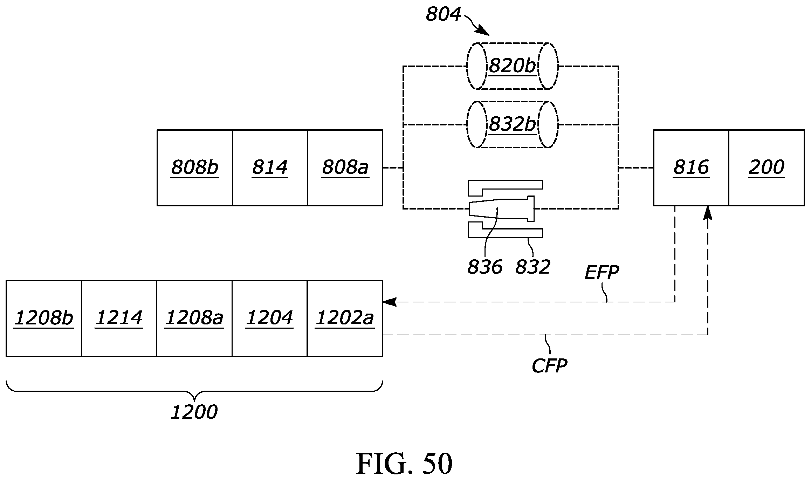

FIG. 50 illustrates a schematic view of the shock absorber 1100 whereby the first fluid chamber 808a and the third fluid chamber 1208a are coupled in parallel to the main shock body 200 via main shock chamber 816. With this arrangement, damping fluid from the main shock body can be passed to and from the fluid reservoir 1200 via the expansion flow path EFP and contraction flow path CFP without being required to passed through the cap assembly 804 (i.e., bypassing the first fluid chamber 808a).

Since the fluid reservoir 1200 may compensate for a surplus or deficiency of damping fluid in the shock reservoir 800, the addition of the fluid reservoir 1200 may provide greater tolerance of inaccuracy (in comparison with the shock absorber 100, e.g., greater than +/- 2 mm) when locating the internal floating piston 814 at the target position during assembly and may compensate for expansion or contraction of the damping fluid during use of the shock absorber 1100. In an effort to stabilize the position of the internal floating piston 814 during assembly, the shock absorber 1100 can be assembled with the internal floating piston 814 in contact with the plunger receiver 832 (i.e., at a top out position of the internal floating piston 814) (e.g., FIG. 9A). Rather than requiring an assembler or machine to perfectly set the internal floating piston 814 within tolerance (e.g., +/- 2mm) to a target position in the reservoir body 808 to ensure desired position sensitive damping characteristics (e.g., as in shock absorber 100), the target position may be reached by advancing the internal floating piston 814 to contact the plunger receiver 832, with this position acting as the target position.

Over time, some damping fluid may pass along bleed path BP into the third fluid chamber 1208a, allowing the reservoir IFP 1214 to compress the fourth fluid chamber 1208b slightly. On a return stroke of the main rod 208, the (e.g., 200 psi) pressure of the second fluid chamber 808b is set by introducing pressurized fluid into the second fluid chamber 808b (e.g., by engaging a fitting and an external pressurized gas supply) allowing the internal floating piston 814 to once again contact the (i.e., top out against) plunger receiver 832. Once the internal floating piston 814 returns to contact the plunger receiver 832 (i.e., its top out position, home position), the reservoir IFP 1214 takes over to compensate for any remaining shaft extension as well as to compensate for any thermal expansion or contraction or any variances in the setting of the internal floating piston 814 during assembly. The internal floating piston 814 is allowed to always start its compression stroke from the position in contact with the plunger receiver 832 (i.e., the top out position of the internal floating piston 814, a consistent, known "home" position).

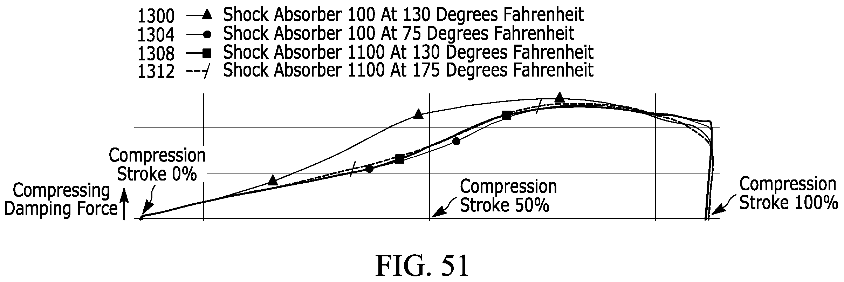

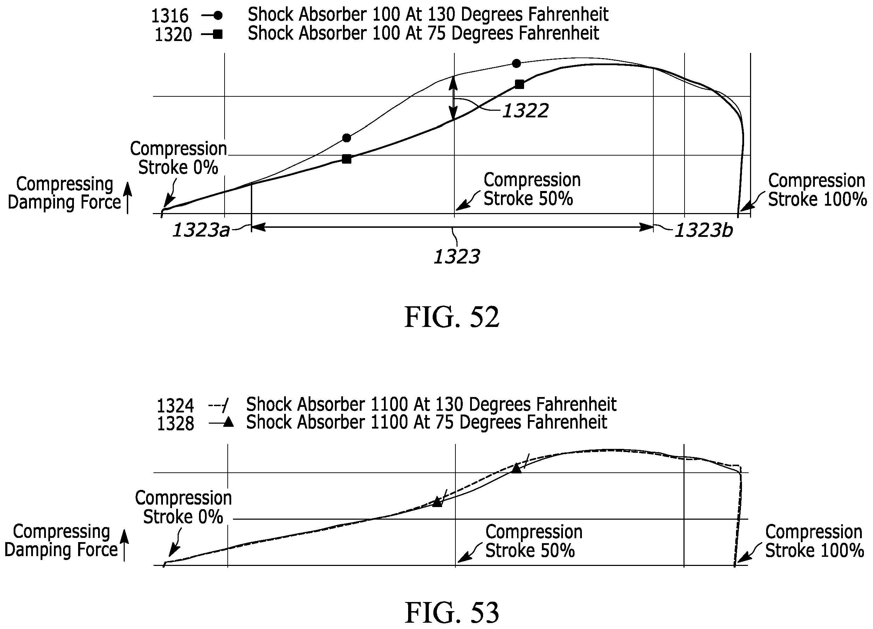

FIGS. 51-53 illustrate exemplary damping characteristics of the shock absorber 100 in comparison to the shock absorber 1100. To simplify the discussion, only the compressive damping force (+y axis) is illustrated along the compression stroke (x axis). FIGS. 52 and 53 are generally duplicates of FIG. 51 and are provided for improved visibility of each curve.

With reference to FIGS. 52 and 53, curves 1300 and 1316 represent a high temperature (e.g., 130 degrees Fahrenheit) situation of the shock absorber 100 provided with the shock reservoir 800 but without the fluid reservoir 1200; and curves 1304 and 1320 represent a relatively typical temperature (e.g., 75 degrees Fahrenheit) situation of the shock absorber 100. The curves 1304, 1320 may be tuned to provide desired damping as described above regarding geometry of the plunger 836 and/or operation of the valve head assembly 900. As shown by the deviation 1322 of compression damping force along range 1323 of the compression stroke, in the high temperature situation, damping force provided by the shock absorber 100 began to exceed desired compression damping force at the lower end of the range 1323a (e.g., at approximately 20% compression stroke), and exceeded desired compression damping force to the upper end of the range 1323b (e.g., at approximately 80% compression stroke). The deviation 1322 at 50% compression stroke contributed to applying approximately 1.6 times more compression damping force at the high temperature than desired (e.g., at typical temperature). Stated differently, compression damping force at 50% compression stroke provided at typical temperature is approximately 62% of compression damping force applied at the high temperature. The curves 1316, 1320 deviate from one another along at least a majority of the compression stroke. The curves 1316, 1320 deviate from one another and provide at least 40% (or at least 50%; or at least 60 %) different damping force from one another in at least one compression stroke position. The curves 1316, 1320 may deviate from one another by at least 30% along at least a quarter (e.g., 25%) of the compression stroke. The deviation 1322 may inhibit a rider from experiencing the profile of desired damping provided by the position sensitive shock absorber 100 at different operating conditions (e.g., temperatures), and throughout a large portion (e.g., the range 1323) of the compression stroke.

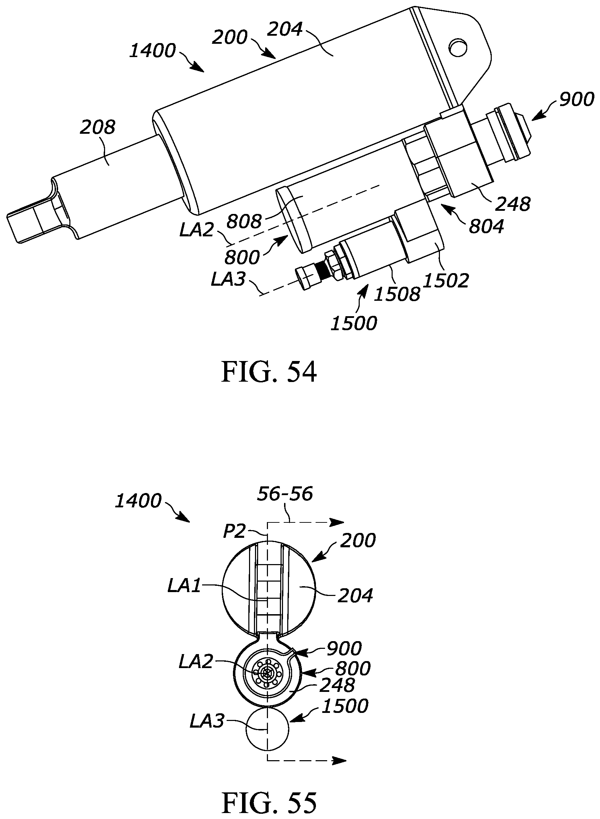

With reference to FIGS. 52 and 54, the curves 1308 and 1324 represent a high temperature situation of the shock absorber 1100 provided with the shock reservoir 800 and the fluid reservoir 1200; and curves 1312 and 1328 represent a relatively typical temperature situation of the shock absorber 1100. The curves 1312, 1328 may be tuned to provide desired damping as described above regarding the geometry of the plunger 836 and/or operation of the valve head assembly 900. The curves 1324, 1328 do not deviate from one another an appreciable amount in comparison to the deviation 1322 along range 1323 provided by the shock absorber 100. For example, the curves 1324, 1328 may provide compressive damping force within 20% (optionally within 10%; optionally within 5%) of one another along the entire compression stroke. By providing the fluid reservoir 1200, a consistent compression damping profile can be provided by the shock absorber 1100 and observed by the rider independent of ambient temperature of the shock absorber 1100.

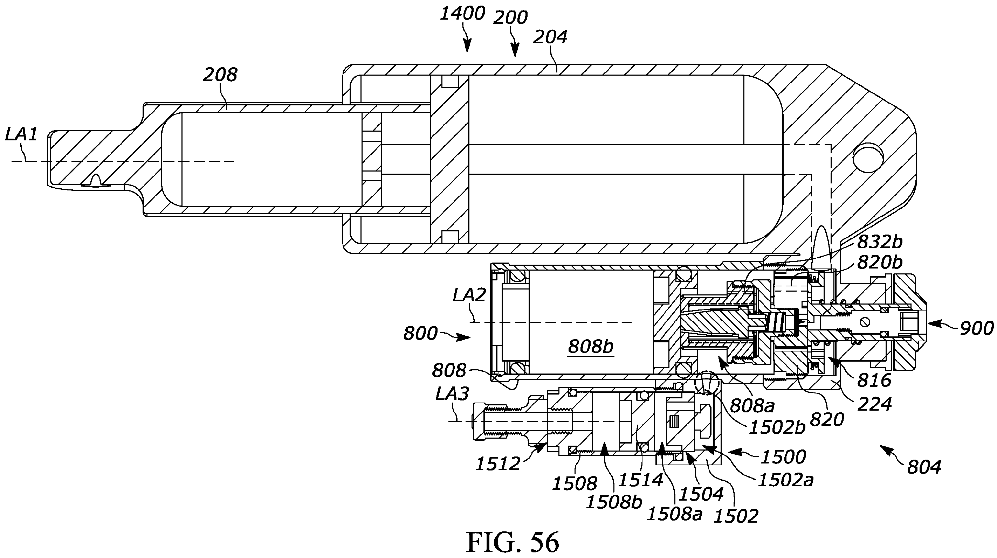

FIGS. 54-56 illustrate an alternate shock absorber 1400 and fluid reservoir 1500. The shock absorber 1400 and fluid reservoir 1500 are generally similar to the shock absorber 1100 and fluid reservoir 1200, with like components being annotated with like reference numerals. The fluid reservoir 1500 is oriented along a longitudinal axis LA3 parallel to the longitudinal axes LA1, LA2 of the main shock body 200 and shock reservoir 800 and in a common plane P2 with each of the longitudinal axes LA1, LA2. In the illustrated embodiment, the shock reservoir 800 is positioned between the fluid reservoir 1500 and the main shock body 200. Rather than a common mounting block 1202, the fluid reservoir 1500 is coupled by a mounting block 1502 to a sidewall of the reservoir body 808 downstream of the cap 820 and in fluid communication with the first fluid chamber 808a. The mounting block 1502 may be integrally formed with or otherwise attached to the reservoir body 808. The mounting block 1502 defines a passageway 1502b and main compensation chamber 1502a upstream of its check valve 1504. The fluid reservoir 1500 is illustrated with a base 1512 including a Schrader valve coupling to apply fluid to the fourth chamber 1508b.

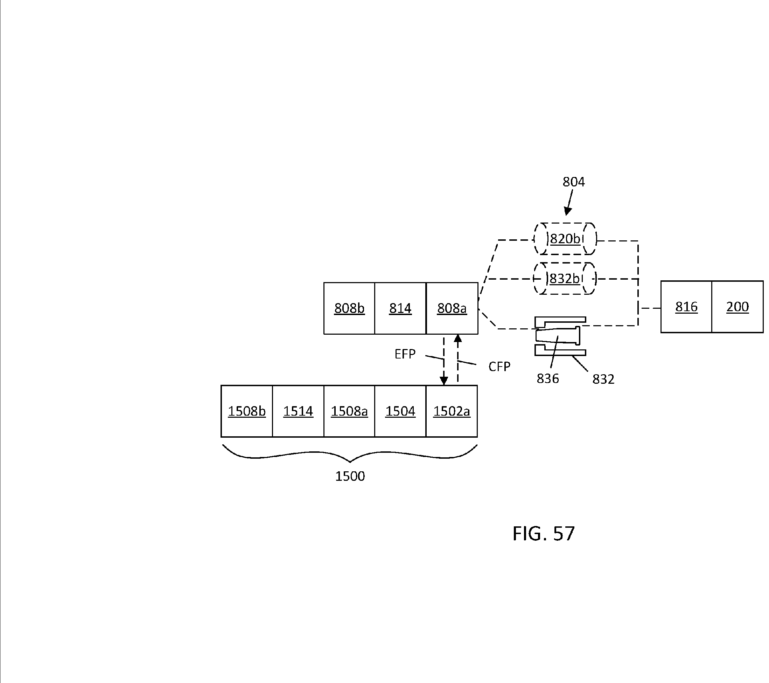

Functionality of the alternate shock absorber 1400 and fluid reservoir 1500 may generally be similar to the shock absorber 1100 and fluid reservoir 1200 with the exception that the fluid reservoir 1500 is fluidly coupled in series with the main shock body 200 via the shock reservoir 800. As illustrated in FIG. 57, the expansion flow path EFP and contraction flow path CFP pass between the main compensation chamber 1502a and the first fluid chamber 808a downstream of the cap assembly 804. As a result, expansion damping fluid must pass through the cap assembly 804 prior to entry into the third fluid chamber 1508a. In other words, the alternate shock absorber 1400 is arranged with the third fluid chamber 1508a coupled to the first fluid chamber 808a via the passageway 1502b in a series arrangement downstream of both the main shock body 200, and the shock reservoir cap 820. This arrangement may still adequately compensate for expansion and contraction of the damping fluid while permitting position sensitive damping as provided by the internal floating piston 814 and plunger 836.

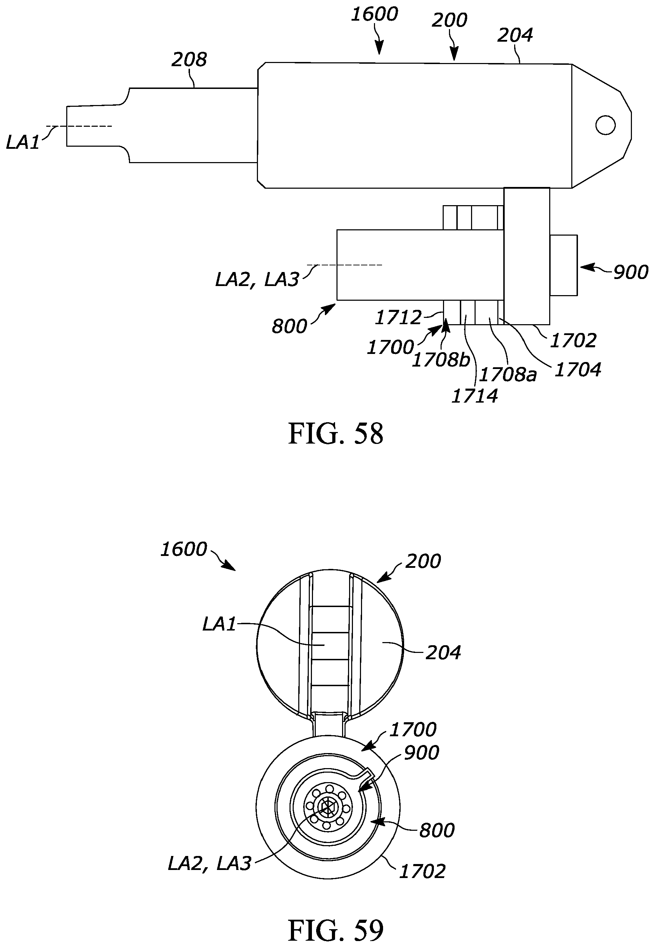

FIGS. 58 and 59 illustrate yet another alternate shock absorber 1600 and fluid reservoir 1700. The shock absorber 1600 and fluid reservoir 1700 are generally similar to the shock absorber 1100 and fluid reservoir 1200. The fluid reservoir 1700 is shaped as an annular ring about longitudinal axis LA3, which is coincident with the longitudinal axis LA2 of the shock reservoir 800. The fluid reservoir 1700 may be physically coupled to the shock reservoir 800 and the main shock body 200 by a block 1702. In other words, the fluid reservoir 1700 is concentric with the shock reservoir 800. Internal to the fluid reservoir 1700, the check valve 1704 and/or reservoir IFP 1714 may be annular or otherwise shaped. The block 1702 may provide passageways either for coupling the fluid reservoir 1700 in a parallel arrangement to the main shock chamber 816 (e.g., as in the fluid reservoir 1200, FIG. 50) or for coupling the fluid reservoir 1700 in a series arrangement to the first fluid chamber 808a (e.g., as in the fluid reservoir 1500, FIG. 57).

Further, the arrangement of the shock absorbers 100, 1100, 1400, 1600 including any of the above described reservoirs 300, 400, 800, 1200, 1500, 1700 and the internal components of the shock absorber 100 may be applied to any shock system. For example, any of the shock absorbers 100, 1100, 1400, 1600 may be modified to function as a front fork shock absorber (carried by the fork 30 for damping force between the front wheel 26 and the main frame 18). Any of the shock absorbers 100, 1100, 1400, 1600 may also be modified to other vehicle suspensions other than bicycles. For example, any of the shock absorbers 100, 1100, 1400, 1600 may be modified for use in motorcycles, automobiles, and the like. Any of the shock absorbers 100, 1100, 1400, 1600 can be used in machines and/or mechanical or electromechanical systems where damping profiles of the shock absorber 100, 1100, 1400, 1600 are desired to be adjusted, for example, by replacing the plunger 336 with another plunger 436, and/or by adjusting the position of the valve head 504.

Some of the examples may be further described by reference to the following numbered clauses:
Clause 1. A shock absorber comprising: a main shock body; a shock reservoir coupled to the main shock body, the shock reservoir including: a reservoir body; an internal floating piston separating the reservoir body into a first fluid chamber and a second fluid chamber; and a cap assembly in fluid communication with both the main shock body and the first fluid chamber, the cap assembly including: a plunger receiver; and a plunger having a tapered outer surface, the plunger being movable relative to the plunger receiver to adjust a damping force of the shock reservoir depending on a position of the plunger relative to the plunger receiver.
Clause 2. The shock absorber of clause 1, wherein the cap assembly includes a bore which defines a first compression flow path between the main shock body and the first fluid chamber, the cap assembly further defining a second compression flow path between the main shock body and the first fluid chamber, the second compression flow path passing between the plunger and the plunger receiver.
Clause 3. The shock absorber of clause 1 or clause 2, wherein an effective flow area between the main shock body and the first fluid chamber is altered upon movement of the plunger relative to the plunger receiver.
Clause 4. The shock absorber of any of the preceding clauses, wherein the reservoir body is oriented along a longitudinal axis and the plunger is movable along the longitudinal axis.
Clause 5. The shock absorber of clause 4, wherein the internal floating piston is movable along the longitudinal axis.
Clause 6. The shock absorber of any of the preceding clauses, further comprising a spring biasing the plunger toward a closed position in which the plunger is seated against a surface of the plunger receiver.
Clause 7. A shock absorber comprising: a main shock body; a shock reservoir coupled to the main shock body; a cap assembly in fluid communication with both the main shock body and the shock reservoir, the cap assembly including a plunger receiver; and a plunger having an outer surface, the plunger being movable relative to the plunger receiver to adjust a damping force depending on a position of the plunger relative to the plunger receiver, wherein the outer surface of the plunger is dimensioned to linearly increase the damping force along a majority of a compression stroke of the main shock body.
Clause 8. The shock absorber of clause 7, wherein the damping force is configured to linearly increase from a top out position of the shock absorber, where minimal compression damping is provided, to a peak damping force, where maximum compression damping is provided.
Clause 9. The shock absorber of clause 8, wherein the peak damping force is configured to be provided at between 66% and 99% of travel between the top out position and a bottom out position of the shock absorber.
Clause 10. A shock absorber comprising: a main shock body; a shock reservoir coupled to the main shock body, the shock reservoir including: a reservoir body; an internal floating piston separating the reservoir body into a first fluid chamber and a second fluid chamber; and a cap assembly in fluid communication with both the main shock body and the first fluid chamber, the cap assembly including: a plunger receiver; and a plunger which is movable relative to the plunger receiver, the plunger being configured to contact the internal floating piston during a first portion of a compression stroke of the main shock body and to physically separate from the internal floating piston during a second portion of the compression stroke.
Clause 11. The shock absorber of clause 10, wherein the plunger receiver includes a plunger receiver shoulder, the plunger includes a plunger shoulder, and the plunger shoulder is configured to engage the plunger receiver shoulder to hold the plunger in a seated position against the plunger receiver when the plunger is physically separated from the internal floating piston.
Clause 12. The shock absorber of clause 11, wherein the engagement of the plunger against the plunger receiver is configured to close a compression flow path between the main shock body and the first fluid chamber.
Clause 13. A shock absorber comprising: a main shock body; a shock reservoir coupled to the main shock body, the shock reservoir including: a cap assembly in fluid communication with both the main shock body and the shock reservoir, the cap assembly including: a plunger receiver; a plunger having a tapered outer surface, the plunger being movable relative to the plunger receiver along a longitudinal axis to adjust a damping force of the shock absorber depending on a position of the plunger relative to the plunger receiver; and a spring configured to bias the plunger along the longitudinal axis.
Clause 14. The shock absorber of clause 13, wherein the plunger is at least partially frustoconical in shape, and the tapered outer surface is at least partially linearly tapered.
Clause 15. The shock absorber of clause 13 or clause 14, wherein when the tapered outer surface of the plunger is spaced from the plunger receiver, a flow path for passage of damping fluid between the shock reservoir and the main shock body is defined between the tapered outer surface and the plunger receiver, the flow path being annular in cross-section.
Clause 16. The shock absorber of any of clauses 13-15, wherein the plunger extends along the longitudinal axis between a tip end of the plunger and a base end of the plunger, the tapered outer surface includes a first tapered outer surface adjacent the tip end and a second tapered outer surface adjacent the base end, the first tapered outer surface and the second tapered outer surface having a first profile and a second profile which differ from one another.
Clause 17. The shock absorber of clause 16, wherein the first profile is a first linear profile angled from between 2 degrees and 6 degrees relative to the longitudinal axis.
Clause 18. The shock absorber of clause 16 or clause 17, wherein the second profile is a second linear profile angled from between at least 0.5 degrees and 2 degrees relative to the longitudinal axis.
Clause 19. The shock absorber of any of clauses 13-18, wherein the tapered outer surface of the plunger comprises a tip end defining a first outer dimension, a first outer surface portion defining a second outer dimension greater than the first outer dimension, and a second outer surface portion defining a third outer dimension lesser than the second outer dimension.
Clause 20. A shock absorber comprising: a main shock body having: a main casing; a main rod movable relative to the main casing; a main shock passageway; a shock reservoir coupled to the main shock body, the shock reservoir having: a reservoir body; an internal floating piston separating the reservoir body into a first fluid chamber and a second fluid chamber; a cap assembly with a cap defining a first cap passageway between the main shock passageway and the first fluid chamber; and a valve head movable between a first position relative to the cap in which a first effective flow area is present between the main shock passageway and the first fluid chamber, and a second position relative to the cap in which a second effective flow area is present between the main shock passageway and the first fluid chamber, the second effective flow area being different than the first effective flow area.
Clause 21. The shock absorber of clause 20, wherein one of the first position and the second position represents a closed position wherein the valve head is seated against the cap and in which damping fluid from the main casing is inhibited from passing between the main shock passageway, the first cap passageway, and the first fluid chamber through the first cap passageway, and the second position represents a partially closed position in which the valve head is closer to the cap than the fully open position, the partially closed position metering fluid passage between the main shock passageway, the first cap passageway, and the first fluid chamber through the first cap passageway.
Clause 22. The shock absorber of clause 20 or clause 21, wherein one of the first position and the second position represents a fully open position wherein the valve head is retracted from the cap and in which damping fluid from the main casing can pass between the main shock passageway, the first cap passageway, and the first fluid chamber through the first cap passageway.
Clause 23. The shock absorber of clause 22, wherein one of the first position and the second position represents a partially open position in which the valve head is closer to the cap than when in the fully open position, wherein when the valve head is in the partially open position, the valve head is configured to meter fluid passage between the main shock passageway, the first cap passageway, and the first fluid chamber through the first cap passageway.
Clause 24. The shock absorber of any of clauses 20-23, wherein the cap assembly includes a screw coupled to the valve head, the screw being actuatable to move the valve head between the first position and the second position.
Clause 25. The shock absorber of clause 20, further comprising a shuttle in which a base portion of the valve head is received.
Clause 26. The shock absorber of clause 25, wherein the valve head is movable between the first position and the second position by a switch.
Clause 27. The shock absorber of clause 26, wherein the switch includes a cam surface and the switch is rotatable to advance the valve head by linear translation between the first position and the second position.
Clause 28. The shock absorber of clause 26 or clause 27, wherein the shuttle is capable of being retreated by fluid pressure in the cap assembly from the second position toward the first position.
Clause 29. The shock absorber of any of clauses 20-28, further comprising a spring providing biasing force to hold the valve head against a seating surface of the cap.
Clause 30. The shock absorber of clause 29, wherein upon an outboard pressure differential where pressure in the first fluid chamber exceeds pressure in the main shock passageway, the biasing force of the spring is overcome, and the valve head is retreated from the seating surface of the cap.
Clause 31. The shock absorber of any of clauses 20-30, wherein the reservoir body is oriented along a longitudinal axis and the valve head is translatable along the longitudinal axis.
Clause 32. A shock absorber comprising: a main shock body; and a shock reservoir coupled to the main shock body, the shock reservoir including: a reservoir body; an internal floating piston separating the reservoir body into a first fluid chamber and a second fluid chamber; and a cap assembly in fluid communication with both the main shock body and the first fluid chamber, the cap assembly including: a cap defining a plurality of fluid passageways therethrough; a coarse adjuster movable between at least two positions whereby different amounts of effective flow area are present between the first fluid chamber and the main shock body; and a fine adjuster movable independent of the coarse adjuster between at least two positions whereby different amounts of effective flow area are present between the first fluid chamber and the main shock body.
Clause 33. The shock absorber of clause 32, wherein the coarse adjuster is rotatable between the at least two positions.
Clause 34. The shock absorber of clause 32, wherein the fine adjuster is pivotable by threads and axially adjustable between the at least two positions.
Clause 35. The shock absorber of clause 32, wherein at least a subset of the plurality of fluid passageways is unaffected by the positions of the coarse adjuster and the fine adjuster.
Clause 36. The shock absorber of clause 32, wherein the cap includes a central passageway, and the coarse adjuster includes a central passageway configured to be at least partially aligned with the central passageway of the cap in at least one of the positions.
Clause 37. The shock absorber of clause 32, wherein the coarse adjuster includes a stem with internal threads and an aperture extending through the stem, and the fine adjuster includes external threads configured to, upon rotation of the fine adjuster, cause the fine adjuster to translate relative to the coarse adjuster to adjust a size of a gap between the fine adjuster and the aperture.
Clause 38. A shock absorber comprising: a main shock body; a shock reservoir coupled to the main shock body, the shock reservoir including: a first reservoir body; a first internal floating piston separating the first reservoir body into a first fluid chamber and a second fluid chamber, the first fluid chamber in fluid communication with the main shock body; and a fluid reservoir including: a second reservoir body; a second internal floating piston separating the second reservoir body into a third fluid chamber and a fourth fluid chamber; wherein the third fluid chamber and at least one of the main shock body and the first fluid chamber are configured to pass fluid between one another.
Clause 39. The shock absorber of clause 38, further comprising a check valve between (a) the at least one of the main body and the first fluid chamber and (b) the third fluid chamber.
Clause 40. The shock absorber of clause 39, wherein expansion fluid flow is configured to pass through the check valve into the third fluid chamber and contraction fluid flow is configured to exit from the third fluid chamber through the check valve.
Clause 41. The shock absorber of clause 39, wherein the check valve is a pressure sensitive check valve operable to permit expansion fluid flow to enter the third fluid chamber via a bleed path providing a bleed path effective flow area.
Clause 42. The shock absorber of clause 41, wherein the check valve is operable to permit contraction fluid flow to exit the third fluid chamber via a contraction passageway providing a contraction path effective flow area larger than the bleed path effective flow area.
Clause 43. The shock absorber of clause 39, wherein the check valve includes a check valve body with a side and defining a check valve passageway; and a valve element movable relative to the side.
Clause 44. The shock absorber of clause 43, wherein the valve element is movable between a seated position in contact with the side whereby the valve element at least partially defines a bleed passageway through which expansion fluid flow is permitted to enter the third fluid chamber; and an unseated position separated from the side whereby the check valve passageway and a gap between the valve element and the check valve body at least partially define a contraction passageway through which contraction fluid flow is permitted to exit the third fluid chamber.
Clause 45. The shock absorber of clause 44, wherein the bleed passageway is at least partially formed by a channel in at least one of the valve element or the check valve body.
Clause 46. The shock absorber of clause 44, wherein the bleed passageway is at least partially formed by a textured surface of the valve element that contacts the check valve body in the seated position.
Clause 47. The shock absorber of clause 44, wherein the valve element is biased to the seated position by a spring.
Clause 48. The shock absorber of clause 38, wherein the main shock body, the shock reservoir, and the fluid reservoir each extend along corresponding longitudinal axes, the longitudinal axes being substantially parallel to one another.
Clause 49. The shock absorber of clause 47, wherein the fluid reservoir is annular is cross-sectional shape perpendicular to its longitudinal axis, and the fluid reservoir is concentric with the shock reservoir.
Clause 50. The shock absorber of clause 38, wherein the third chamber is fluidly coupled to the first fluid chamber via a passageway in a series arrangement downstream of the main body and a shock reservoir cap.
Clause 51. The shock absorber of clause 38, wherein the first fluid chamber and the third fluid chamber are coupled in a parallel arrangement with the main shock body via a main shock chamber.
Clause 52. The shock absorber of clause 38, wherein the shock reservoir is a position sensitive shock reservoir including a plunger receiver and a plunger with a tapered outer surface, the plunger being movable relative to the plunger receiver to adjust a damping force of the shock reservoir depending on a position of the plunger relative to the plunger receiver.
Clause 53. A shock absorber comprising: a main shock body; and a shock reservoir coupled to the main shock body, the shock reservoir including: a reservoir body defining a reservoir longitudinal axis; an internal floating piston separating the reservoir body into a first fluid chamber and a second fluid chamber, the internal floating piston being movable along the reservoir longitudinal axis; and a cap assembly in fluid communication with both the main shock body and the first fluid chamber, the cap assembly including: a plunger receiver with a shoulder extending inwardly toward the reservoir longitudinal axis, the shoulder having a first region defining a first profile; and a plunger having a tapered outer surface having a second region defining a second profile, wherein the first region with its first profile is configured to contact the second region with its second profile, and wherein the first profile is not complimentary to the second profile, the plunger being movable relative to the plunger receiver to adjust a damping force of the shock reservoir depending on a position of the plunger relative to the plunger receiver.
Clause 54. The shock absorber of clause 53, wherein an effective flow area between the plunger and the plunger receiver is altered from a first nonzero effective flow area to a second nonzero effective flow area upon movement of the plunger relative to the plunger receiver.
Clause 55. The shock absorber of clause 53 or clause 54, wherein the cap assembly includes a bore which defines a first compression flow path between the main shock body and the first fluid chamber, the cap assembly further defining a second compression flow path between the main shock body and the first fluid chamber, the second compression flow path passing between the plunger and the plunger receiver.
Clause 56. The shock absorber of any of clauses 53-55, wherein an effective flow area between the plunger and the plunger receiver is altered to a zero effective flow area upon the plunger being seated against the plunger receiver.
Clause 57. The shock absorber of any of clauses 53-56, wherein the reservoir body is oriented along a longitudinal axis and the plunger is movable along the longitudinal axis.
Clause 58. The shock absorber of clause 57, wherein the internal floating piston is movable along the longitudinal axis.
Clause 59. The shock absorber of any of clauses 53-58, further comprising a spring biasing the plunger toward a closed position in which the plunger is seated against a surface of the plunger receiver.
Clause 60. The shock absorber of any of clauses 53-59, wherein the plunger has a first end adjacent the internal floating piston and an opposite second end, the tapered outer surface of the plunger being adjacent the first end.
Clause 61. The shock absorber of any of clauses 53-60, wherein the shoulder extends radially inwardly, such that in at least one position of the plunger, a radial gap is present between the shoulder and the plunger tapered outer surface.
Clause 62. The shock absorber of any of clauses 53-61, wherein the shoulder includes a surface that extends parallel to the reservoir longitudinal axis, wherein the surface defines at least a portion of the first profile.
Clause 63. The shock absorber of any of clauses 53-62, wherein the shoulder is a first shoulder, wherein the plunger further includes a second shoulder configured to seat against the first shoulder of the plunger receiver.
Clause 64. The shock absorber of any of claims 53-63, wherein the tapered outer surface of the plunger is dimensioned to linearly increase the damping force along a majority of a compression stroke of the main shock body.
Clause 65. The shock absorber of clause 64, wherein the damping force is configured to linearly increase from a top out position of the shock absorber, where minimal compression damping is provided, to a peak damping force, where maximum compression damping is provided.
Clause 66. The shock absorber of clause 65, wherein the peak damping force is configured to be provided at between 50% and 99% of travel between the top out position and a bottom out position of the shock absorber.
Clause 67. The shock absorber of any of claims 53-66, wherein the plunger is configured to contact the internal floating piston during a first portion of a compression stroke of the main shock body and to physically separate from the internal floating piston during a second portion of the compression stroke.
Clause 68. A shock absorber comprising: a main shock body; a shock reservoir coupled to the main shock body; and a cap assembly in fluid communication with both the main shock body and the shock reservoir, the cap assembly including: a plunger receiver; and a plunger having an outer surface, the plunger being movable relative to the plunger receiver to adjust a damping force depending on a position of the plunger relative to the plunger receiver; wherein the outer surface of the plunger is dimensioned to linearly increase the damping force along a majority of a compression stroke of the main shock body.
Clause 69. The shock absorber of clause 68, wherein the damping force is configured to linearly increase from a top out position of the shock absorber, where minimal compression damping is provided, to a peak damping force, where maximum compression damping is provided.
Clause 70. The shock absorber of clause 69, wherein the peak damping force is configured to be provided at between 50% and 99% of travel between the top out position and a bottom out position of the shock absorber.
Clause 71. A shock absorber comprising: a main shock body; and a shock reservoir coupled to the main shock body, the shock reservoir including: a reservoir body; an internal floating piston separating the reservoir body into a first fluid chamber and a second fluid chamber; and a cap assembly in fluid communication with both the main shock body and the first fluid chamber, the cap assembly including: a plunger receiver; and a plunger which is movable relative to the plunger receiver, the plunger being configured to contact the internal floating piston during a first portion of a compression stroke of the main shock body and to physically separate from the internal floating piston during a second portion of the compression stroke.
Clause 72. The shock absorber of clause 71, wherein the plunger receiver includes a plunger receiver shoulder, the plunger includes a plunger shoulder, and the plunger shoulder is configured to engage the plunger receiver shoulder to hold the plunger in a seated position against the plunger receiver when the plunger is physically separated from the internal floating piston.
Clause 73. The shock absorber of clause 71 or clause 72, wherein the engagement of the plunger against the plunger receiver is configured to close a compression flow path between the main shock body and the first fluid chamber.
Clause 74. The shock absorber of any of clauses 71-73, wherein the first portion is subdivided into a preload portion in which the main shock body compresses to compensate for pre-load and an active load portion in which the main shock body compresses to compensate for active impact forces.
Clause 75. A shock absorber comprising: a main shock body; and a shock reservoir coupled to the main shock body, the shock reservoir including: an internal floating piston; and a cap assembly in fluid communication with both the main shock body and the shock reservoir, the cap assembly including: a plunger receiver; a plunger having front end adjacent the internal floating piston, an opposite rear end, and a tapered outer surface, the plunger being movable relative to the plunger receiver along a longitudinal axis to adjust a damping force of the shock absorber depending on a position of the plunger relative to the plunger receiver; and a spring configured to bias the plunger along the longitudinal axis, the spring configured to bias the rear end of the plunger toward the internal floating piston.
Clause 76. The shock absorber of clause 75, wherein the plunger is at least partially frustoconical in shape, and the tapered outer surface is at least partially linearly tapered.
Clause 77. The shock absorber of clause 75 or clause 76, wherein when the tapered outer surface of the plunger is spaced from the plunger receiver, a flow path for passage of damping fluid between the shock reservoir and the main shock body is defined between the tapered outer surface and the plunger receiver, the flow path being annular in cross-section.
Clause 78. The shock absorber of any of clauses 75-77, wherein the plunger extends along the longitudinal axis between a tip end of the plunger and a base end of the plunger, and wherein the tapered outer surface includes a first tapered outer surface adjacent the tip end and a second tapered outer surface adjacent the base end, the first tapered outer surface and the second tapered outer surface having a first profile and a second profile which differ from one another.
Clause 79. The shock absorber of clause 78, wherein the first profile is a first linear profile angled from between 2 degrees and 6 degrees relative to the longitudinal axis.
Clause 80. The shock absorber of clause 78 or clause 79, wherein the second profile is a second linear profile angled from between at least 0.5 degrees and 2 degrees relative to the longitudinal axis.
Clause 81. The shock absorber of any of clauses 75-80, wherein the tapered outer surface of the plunger includes: a tip end defining a first outer dimension, a first outer surface portion defining a second outer dimension greater than the first outer dimension, and a second outer surface portion defining a third outer dimension lesser than the second outer dimension.
Clause 82. A shock absorber comprising: a main shock body having: a main casing; a main rod movable relative to the main casing; a main shock passageway; a shock reservoir coupled to the main shock body, the shock reservoir having: a reservoir body; an internal floating piston separating the reservoir body into a first fluid chamber and a second fluid chamber; a cap assembly in fluid communication with both the main shock body and the first fluid chamber, the cap assembly including: a cap defining a first cap passageway between the main shock passageway and the first fluid chamber; a plunger receiver; and a plunger having a tapered outer surface, the plunger being movable relative to the plunger receiver to adjust a damping force of the shock reservoir depending on a position of the plunger relative to the plunger receiver; and a valve head movable by linear translation relative to the first cap passageway between a first position relative to the cap in which a first effective flow area is present between the main shock passageway and the first fluid chamber, and a second position relative to the cap in which a second effective flow area is present between the main shock passageway and the first fluid chamber, the second effective flow area being different than the first effective flow area.
Clause 83. The shock absorber of clause 82, wherein one of the first position and the second position represents a closed position wherein the valve head seated against the cap and in which damping fluid from the main casing is inhibited from passing between the main shock passageway, the first cap passageway, and the first fluid chamber through the first cap passageway.
Clause 84. The shock absorber of clause 82 or clause 83, wherein one of the first position and the second position represents a fully open position wherein the valve head is retracted from the cap and in which damping fluid from the main casing can pass between the main shock passageway, the first cap passageway, and the first fluid chamber through the first cap passageway.
Clause 85. The shock absorber of clause 84, wherein one of the first position and the second position represents a partially open position in which the valve head is closer to the cap than when in the fully open position, and wherein when the valve head is in the partially open position, the valve head is configured to meter fluid passage between the main shock passageway, the first cap passageway, and the first fluid chamber through the first cap passageway.
Clause 86. The shock absorber of any of clauses 82-85, wherein the cap assembly includes a screw coupled to the valve head, the screw being actuatable to move the valve head between the first position and the second position.
Clause 87. The shock absorber of clause 86, wherein the screw is rotatable to cause linear translation of the valve head.
Clause 88. The shock absorber of any of clauses 82-87, further comprising a shuttle in which a base portion of the valve head is received.
Clause 89. The shock absorber of clause 88, wherein the valve head is movable between the first position and the second position by a switch.
Clause 90. The shock absorber of clause 89, wherein the switch includes a cam surface and the switch is rotatable to advance the valve head by linear translation between the first position and the second position.
Clause 91. The shock absorber of clause 89 or clause 90, wherein the shuttle is capable of being retreated by fluid pressure in the cap assembly from the second position toward the first position.
Clause 92. The shock absorber of any of clauses 82-91, further comprising a spring providing biasing force to hold the valve head against a seating surface of the cap.
Clause 93. The shock absorber of clause 92, wherein upon an outboard pressure differential where pressure in the first fluid chamber exceeds pressure in the main shock passageway, the biasing force of the spring is overcome, and the valve head is retreated from the seating surface of the cap.
Clause 94. The shock absorber of any of clauses 82-93, wherein the reservoir body is oriented along a longitudinal axis and the valve head is translatable along the longitudinal axis.
Clause 95. A shock absorber comprising: a main shock body; and a shock reservoir coupled to the main shock body, the shock reservoir including: a reservoir body; an internal floating piston separating the reservoir body into a first fluid chamber and a second fluid chamber; and a cap assembly in fluid communication with both the main shock body and the first fluid chamber, the cap assembly including: a cap defining a plurality of fluid passageways therethrough; a coarse adjuster movable between at least two positions whereby different amounts of effective flow area are present between the first fluid chamber and the main shock body; and a fine adjuster movable independent of the coarse adjuster between at least two positions whereby different amounts of effective flow area are present between the first fluid chamber and the main shock body.
Clause 96. The shock absorber of clause 95, wherein the coarse adjuster is rotatable between the at least two positions.
Clause 97. The shock absorber of clause 95 or clause 96, wherein the fine adjuster is pivotable by threads and axially adjustable between the at least two positions.
Clause 98. The shock absorber of any of clauses 95-97, wherein at least a subset of the plurality of fluid passageways is unaffected by the positions of the coarse adjuster and the fine adjuster.
Clause 99. The shock absorber of clause 98, wherein the cap includes a central passageway, and the coarse adjuster includes a central passageway configured to by at least partially aligned with the central passageway of the cap in at least one of the positions.
Clause 100. The shock absorber of clause 98 or clause 99, wherein the coarse adjuster includes a stem with internal threads and an aperture extending through the stem, and the fine adjuster includes external threads configured to, upon rotation of the fine adjuster, cause the fine adjuster to translate relative to the coarse adjuster to adjust a size of a gap between the fine adjuster and the aperture.
Clause 101. A shock absorber comprising: a main shock body; a shock reservoir coupled to the main shock body, the shock reservoir including: a first reservoir body; and a first internal floating piston separating the first reservoir body into a first fluid chamber and a second fluid chamber, the first fluid chamber in fluid communication with the main shock body; and a fluid reservoir including: a second reservoir body; and a second internal floating piston separating the second reservoir body into a third fluid chamber and a fourth fluid chamber; wherein the third fluid chamber and at least one of the main shock body and the first fluid chamber are configured to pass fluid between one another.
Clause 102. The shock absorber of clause 101, further comprising a check valve between (a) the at least one of the main shock body and the first fluid chamber and (b) the third fluid chamber.
Clause 103. The shock absorber of clause 102, wherein expansion fluid flow is configured to pass through the check valve into the third fluid chamber and contraction fluid flow is configured to exit from the third fluid chamber through the check valve.
Clause 104. The shock absorber of clause 102 or clause 103, wherein the check valve is a pressure sensitive check valve operable to permit expansion fluid flow to enter the third fluid chamber via a bleed path providing a bleed path effective flow area.
Clause 105. The shock absorber of clause 104, wherein the check valve is operable to permit contraction fluid flow to exit the third fluid chamber via a contraction passageway providing a contraction path effective flow area larger than the bleed path effective flow area.
Clause 106. The shock absorber of any of clauses 101-105, wherein the check valve includes a check valve body with a side and defining a check valve passageway; and a valve element movable relative to the side.
Clause 107. The shock absorber of clause 106, wherein the valve element is movable between a seated position in contact with the side whereby the valve element at least partially defines a bleed passageway through which expansion fluid flow is permitted to enter the third fluid chamber; and an unseated position separated from the side whereby the check valve passageway and a gap between the valve element and the check valve body at least partially define a contraction passageway through which contraction fluid flow is permitted to exit the third fluid chamber.
Clause 108. The shock absorber of clause 107, wherein the bleed passageway is at least partially formed by a channel in at least one of the valve element or the check valve body.
Clause 109. The shock absorber of clause 107 or clause 108, wherein the bleed passageway is at least partially formed by a textured surface of the valve element that contacts the check valve body in the seated position.
Clause 110. The shock absorber of any of clauses 107-109, wherein the valve element is biased to the seated position by a spring.
Clause 111. The shock absorber of any of clauses 101-109, wherein the main shock body, the shock reservoir, and the fluid reservoir each extend along corresponding longitudinal axes, the longitudinal axes being substantially parallel to one another.
Clause 112. The shock absorber of clause 111, wherein the fluid reservoir is annular is cross-sectional shape perpendicular to its longitudinal axis, and the fluid reservoir is concentric with the shock reservoir.
Clause 113. The shock absorber of any of clauses 101-112, wherein the third fluid chamber is fluidly coupled to the first fluid chamber via a passageway in a series arrangement downstream of the main shock body and a shock reservoir cap.
Clause 114. The shock absorber of any of clauses 101-113, wherein the first fluid chamber and the third fluid chamber are coupled in a parallel arrangement with the main shock body via a main shock chamber.
Clause 115. The shock absorber of any of clauses 101-114, wherein the shock reservoir is a position sensitive shock reservoir including a plunger receiver and a plunger with a tapered outer surface, the plunger being movable relative to the plunger receiver to adjust a damping force of the shock reservoir depending on a position of the plunger relative to the plunger receiver.

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein.

Certain features that are described in this specification in the context of separate implementations also can be implemented in combination in a single implementation. Conversely, various features that are described in the context of a single implementation also can be implemented in multiple implementations separately or in any suitable sub combination. Moreover, although features may be described above as acting in certain combinations and even initially claimed as such, one or more features from a claimed combination can in some cases be excised from the combination, and the claimed combination may be directed to a sub combination or variation of a sub combination.

While the above detailed description has shown, described, and pointed out novel features as applied to various embodiments, it will be understood that various omissions, substitutions, and changes in the form and details of the devices or algorithms illustrated can be made without departing from the spirit of the disclosure. As will be recognized, certain embodiments described herein can be embodied within a form that does not provide all of the features and benefits set forth herein, as some features can be used or practiced separately from others. All changes which come within the meaning and range of equivalency of the claims are to be embraced within their scope.

## Claims

1. A shock absorber comprising:
a main shock body; and
a shock reservoir coupled to the main shock body, the shock reservoir including:
a reservoir body defining a reservoir longitudinal axis;
an internal floating piston separating the reservoir body into a first fluid chamber and a second fluid chamber, the internal floating piston being movable along the reservoir longitudinal axis; and
a cap assembly in fluid communication with both the main shock body and the first fluid chamber, the cap assembly including:
a plunger receiver with a shoulder extending inwardly toward the reservoir longitudinal axis, the shoulder having a first region defining a first profile; and
a plunger having a tapered outer surface having a second region defining a second profile, wherein the first region with its first profile is configured to contact the second region with its second profile, and wherein the first profile is not complimentary to the second profile, the plunger being movable relative to the plunger receiver to adjust a damping force of the shock reservoir depending on a position of the plunger relative to the plunger receiver.

2. The shock absorber of claim 1, wherein an effective flow area between the plunger and the plunger receiver is altered from a first nonzero effective flow area to a second nonzero effective flow area upon movement of the plunger relative to the plunger receiver.

3. The shock absorber of claim 1 or claim 2, wherein the cap assembly includes a bore which defines a first compression flow path between the main shock body and the first fluid chamber, the cap assembly further defining a second compression flow path between the main shock body and the first fluid chamber, the second compression flow path passing between the plunger and the plunger receiver.

4. The shock absorber of any of claims 1-3, wherein an effective flow area between the plunger and the plunger receiver is altered to a zero effective flow area upon the plunger being seated against the plunger receiver.

5. The shock absorber of any of claims 1-4, wherein the reservoir body is oriented along a longitudinal axis and the plunger is movable along the longitudinal axis.

6. The shock absorber of claim 5, wherein the internal floating piston is movable along the longitudinal axis.

7. The shock absorber of any of claims 1-6, further comprising a spring biasing the plunger toward a closed position in which the plunger is seated against a surface of the plunger receiver.

8. The shock absorber of any of claims 1-7, wherein the plunger has a first end adjacent the internal floating piston and an opposite second end, the tapered outer surface of the plunger being adjacent the first end.

9. The shock absorber of any of claims 1-8, wherein the shoulder extends radially inwardly, such that in at least one position of the plunger, a radial gap is present between the shoulder and the plunger tapered outer surface.

10. The shock absorber of any of claims 1-9, wherein the shoulder includes a surface that extends parallel to the reservoir longitudinal axis, wherein the surface defines at least a portion of the first profile.

11. The shock absorber of any of claims 1-10, wherein the shoulder is a first shoulder, wherein the plunger further includes a second shoulder configured to seat against the first shoulder of the plunger receiver.

12. The shock absorber of any of claims 1-11, wherein the tapered outer surface of the plunger is dimensioned to linearly increase the damping force along a majority of a compression stroke of the main shock body.

13. The shock absorber of claim 12, wherein the damping force is configured to linearly increase from a top out position of the shock absorber, where minimal compression damping is provided, to a peak damping force, where maximum compression damping is provided.

14. The shock absorber of claim 13, wherein the peak damping force is configured to be provided at between 50% and 99% of travel between the top out position and a bottom out position of the shock absorber.

15. The shock absorber of any of claims 1-14, wherein the plunger is configured to contact the internal floating piston during a first portion of a compression stroke of the main shock body and to physically separate from the internal floating piston during a second portion of the compression stroke.
